# EUROPEAN PATENT APPLICATION

(11) **EP 4 456 216 A1**
(43) Date of publication of application: **30.10.2024**
(21) Application number: 22911432.7
(22) Date of filing: 23.12.2022
(51) Int. Cl.: H01M 8/1018, C08F 8/36, C08F 8/40, C08F 12/14, C08F 293/00, C08L 25/18, C08L 53/00, C08L 101/00, C08L 101/02, H01B 1/06, H01B 13/00, H01M 8/10, H01M 8/1023, H01M 8/1044, H01M 8/1048, H01M 8/1067, H01M 8/1069, H01M 8/1072

(54) **POLYELECTROLYTE MEMBRANE HAVING, AS BASE THEREFOR, POLYMER HAVING HIGH DENSITY OF ACIDIC FUNCTIONAL GROUPS**

(30) Priority: 24.12.2021 JP 2021211001; 30.03.2022 JP 2022055156; 25.07.2022 JP 2022118212; 25.07.2022 JP 2022118214
(71) Applicant: National University Corporation Tokai National Higher Education and Research System, Nagoya-shi, Aichi 464-8601 (JP)
(72) Inventor: NORO, Atsushi, Nagoya-shi, Aichi 464-8601 (JP); KAJITA, Takato, Nagoya-shi, Aichi 464-8601 (JP); SATO, Katsumi, Nagoya-shi, Aichi 464-8601 (JP); TANAKA, Haruka, Nagoya-shi, Aichi 464-8601 (JP); NISHIMOTO, Mio, Nagoya-shi, Aichi 464-8601 (JP); NAKAYAMA, Takenori, Nagoya-shi, Aichi 464-8601 (JP)
(74) Representative: Hoffmann Eitle
(86) International application number: PCT/JP2022/047787
(87) International publication number: WO 2023/120731

(57) **Abstract**

The present invention newly provides a polyelectrolyte membrane, a composite polymer membrane that produces a conductivity of 1.0 × 10⁻³ S/cm or higher, an ionomer for polymer electrolyte fuel cells, and a monomer having a phosphonic acid group and/or a phosphonic acid ester via a spacer structure. A polyelectrolyte membrane, a composite polymer membrane that produces a conductivity of 1.0 × 10⁻³ S/cm or higher, an ionomer for polymer electrolyte fuel cells, and a monomer having a phosphonic acid group and/or a phosphonic acid ester via a spacer structure.

## Description

### Technical Field

The present invention relates to a polyelectrolyte membrane based on a polymer with a high density of acidic functional groups.

### Background Art

Fuel cells, which have shown great promise as a clean power generation system, use the reverse reaction of water electrolysis to electrochemically react hydrogen with oxygen and thereby generate electrical energy. In particular, polymer electrolyte fuel cells with a polyelectrolyte membrane have been used in fuel-cell powered automobiles.

Polymer electrolyte fuel cells use a membrane electrode assembly (MEA) as their basic component, which is obtained by sandwiching a proton-conducting membrane (called a "polyelectrolyte membrane") between gas diffusion electrodes each composed of a gas diffusion layer and a catalyst layer containing an ionomer. If protons do not properly move in an electrolyte membrane, a fuel cell reaction will not occur, and excellent power generation characteristics (high output) cannot be achieved. Thus, it is important to use a polyelectrolyte membrane that exhibits high proton conductivity (e.g., 0.1 S/cm or higher), and a polyelectrolyte membrane is considered to be one of the most important parts in fuel cells.

The materials currently used for electrolyte membranes in commercial fuel-cell powered automobiles and other products are perfluorosulfonic acid polymers, such as Nafion (R) developed by DuPont. Moistening the membrane at 70 to 90°C allows protons to move through water molecules, resulting in a high proton transport capacity (proton conductivity>0.1 S/cm).

Moistening a random copolymer of polystyrene and polystyrene sulfonic acid (chemically crosslinked product), which is obtained by sulfonating a chemically crosslinked polystyrene, can also produce a proton conductivity of about 0.1 S/cm if the polystyrene sulfonic acid accounts for a high percentage.

While polyelectrolyte membranes that exhibit a high proton conductivity of 0.1 S/cm or greater under such moistening have been continuously developed, the development of proton-conducting polyelectrolyte membranes that exhibit a high proton conductivity of about 0.1 S/cm even without sufficient humidification and without sufficiently moistening membranes has been continued.

PTL 1 discloses "a non-humidified proton-conductive membrane that is a proton-conductive membrane having proton conductivity under a non-humidified condition, the proton-conductive membrane comprising: a polymer including a glassy or crystalline first site having a glass transition temperature or melting temperature higher than a service temperature of the proton-conductive membrane, and a second site including a functional group capable of noncovalently binding to another molecule; and a proton-conductive substance including a proton-releasing/binding site capable of released protons and a proton coordination site capable of coordinating to the protons, the proton-releasing/binding site including a functional group capable of noncovalently binding to the second site of the polymer, the proton-releasing/binding site and the proton coordination site being included in different molecules that interact with each other or being included in the same molecule, a proton-conductive mixed phase having a glass transition temperature lower than the service temperature of the proton-conductive membrane, the proton-conductive mixed phase including the second site to which the proton-releasing/binding site of the proton-conductive substance is bound and the proton-conductive substance, the amount of the proton-releasing/binding site being excessively large compared with the amount of the second site of the polymer" (electrolyte membrane). This non-humidified proton-conductive membrane shows proton conductivity even in a non-humidified state.

PTL 2 discloses a solid polyelectrolyte membrane that contains a crosslinked polymer and a plasticizer, wherein at least one of the crosslinked polymer and the plasticizer has a proton-releasing group.

PTL 3 discloses "a proton conductive film comprising: a polymer having a first part and a second part which are covalently linked; and a plasticizer, wherein the first parts aggregate with each other to form a domain at an operation temperature of the proton conductive film, and the second part crosslinks the domains, and the second part has a proton-accepting group, and the plasticizer contains a proton donating compound having a pKa of 2.5 or less, and thus the plasticizer penetrates into the second part, and a glass transition temperature of the polymer is lowered to when the plasticizer is not included" (electrolyte membrane). This proton conductive film (electrolyte membrane) can exhibit high proton conductivity in a low- or no-humidity environment, and is suitable for use as a proton-conducting membrane in fuel cells in a low- or no-humidity environment.

NPL 1 discloses a method for synthesizing a conventional block copolymer containing acidic functional groups, which exhibits strong acidity. In this synthetic method, sulfonation is performed after polymer synthesis; it is thus difficult to sulfonate only a specific moiety selectively with high reaction efficiency due to the severe reaction conditions. As a result, not only the styrene moieties in the polymer, but also tert-butylstyrene is sulfonated, and the division of roles between the mechanical strength phase and the conduction phase of the polymer is not fully achieved.

NPL 2 discloses a method for producing a phosphoric acid-doped polybenzimidazole film according to a conventional sol-gel process. The film is described as functioning as an electrolyte membrane for fuel cells without humidification at a temperature of 150°C or higher.

All of the electrolyte membranes (or films) described in PTL 1 to 3 and NPL 1 and 2 are expected to leach into water when being brought into contact with water generated in a fuel cell reaction due to the hydrophilic moieties present in the low-molecular-weight electrolyte and low-molecular-weight compounds in the membranes.

### Citation List

### Patent Literature

PTL 1: WO2017/183397A1
PTL 2: JP2018-190647A
PTL 3: JP2020-068130A

### Non-patent Literature

NPL 1: J. Mater. Chem. 2012, 22, 25262-25271
NPL 2: Chem. Mater. 2005, 17, 5328-5333

### Summary of Invention

### Technical Problem

The present invention newly provides a polyelectrolyte membrane.

The present invention newly provides a composite polymer membrane that produces a conductivity of 1.0 × 10⁻³ S/cm or higher, an ionomer for polymer electrolyte fuel cells, a monomer having a phosphonic acid group and/or a phosphonic acid ester via a spacer structure etc.

### Solution to Problem

The present invention, which achieves the above objects, is described below.

### Item A

The present invention provides a polymer having an acidic functional group (including a polymer containing a monomer unit with a phosphonic acid group via a spacer structure) (Items 1 to 12).

### Item B

The present invention provides a composite polymer membrane (including a composite polymer membrane containing a polymer containing a monomer unit having a phosphonic acid group via a spacer structure and a basic polymer) (Items 13 to 23).

### Item C

The present invention provides a monomer having a phosphonic acid group and/or a phosphonic acid ester via a spacer structure (Items 24 to 26).

### Item A: Polyelectrolyte Membrane

### Item 1

A polyelectrolyte membrane, comprising
a polymer having an acidic functional group, wherein
the polymer is
   (i) a block copolymer having at least an a-b type unit in which a block a and a block b are covalently linked,
   (ii) a chemically crosslinked polymer having an acidic functional group on a side chain, and/or
   (iii) a polymer containing a monomer unit having a phosphonic acid group via a spacer structure and containing no highly hydrolyzable functional group between the main chain structure and the phosphonic acid group; and
the block a in (i) contains a hydrophobic polymer or water-repellent polymer, and
the block b in (i) contains a polymer having an acidic functional group on a side chain or the polymer in (iii), or
the side chain of the block b in (i) contains a graft chain (polymer) containing a monomer unit having an acidic functional group.

The term "side chain" refers to a functional group, a unit containing a functional group, or a graft chain (a branch or branch polymer) that branches off from the main chain (corresponding to the center of the chain or the stem) of a chain compound (generally polymers).

### Item 2

The polyelectrolyte membrane according to Item 1, wherein the acidic functional group is composed of at least one member selected from the group consisting of a sulfonic acid group and a phosphonic acid group.

### Item 3

The polyelectrolyte membrane according to Item 1 or 2, further comprising an ionic low-molecular-weight organic salt.

The "ionic low-molecular-weight organic salt" typically refers to a compound with a molecular weight of 800 or less, such as ethyl methyl imidazolium bromide.

The "ionic low-molecular-weight organic salt" can be synthesized by quaternizing a basic compound with, for example, an alkyl halide (CₙH₂ₙ₊₁-X wherein n represents a natural number, and X represents F, Cl, Br, or I).

### Item 4

The polyelectrolyte membrane according to any one of Items 1 to 3,
wherein
the polymer having an acidic functional group on a side chain, the polymer in (iii), or the graft chain that constitutes a side chain and that contains a monomer unit having an acidic functional group in the block b in (i),
the polymer in (ii), and
the polymer in (iii)
are each a hydrocarbon-based vinyl polymer and contain the acidic functional group in an amount of at least 0.70 in the monomer unit.

In other words, in the block b in (i), the polymer having an acidic functional group on a side chain, the polymer in (iii), or the graft chain that constitutes a side chain and that contains a monomer unit having an acidic functional group is a hydrocarbon-based vinyl polymer and contains the acidic functional group in an amount of at least 0.70 on average in the monomer unit.

In other words, the polymer in (ii) is a hydrocarbon-based vinyl polymer that contains the acidic functional group in an amount of at least 0.70 on average in the monomer unit.

In other words, the polymer in (iii) is a hydrocarbon-based vinyl polymer that contains the acidic functional group in an amount of at least 0.70 on average in the monomer unit.

### Item 5

The polyelectrolyte membrane according to any one of Items 1 to 4,
wherein
the polymer having an acidic functional group on a side chain, the polymer in (iii), or the graft chain that constitutes a side chain and that contains a monomer unit having an acidic functional group in the block b in (i),
the polymer in (ii), and
the polymer in (iii)
   are each a polymer obtained by polymerizing a monomer having the acidic functional group or the phosphonic acid group protected by a protecting group and then removing the protecting group, and
the polymer contains the acidic functional group in an amount of at least 0.70 in the monomer unit.

In other words, in the block b in (i), the polymer having an acidic functional group on a side chain, the polymer in (iii), or the graft chain that constitutes a side chain and that contains a monomer unit having an acidic functional group is a polymer obtained by polymerizing a monomer having the acidic functional group or phosphonic acid group protected by a protecting group and then removing the protecting group, and contains the acidic functional group in an amount of at least 0.70 on average in the monomer unit.

In other words, the polymer in (ii) is obtained by polymerizing a monomer having the acidic functional group or phosphonic acid group protected by a protecting group and then removing the protecting group, and contains the acidic functional group in an amount of at least 0.70 on average in the monomer unit.

In other words, the polymer in (iii) is obtained by polymerizing a monomer having the acidic functional group or phosphonic acid group protected by a protecting group and then removing the protecting group, and contains the acidic functional group in an amount of at least 0.70 on average in the monomer unit.

### Item 6

The polyelectrolyte membrane according to any one of Items 1 to 5,
wherein
the hydrophobic polymer or water-repellent polymer constituting the block a in (i) is a hydrophobic hydrocarbon-based vinyl polymer, a water-repellent hydrocarbon-based vinyl polymer, or a fluorocarbonated vinyl polymer, and has a glass transition temperature (Tg) of 100°C or higher.

### Item 7

The polyelectrolyte membrane according to any one of Items 1 to 6, comprising a hydrophobic polymer or water-repellent polymer in addition to the polymer containing the block copolymer having at least an a-b type unit in which the block a and the block b are covalently linked in (i).

### Item 8

The polyelectrolyte membrane according to any one of Items 1 to 7, wherein when the polyelectrolyte membrane comprises (i) the block copolymer having at least an a-b type unit in which a block a and a block b are covalently linked and/or (iii) the polymer containing a monomer unit having a phosphonic acid group via a spacer structure and containing no highly hydrolyzable functional group between the main chain structure and the phosphonic acid group, the polyelectrolyte membrane further comprises a proton donor.

### Item 9

The polyelectrolyte membrane according to Item 8, wherein the proton donor contains at least one member selected from the group consisting of sulfuric acid and phosphoric acid.

### Item 10

A method for producing a polyelectrolyte membrane, comprising
(A) the step of preparing a hydrophobic polymer to produce a block a,
(B) the step of polymerizing the block a with a monomer having an acidic functional group protected by a protecting group or a monomer having a phosphonic acid group protected by a protecting group via a spacer structure to form a block b, and producing a block copolymer having an a-b type unit in which the block a and the block b composed of a unit of the monomer by polymerization are covalently linked; and
(C) the step of removing the protecting group of the block b to produce a polymer containing the acidic functional group or the phosphonic acid group in an amount of at least 0.70 in the monomer unit constituting the block b and containing the acidic functional group or the phosphonic acid group on a side chain.

### Item 11

The method according to Item 10, further comprising (D) the step of adding a hydrophobic polymer or water-repellent polymer, each having a molecular weight of 100,000 or more.

### Item 12

The method according to Item 10 or 11, further comprising (E) the step of adding a proton donor.

The present invention newly provides a composite polymer membrane that produces a conductivity of 1.0 × 10⁻³ S/cm or higher.

### Item B: Composite Polymer Membrane

### Item 13

A composite polymer membrane comprising
(1) a polymer having an acidic functional group, and
(2) a polymer having a basic functional group, wherein (1) the polymer having an acidic functional group is
   (i) a block copolymer having at least an a-b type unit in which a block a and a block b are covalently linked,
   (ii) a chemically crosslinked polymer having an acidic functional group on a side chain, and/or
   (iii) a polymer containing a monomer unit having a phosphonic acid group via a spacer structure and containing no highly hydrolyzable functional group between the main chain structure and the phosphonic acid group,

   the block a in (i) contains a hydrophobic polymer or water-repellent polymer,
   the block b in (i) contains a polymer having an acidic functional group on a side chain or the polymer in (iii), or
   the side chain of the block b in (i) contains a graft chain containing a monomer unit having an acidic functional group, and
   the composite polymer membrane produces a conductivity of 1.0 × 10⁻³ S/cm or higher.

### Item 14

The composite polymer membrane according to Item 13, wherein the acidic functional group is composed of at least one member selected from the group consisting of a sulfonic acid group and a phosphonic acid group.

### Item 15

The composite polymer membrane according to Item 13 or 14, wherein (1) the polymer having an acidic functional group is a polymer containing a monomer unit having an acidic functional group, the monomer unit being composed of at least one member selected from the group consisting of 4-styrenesulfonic acid, vinylsulfonic acid, 4-styrenephosphonic acid, and vinylphosphonic acid.

### Item 16

The composite polymer membrane according to any one of Items 13 to 15,
wherein
(2) the polymer having a basic functional group is
   a polymer having five or more basic functional groups composed of at least one member selected from the group consisting of an amino group, an imino group, a pyridyl group, an imidazolyl group, a pyrazolyl group, a pyrrolyl group, and a triazolyl group, or
   a block copolymer having at least a c-d type unit in which a block c and a block d are covalently linked,
the block c contains a hydrophobic polymer or a water-repellent polymer, and
the block d contains a polymer having five or more basic functional groups composed of at least one member selected from the group consisting of an amino group, an imino group, a pyridyl group, an imidazolyl group, a pyrazolyl group, a pyrrolyl group, and a triazolyl group.

### Item 17

The composite polymer membrane according to any one of Items 13 to 16,
wherein
(2) the polymer having a basic functional group is
a polymer containing five or more monomer units having a basic functional group, the monomer units being composed of at least one member selected from the group consisting of ethyleneimine, allylamine, vinylamine, vinylpyridine, 2-vinylpyridine, vinylimidazole, vinylpyrazole, and vinylpyrrole, or
a block copolymer having at least a c-d type unit in which a block c and a block d are covalently linked,
the block c contains a hydrophobic polymer or a water-repellent polymer, and
the block d contains a polymer having five or more monomer units, the monomer units being composed of at least one member selected from the group consisting of ethyleneimine, allylamine, vinylamine, vinylpyridine, 2-vinylpyridine, vinylimidazole, vinylpyrazole, vinylpyrrole, and vinyltriazole.

### Item 18

The composite polymer membrane according to any one of Items 13 to 17,
wherein
(2) the polymer having a basic functional group is a polymer having a cationic functional group based on the basic functional group, and
a portion of the basic functional group is quaternized by an organic halogen compound to produce a cation, thus forming a cationic functional group based on the basic functional group.

### Item 19

The composite polymer membrane according to any one of Items 13 to 18, wherein the cationic functional group based on the basic functional group accounts for at least 10 mol% of the basic functional group.

### Item 20

The composite polymer membrane according to Item 18 or 19, wherein the organic halogen compound has an alkyl halide moiety.

In the compound having an alkyl halide moiety, the alkyl halide is represented by CₙH₂ₙ₊₁-X (wherein n represents a natural number, and X represents F, Cl, Br, or I), and the compound having an alkyl halide moiety is a compound represented by R-CₙH₂ₙ-X (R represents any organic functional group, n represents a natural number, and X represents F, Cl, Br, or I), and particularly preferably an alkyl halide.

### Item 21

The composite polymer membrane according to any one of Items 18 to 20, comprising
a polymer having an anionic group based on an acidic functional group, and
the polymer having a cationic functional group based on the basic functional group,
the polymer having an anionic group based on an acidic functional group being obtained by forming a composite of (1) the polymer having an acidic functional group and the polymer having a cationic functional group based on a basic functional group to ionize (1) the polymer having an acidic functional group to release a proton from the acidic functional group, thereby forming an anionic functional group, and allowing a low-molecular-weight acid composed of a counter anion of the cationic functional group of the polymer having the cationic functional group based on the basic functional group and the proton to exit from the membrane,
   wherein
the composite polymer membrane produces a conductivity of 1.0 × 10⁻³ S/cm or higher.

### Item 22

The composite polymer membrane according to any one of Items 13 to 21, wherein when immersed in water at 60°C for 1 hour, the composite polymer membrane does not show a difference in conductivity by 25% or higher as compared with the membrane that is not immersed.

The present invention newly provides an ionomer for polymer electrolyte fuel cells.

### Ionomer for Polymer Electrolyte Fuel Cell

### Item 23

An ionomer for a polymer electrolyte fuel cell, comprising the polymer of any one of Items 1 to 9, or a composite polymer constituting the composite polymer membrane of any one of Items 13 to 22.

The present invention newly provides a monomer having a phosphonic acid group and/or a phosphonic acid ester via a spacer structure.

### Item C: Monomer

### Item 24

A monomer comprising a phosphonic acid group and/or a phosphonic acid ester via a spacer structure, the monomer comprising no highly hydrolyzable functional group between a portion that forms the main chain structure of a polymer after polymerization and the phosphonic acid group and/or the phosphonic acid ester that is part of a side chain of the polymer.

The "portion that forms the main chain structure of a polymer after polymerization" refers to the portion that becomes the main chain (corresponding to the center of the chain or the stem) of a chain compound (typically a polymer). In vinyl monomers, the portion is generally the vinyl group CH₂=CH-. A functional group, a unit containing a functional group, and a graft chain (branch, branch polymer) that branch off from the portion that becomes the main chain structure are side chains.

### Item 25

The monomer according to Item 24, wherein the spacer structure is an alkyl spacer.

### Item 26

The monomer according to Item 24 or 25, wherein the spacer structure is an alkyl spacer with the number of methylene group repetitions being 2 to 12.

### Advantageous Effects of Invention

The invention can newly provide a polyelectrolyte membrane.

The polyelectrolyte membrane according to the present invention is particularly suitable for use as a proton-conducting membrane in fuel cells.

The present invention can newly provide a composite polymer membrane that produces a conductivity of 1.0 × 10⁻³ S/cm or higher.

The present invention can newly provide an ionomer for polymer electrolyte fuel cells.

The present invention can newly provide a monomer having a phosphonic acid group and/or a phosphonic acid ester via a spacer structure.

The composite polymer membrane based on a phosphonic acid polymer according to the present invention can be suitably used under both non-humidified and humidified conditions.

The composite polymer membrane (electrolyte membrane) of the present invention includes a composite polymer membrane (electrolyte membrane) based on a polymer composed of a monomer unit having phosphonic acid and/or phosphonic acid ester via a spacer structure. Basically, the membrane does not contain a low-molecular-weight electrolyte and thus does not elute a low-molecular-weight electrolyte into a liquid water, and also exhibits suppressed elution of a polyelectrolyte from the membrane into the liquid water, showing a good conductivity of 1.0 × 10⁻³ S/cm or higher.

The composite polymer membrane (electrolyte membrane) according to the present invention produces a good conductivity of 1.0 × 10⁻³ S/cm or higher and is particularly suitable for use as a proton-conducting membrane in fuel cells.

### Brief Description of Drawings

Fig. 1 shows a GPC chromatogram of Example 1.
   Dashed line: B-1 obtained in step 1-1.
   Solid line: B-nBsS-1 obtained in step 1-2.
Fig. 2 shows a ¹H-NMR spectrum of Example 1.
   Dotted line: B-nBsS-1 obtained in step 1-2.
   Solid line: B-sSA-1 obtained in step 2.
Fig. 3 shows measurement results of the proton conductivity at 80°C.
   •: proton conductivity of Example 1.
   ×: proton conductivity of Comparative Example 1.
   ▲: proton conductivity of Example 2.
   ■: proton conductivity of Example 3.
Fig. 4 shows measurement results of the proton conductivity at 95°C.
   •: proton conductivity of Example 1.
   ×: proton conductivity of Comparative Example 1.
   ▲: proton conductivity of Example 2.
   ■: proton conductivity in Example 3.
Fig. 5 shows a ¹H-NMR spectrum of Example 2.
   Dotted line: B-nBsS-2.
   Solid line: B-sSA-2.
Fig. 6 shows a GPC chromatogram of Example 2.
   Solid line: B-nBsS-2.
   Dashed line: poly(4-tert-butylstyrene)(B-2) as a precursor.
Fig. 7 shows results of a tensile test of the proton-conducting electrolyte membrane obtained in Example 4 (solid line).
Fig. 8 shows a GPC chromatogram of Example 8.
   Solid line: B-EsP.
   Dashed line: poly(4-tert-butylstyrene) (B-4) as precursor.
Fig. 9 shows a ¹H-NMR spectrum of Example 8.
   Dotted line: B-4.
   Dashed line: B-EsP.
   Solid line: B-sPA.
Fig. 10 shows a thermogram (Tg).
   Dashed line: (Example 1) B-sSA-1.
   Solid line: (Example 8) B-sPA.
Fig. 11 shows a ¹H-NMR spectrum of Example 10.
   Upper row: B-5.
   Middle row: B-(nBsS-co-EsP)-1.
   Lower row: B-(sSA-c o-sPA) -1.
Fig. 12 shows a ¹H-NMR spectrum of Example 12.
   Upper row: CL-nBsS.
   Lower row: CL-sSA.
Fig. 13 shows a ¹H-NMR spectrum of Example 13.
   Upper row: CL-EsP.
   Lower row: CL-sPA.
Fig. 14 shows a ¹H-NMR spectrum of Example 14.
   a: BrS.
   b: BrS-B.
   c: (brS-g-EvP)-B.
   d: (brS-g-vPA)-B.
Fig. 15 shows a GPC chromatogram of Example 14. Dotted line: BrS.
   Dashed line: BrS-B.
   Solid line: (brS-g-EvP)-B.
Fig. 16 shows a ¹H-NMR spectrum of Example 28.
   Upper row: 4-bromostyrene.
   Middle row: 1-(4-bromobutyl)-4-vinylbenzene.
   Lower row: diethyl 4-(4-vinylphenyl)butylphosphonate monomer.
Fig. 17 shows a ¹³C-NMR spectrum of Example 28.
   Upper row: 4-bromostyrene.
   Middle row: 1-(4-bromobutyl)-4-vinylbenzene.
   Lower row: diethyl 4-(4-vinylphenyl)butylphosphonate monomer.
Fig. 18 shows a ³¹P-NMR spectrum of diethyl 4-(4-vinylphenyl)-butylphosphonate monomer obtained in Example 28.
Fig. 19 shows a ¹H-NMR spectrum of Example 28.
   Upper row: poly(diethyl 4-(4-vinylphenyl)butylphosphonate).
   Lower row: poly(4-(4-vinylphenyl)butylphosphonic acid).
Fig. 20 shows a GPC chromatogram of poly(diethyl 4-(4-vinylphenyl)butylphosphonate) obtained in Example 28.
Fig. 21 shows proton conductivities of Example 28 (•) and Comparative Example 6 (x).
Fig. 22 shows GPC chromatograms of B and B-EsbP obtained in Example 32.
Fig. 23 shows a ¹H-NMR spectrum of Example 32.
   Upper row: B.
   Middle row: B-EsbP.
   Lower row: B-sbPA.

### Description of Embodiments

The following describes in detail the present invention.

In the present specification, the terms "comprising" and "containing" both encompass the concepts of "comprising," "consisting essentially of," and "consisting of."

In the present specification, a numerical range "X to Y" means X or greater and Y or less.

In the present specification, the prefix "poly" refers to a polymer containing two or more monomers.

### Item A: Polyelectrolyte Membrane

Conventional membranes such as the non-humidified proton-conductive membrane disclosed in PTL 1 or the proton conductive film with a crosslinked structure disclosed in PTL 3 do not have acidic groups on the block polymer and do not develop conductivity even if the membrane or film composed of only this block polymer is humidified. Additionally, humidifying a membrane containing a proton donor allows acidic liquid to elute from the membrane into liquid water produced by humidification, making the membrane unsuitable for membranes for humidification.

Conventional membranes such as the solid polyelectrolyte membrane disclosed in PTL 2 do not have a high concentration of free protons inside the membranes and develop a low proton conductivity under non-humidified conditions, not comparable to the conductivity of membranes used under humidified conditions.

The polyelectrolyte membrane according to the present invention is based on a polymer with a high density of acidic functional groups.

The polyelectrolyte membrane according to the present invention comprises a polymer having an acidic functional group, wherein
the polymer is (i) a block copolymer having at least an a-b type unit in which a block a and a block b are covalently linked,
the polymer is (ii) a chemically crosslinked polymer having an acidic functional group on a side chain, and/or
the polymer is (iii) a polymer containing a monomer unit having a phosphonic acid group via a spacer structure and containing no highly hydrolyzable functional group between the main chain structure and the phosphonic acid group,
the block a in (i) contains a hydrophobic polymer or water-repellent polymer,
the block b in (i) contains a polymer having an acidic functional group on a side chain or the polymer in (iii), or
the side chain of the block b in (i) contains a graft chain containing a monomer unit having an acidic functional group.

The term "side chain" refers to a functional group, a unit containing a functional group, or a graft chain (a branch or branch polymer) that branches off from the main chain (corresponding to the center of the chain or the stem) of a chain compound (generally polymers).

In the polyelectrolyte membrane according to the present invention, the acidic functional group is preferably an acidic functional group composed of at least one member selected from the group consisting of a sulfonic acid group and a phosphonic acid group.

The polyelectrolyte membrane according to the present invention contains a polymer having an acidic functional group, and the polymer is (i) a block copolymer having at least an a-b type unit in which a block a and a block b are covalently linked.

In the polyelectrolyte membrane according to the present invention, the polymer having an acidic functional group that constitutes the block b on a side chain is preferably a hydrocarbon-based vinyl polymer, and contains the acidic functional group in an amount of at least 0.70, preferably at least 0.80, more preferably at least 0.90, preferably at least 0.95, and more preferably at least 0.98 on average in the monomer unit.

In the polyelectrolyte membrane according to the present invention, the polymer having an acidic functional group that constitutes the block b on a side chain is preferably obtained by polymerizing a monomer having an acidic functional group having a protecting group and then removing the protecting group. The polymer contains the acidic functional group in an amount of at least 0.70, at least 0.90, preferably at least 0.95, and more preferably at least 0.98 on average in the monomer unit.

In the polyelectrolyte membrane according to the present invention, the block a in (i) is composed of a hydrophobic polymer or a water-repellent polymer.

In the polyelectrolyte membrane according to the present invention, the hydrophobic polymer or water-repellent polymer constituting the block a in (i) is preferably a hydrophobic hydrocarbon-based vinyl polymer, a water-repellent hydrocarbon-based vinyl polymer, or a fluorocarbonated vinyl polymer, and has a glass transition temperature (Tg, DSC measurement) of 100°C or higher.

The hydrophobic polymer is a hydrophobic hydrocarbon-based vinyl polymers with a glass transition temperature (Tg, DSC measurement) of 100°C or higher.

The water-repellent polymer is a water-repellent hydrocarbon-based vinyl polymer or fluorocarbonated vinyl polymer with a glass transition temperature (Tg, DSC measurement) of 100°C or higher.

The polyelectrolyte membrane according to the present invention preferably contains a hydrophobic polymer or water-repellent polymer, each having a molecular weight of 100,000 or more in addition to the polymer containing (i) the block copolymer having at least an a-b type unit in which a block a and a block b are covalently linked.

### Polymer Having Acidic Functional Group I

The polyelectrolyte membrane according to the present invention contains a polymer having an acidic functional group, wherein the polymer is (i) a block copolymer having at least an a-b type unit in which a block a and a block b are covalently linked, and the block b in (i) is composed of a polymer having an acidic functional group on a side chain.

The polymer having an acidic functional group on a side chain is a polymer containing a monomer unit that has an acidic functional group and that is composed of at least one member selected from the group consisting of 4-styrenesulfonic acid, vinylsulfonic acid, 4-styrenephosphonic acid, and vinylphosphonic acid.

### Polymer Having Acidic Functional Group II

The polyelectrolyte membrane according to the present invention contains a polymer having an acidic functional group, and the polymer is (i) a block copolymer having at least an a-b type unit in which a block a and a block b are covalently linked, and the block b in (i) is composed of the polymer in (iii).

### Polymer Having Acidic Functional Group III

The polyelectrolyte membrane according to the present invention contains a polymer having an acidic functional group, and the polymer is (i) a block copolymer having at least an a-b type unit in which a block a and a block b are covalently linked, and the side chain of the block b in (i) is composed of a graft chain containing a monomer unit having an acidic functional group.

The graft chain (polymer) containing a monomer unit having an acidic functional group is a graft chain containing a monomer unit that contains an acidic functional group and that is composed of at least one member selected from the group consisting of 4-styrenesulfonic acid, vinylsulfonic acid, 4-styrenephosphonic acid, and vinylphosphonic acid.

The term "side chain" refers to a functional group, a unit containing a functional group, or a graft chain (a branch or branch polymer) that branches off from the main chain (corresponding to the center of the chain or the stem) of a chain compound (generally polymers).

### Polymer Having Acidic Functional Group IV

The polyelectrolyte membrane according to the present invention contains a polymer having an acidic functional group, and the polymer is (ii) a chemically crosslinked polymer having an acidic functional group on a side chain.

The chemically crosslinked polymer having an acidic functional group on a side chain is composed of a polymer containing a monomer unit having an acidic functional group on a side chain, such as poly(4-styrenesulfonic acid) or poly(4-styrenephosphonic acid), being chemically crosslinked with divinylbenzene, etc.

### Polymer Having Acidic Functional Group V

The polyelectrolyte membrane according to the present invention contains a polymer having an acidic functional group, and the polymer is (iii) a polymer containing a monomer unit having a phosphonic acid group via a spacer structure and containing no highly hydrolyzable functional group between the main chain structure and the phosphonic acid group.

The polymer having an acidic functional group is composed of a monomer unit. Specifically, the polymer having an acidic functional group is a polymer composed of a monomer unit having phosphonic acid and/or phosphonic acid ester, which is an acidic functional group, on a side chain via a spacer structure.

The phosphonic acid and/or phosphonic acid ester present via a spacer structure (preferably alkyl spacer) can be present, for example, in an amount of one, two, or four, per monomer unit, as shown in the following chemical structural formulas.

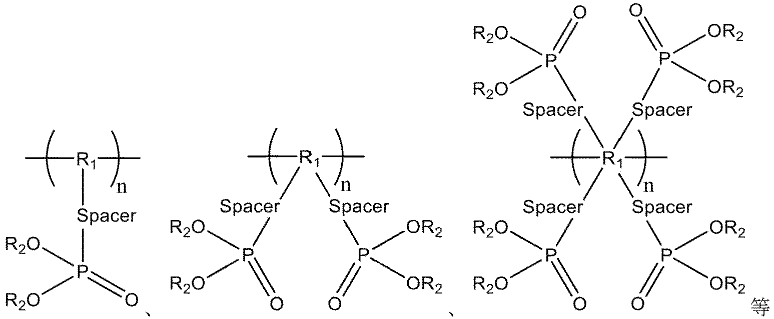

In the chemical structural formulas of the polymer having an acidic functional group, "Spacer" denotes a spacer structure, preferably an alkyl spacer.

In the polymer having an acidic functional group, R₁ represents the main chain structure portion of a monomer unit (e.g., -CH₂-CH(C₆Hₓ)- wherein X is 0 to 4, for a polystyrene-based polymer). The number of phosphonic acids and/or phosphonic acid esters with a spacer structure is one or greater, and may be, but not particularly limited to, 2, 3, 4, 5, 6, 8, 10, or greater.

In the polymer having an acidic functional group, R₂ represents a protecting group (in particular, an alkyl protecting group) or a hydrogen atom (H).

The polymer having an acidic functional group has phosphonic acid groups. The presence of a spacer structure makes it easier for the phosphonic acid groups to line up in close proximity and to form a continuous ion-conducting channel (ion-conducting path) as compared to the absence of a spacer structure, resulting in good conductivity.

The polymer having an acidic functional group is preferably a hydrocarbon-based or hydrogen fluoride-based polymer, more preferably a vinyl polymer, and still more preferably a polystyrene-based polymer.

The polystyrene-based polymer preferably includes polystyrene, polyacetylstyrene, polyanisoylstyrene, polybenzoylstyrene, polybiphenylstyrene, polybromoethoxystyrene, polybromomethoxystyrene, polybromostyrene, polybutoxymethylstyrene, poly-tert-butylstyrene, polybutylstyrene, polychlorofluorostyrene, polychloromethylstyrene, polychlorostyrene, polycyanostyrene, polydichlorostyrene, polydifluorostyrene, polydimethylstyrene, polyethoxymethylstyrene, polyethoxystyrene, polyfluoromethylstyrene, polyfluorostyrene, polyiodostyrene, polymethoxycarbonylstyrene, polymethoxymethylstyrene, polymethylstyrene, polymethoxystyrene, polyperfluorostyrene, polyphenoxystyrene, polyphenylacetylstyrene, polyphenylstyrene, polypropoxystyrene, polytoluoylstyrene, and polytrimethylstyrene.

The polymer having a phosphonic acid group on a side chain is preferably obtained by polymerizing a monomer having a phosphonic acid group protected by a protecting group, via a spacer structure, and removing the protecting group.

The polymer having a phosphonic acid group on a side chain preferably contains no highly hydrolyzable functional group between the main chain structure of the polymer and the phosphonic acid group.

The highly hydrolyzable functional group is, for example, an amide bond, an imide bond, a urethane bond, an ester bond, or an ether bond. Ionic functional groups, such as ammonium, imidazolium, and pyridinium, can also be considered to be highly hydrolyzable functional groups.

The polymer having a phosphonic acid group on a side chain may further contain the following monomer units.

Examples include styrene, acetylstyrene, anisoylstyrene, benzoylstyrene, biphenylstyrene, bromoethoxystyrene, bromomethoxystyrene, bromostyrene, butoxymethylstyrene, tert-butylstyrene, butylstyrene, chlorofluorostyrene, chloromethylstyrene, chlorostyrene, cyanostyrene, dichlorostyrene, difluorostyrene, dimethylstyrene, ethoxymethylstyrene, ethoxystyrene, fluoromethylstyrene, fluorostyrene, iodostyrene, methoxycarbonylstyrene, methoxymethylstyrene, methylstyrene, methoxystyrene, perfluorostyrene, phenoxystyrene, phenylacetylstyrene, phenylstyrene, propoxystyrene, toluoylstyrene, trimethylstyrene, and other styrene derivative monomers; 1,3-butadiene, isoprene(2-methyl-1,3-butadiene), and other conjugated diene monomers; acrylonitrile, methacrylonitrile, and other α,β-unsaturated nitrile monomers; maleic anhydride, butenyl succinic anhydride, tetrahydrophthalic anhydride, citraconic anhydride, and other unsaturated carboxylic anhydride monomers; methyl acrylate, ethyl acrylate, 2-ethylhexyl acrylate, methyl methacrylate, ethyl methacrylate, 2-ethylhexyl methacrylate, and other unsaturated carboxylic acid ester monomers; and 1,4-pentadiene, 1,4-hexadiene, and other non-conjugated diene monomers preferably with 5 to 12 carbon atoms.

For the polymer having a phosphonic acid group on a side chain, a phosphonic acid ester can preferably be deprotected to form a phosphonic acid group. For example, in synthesizing a polymer, the polymer is formed with a protecting group attached and then deprotected to form a polymer having a phosphonic acid group.

After polymerization of a monomer containing phosphonic acid ester via a spacer structure, deprotection is performed to form a polymer containing phosphonic acid groups (acidic functional groups) in the monomer units. For the polymer, the deprotection rate is preferably 70% or higher, more preferably 90% or higher, still more preferably 95% or higher, and particularly preferably 100%.

### Polymer Having Acidic Functional Group II

The polyelectrolyte membrane according to the present invention contains a polymer having an acidic functional group, and the polymer is (i) a block copolymer having at least an a-b type unit in which a block a and a block b are covalently linked, and the block b in (i) is composed of the polymer in (iii).

The block copolymer according to the present invention at least contains an a-b type unit in which a block a and a block b are covalently linked.

In the block copolymer, the block a is composed of a hydrophobic polymer or water-repellent polymer.

In the block copolymer, the block b is composed of a polymer having a phosphonic acid group on a side chain (a polymer having an acidic functional group V).

The hydrophobic polymer is preferably a hydrophobic hydrocarbon-based vinyl polymer with a glass transition temperature (Tg, DSC measurement) of 100°C or higher.

The block copolymer contains at least an a-b type unit in which a block a and a block b covalently linked, and may further contain a block c as a third portion, a block d as a fourth portion etc.

The block copolymer includes copolymers with branched structures, such as graft copolymers and star copolymers.

Within a membrane composed of a block copolymer, the hydrophobic phase or water-repellent phase of the polymer a maintains mechanical strength, and a microscopic-scale phase separation occurs between this phase and the phase that has formed an ion channel derived from a polymer having phosphonic acid groups, which are acidic functional groups of the polymer b. Moderately humidifying the block polymer membrane allows protons to hop over anions formed due to detachment of protons from the phosphonic acid groups and water molecules in the ion-conducting channel composed of multiple phosphonic acids, resulting in development of good proton conductivity.

### Block a

The block a is composed of a hydrophobic polymer or a water-repellent polymer.

The block a exhibits mechanical strength at high temperatures (100°C or higher) when formed into a composite membrane.

The polymer that constitutes the block a is preferably a polymer with a glass transition temperature (Tg, DSC measurement) of 100°C or higher. The glass transition temperature (Tg, DSC measurement) of the polymer that constitutes the block a is more preferably 120°C or higher, and still more preferably 140°C or higher.

In the present specification, unless otherwise specified, the glass transition temperature (Tg) is a value determined in accordance with JIS K 7121:2012, based on a DSC curve obtained by performing measurement at a temperature increase rate of 10°C/min.

If the glass transition temperature (Tg) is difficult to determine with a DSC curve, the glass transition temperature (Tg) can also be determined as a peak value of the loss tangent (tanδ) in dynamic mechanical analysis (DMA).

The polymer that constitutes the block a is preferably a hydrophobic polymer or a hydrophobic hydrocarbon-based vinyl polymer with excellent chemical stability, more preferably an aromatic vinyl polymer, and still more preferably a polystyrene-based polymer.

The polystyrene-based polymer preferably includes polystyrene, polyacetylstyrene, polyanisoylstyrene, polybenzoylstyrene, polybiphenylstyrene, polybromoethoxystyrene, polybromomethoxystyrene, polybromostyrene, polybutoxymethylstyrene, poly-tert-butylstyrene, polybutylstyrene, polychlorofluorostyrene, polychloromethylstyrene, polychlorostyrene, polycyanostyrene, polydichlorostyrene, polydifluorostyrene, polydimethylstyrene, polyethoxymethylstyrene, polyethoxystyrene, polyfluoromethylstyrene, polyfluorostyrene, polyiodostyrene, polymethoxycarbonylstyrene, polymethoxymethylstyrene, polymethylstyrene, polymethoxystyrene, polyperfluorostyrene, polyphenoxystyrene, polyphenylacetylstyrene, polyphenylstyrene, polypropoxystyrene, polytoluoylstyrene, and polytrimethylstyrene.

The polymer that constitutes the block a may also be a water-repellent polymer. The water-repellent polymer is a polymer that has the property of repelling water droplets when water droplets are dropped on the surface of the polymer (water repellency), and preferably has a contact angle of 90° or more, and more preferably 100° or more.

The water-repellent polymer preferably includes a silicone compound and a fluorinated polymer.

The silicone compound is a compound having a siloxane bond (Si-O-Si), and preferably a polyorganosiloxane. Examples of polyorganosiloxanes include polydimethylsiloxane and polymethylphenylsiloxane. Polyorganosiloxanes may have a functional group such as an unsaturated bond and an amino group.

The fluorinated polymer is preferably a copolymer composed of a fluorinated (meth)acrylic compound. The fluorinated (meth)acrylic compound refers to a compound formed of a (meth)acrylic compound having at least some hydrogen atoms replaced with fluorine atoms, and examples include fluoroalkyl (meth)acrylates such as perfluoroalkyl (meth)acrylate, and N-alkyl perfluoroalkylsulfonamide alkyl (meth)acrylates such as N-methyl perfluorooctylsulfonamide ethyl (meth)acrylate.

### Block b

The block b is composed of a polymer having a phosphonic acid group on a side chain (a polymer having an acidic functional group V). Specifically, the polymer having a phosphonic acid group on a side chain is composed of a monomer unit containing phosphonic acid and/or phosphonic acid ester, which is an acidic functional group, via a spacer structure on a side chain.

The block b has a phosphonic acid group and can produce a good conductivity.

The polymer that constitutes the block b is preferably a hydrocarbon-based vinyl polymer, and more preferably a polystyrene-based polymer, as described for the polymer having a phosphonic acid group on a side chain (a polymer having an acidic functional group V).

The polymer having a phosphonic acid group on a side chain that constitutes the block b is preferably a polymer containing a monomer unit having a phosphonic acid group obtained by polymerizing a monomer having a phosphonic acid ester on a side chain via a spacer structure, with a protecting group being attached, forming a block polymer, and removing the protecting group (ester moiety).

### An Embodiment of the arrangement of a block copolymer

The block copolymer is a di-block copolymer containing at least an a-b type unit in which a block a and a block b are covalently linked.

An embodiment of the a-b type di-block copolymer is represented by the following chemical formula.

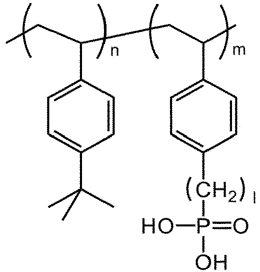

The average degree of polymerization (e.g., n in the above chemical formula) of the block a (e.g., the poly(4-tert-butylstyrene) moiety in the above chemical formula) is preferably an integer of 2 or greater, such as 2 or greater, 10 or greater, 30 or greater, 50 or greater, 100 or greater, 200 or greater, 500 or greater, 800 or greater, 1,000 or greater, 1,500 or greater, or 2,000 or greater. The average degree of polymerization of the block a is preferably 20,000 or less, 15,000 or less, 10,000 or less, 8,000 or less, 5,000 or less, or 4,000 or less.

The average degree of polymerization (e.g., m in the chemical formula) of the block b (e.g., the polymer portion composed of a monomer unit containing phosphonic acid via a spacer structure in the chemical formula above) is preferably an integer of 2 or greater, such as 2 or greater, 10 or greater, 30 or greater, 50 or greater, 100 or greater, 200 or greater, 500 or greater, 800 or greater, 1,000 or greater, 1,500 or greater, or 2,000 or greater. The average degree of polymerization of the block b is preferably 20,000 or less, 15,000 or less, 10,000 or less, 8,000 or less, 5,000 or less, or 4,000 or less.

The average degree of polymerization is determined by performing gel permeation chromatography (GPC) using standard polystyrene or according to ¹H-NMR, which compares the proton intensity of the initiator residues etc. with the proton intensity of the polymer repeating unit.

The block b is composed of the polymer having a phosphonic acid group on a side chain (a polymer having an acidic functional group V), and the polymer preferably contains no highly hydrolyzable functional groups, such as an amide bond, an imide bond, a urethane bond, an ester bond, or an ether bond, between the main chain structure and the phosphonic acid group of the polymer. The spacer structure is preferably an alkyl spacer, and the alphabetical symbol "l" in the chemical formula may be 2 to 12.

In the polyelectrolyte membrane according to the present invention, it is preferred that the polymer having an acidic functional group on a side chain, the polymer in (iii), or the graft chain that constitutes a side chain and that contains a monomer unit having an acidic functional group in the block b in (i), the polymer in (ii), and the polymer in (iii) are each a hydrocarbon-based vinyl polymer containing the acidic functional group in an amount of at least 0.70 in the monomer unit.

In other words, in the block b in (i) of the polyelectrolyte membrane according to the present invention, the polymer having an acidic functional group on a side chain, the polymer in (iii) above, or the graft chain containing a monomer unit that constitutes a side chain and that has an acidic functional group is preferably a hydrocarbon-based vinyl polymer containing the acidic functional group in an amount of at least 0.70 in the monomer unit.

In other words, in the polyelectrolyte membrane according to the present invention, the polymer in (ii) is preferably a hydrocarbon-based vinyl polymer containing the acidic functional group in an amount of at least 0.70 on average in the monomer unit.

In other words, in the polyelectrolyte membrane according to the present invention, the polymer in (iii) is preferably a hydrocarbon-based vinyl polymer containing the acidic functional group in an amount of at least 0.70 on average in the monomer unit.

In the polyelectrolyte membrane according to the present invention, it is preferred that the polymer having an acidic functional group on a side chain, the polymer in (iii), or the graft chain that constitutes a side chain and that contains a monomer unit having an acidic functional group in the block b in (i), the polymer in (ii), and the polymer in (iii) are each a polymer obtained by polymerizing a monomer having the acidic functional group or the phosphonic acid group protected by a protecting group and then removing the protecting group, and contain the acidic functional group in an amount of at least 0.70 in the monomer unit.

In other words, in the polyelectrolyte membrane according to the present invention, it is preferred that the polymer having an acidic functional group on a side chain, the polymer in (iii), or the graft chain that constitutes a side chain and that contains a monomer unit having an acidic functional group in the block b in (i) is a polymer obtained by polymerizing a monomer having the acidic functional group or the phosphonic acid group protected by a protecting group and then removing the protecting group, and contains the acidic functional group in an amount of at least 0.70 in the monomer unit.

In other words, in the polyelectrolyte membrane according to the present invention, it is preferred that the polymer in (ii) is a polymer obtained by polymerizing a monomer having the acidic functional group or the phosphonic acid group protected by a protecting group and then removing the protecting group, and contains the acidic functional group in an amount of at least 0.70 in the monomer unit.

In other words, in the polyelectrolyte membrane according to the present invention, it is preferred that the polymer in (iii) is a polymer obtained by polymerizing a monomer having the acidic functional group or the phosphonic acid group protected by a protecting group and then removing the protecting group, and contains the acidic functional group in an amount of at least 0.70 in the monomer unit.

The polyelectrolyte membrane according to the present invention further contains, preferably, an ionic low-molecular-weight organic salt.

The ionic low-molecular-weight organic salt is typically a compound with a molecular weight of 800 or less, such as ethyl methyl imidazolium bromide.

The ionic low-molecular-weight organic salt can be synthesized by quaternizing a basic compound with, for example, an alkyl halide (CₙH₂ₙ₊₁-X wherein n represents a natural number, and X represents F, Cl, Br, or I).

The ionic low-molecular-weight organic salt for use is preferably at least one member selected from the group consisting of imidazolium salts, pyridinium salts, and ammonium salts, such as 1-ethyl-3-methylimidazolium bromide (EMImBr), 1-ethylpyridinium bromide (EPyBr), and tetrabutylammonium bromide (TBAmBr).

When the polyelectrolyte membrane according to the present invention contains (i) a block copolymer having at least an a-b type unit in which a block a and a block b are covalently linked and/or (iii) a polymer containing a monomer unit having a phosphonic acid group via a spacer structure and containing no highly hydrolyzable functional group between the main chain structure and the phosphonic acid group, the polyelectrolyte membrane may further contain a proton donor.

In the polyelectrolyte membrane according to the present invention, the proton donor contains at least one member selected from the group consisting of sulfuric acid and phosphoric acid.

The polyelectrolyte membrane according to the present invention is based on a block polymer with a high density of acidic functional groups and is based on a block copolymer containing the hydrophobic polymer a and polymer b having an acidic functional group (preferably acidic functional groups such as a sulfonic acid group and a phosphonic acid group) on a side chain (a polymer having an acidic functional group I, a polymer having an acidic functional group II, and/or a polymer having an acidic functional group III).

In the polyelectrolyte membrane according to the present invention, the polymer b is preferably a hydrocarbon-based vinyl polymer and contains an acidic functional group in an amount of at least 0.70, preferably at least 0.80, more preferably at least 0.90, preferably at least 0.95, and more preferably at least 0.98 on average in the monomer unit. In a preferred embodiment, the polymer b contains no highly hydrolyzable functional group such as an ester bond or an amide bond between the polymer main chain and the acidic functional group on a side chain. The polyelectrolyte membrane according to the present invention has a high ion cluster formation capacity because the equivalent weight EW (100 to 200) of the polymer b roughly corresponds to the molecular weight of the monomer.

In conventional methods that perform sulfonation after polymer synthesis, it is difficult to sulfonate only a specific moiety selectively with high reaction efficiency due to the severe reaction conditions. To perform sulfonation without side reactions such as molecular chain scission, the sulfonation rate is preferably limited to 70 to 80 mol% at most.

In the polyelectrolyte membrane according to the present invention, the polymer b is not sulfonated after polymer synthesis; preferably after a monomer having a protecting group on an acidic group is polymerized, deprotection is performed, thereby enabling the polymer to have the acidic functional group in an amount of at least 0.70, preferably at least 0.80, more preferably at least 0.90, preferably at least 0.95, and more preferably at least 0.98 on average in the monomer unit. For example, when a block polymer containing the polymer b is synthesized, a block polymer is formed with the protecting group attached and then deprotected, thereby forming the block polymer.

In the polyelectrolyte membrane according to the present invention, the polymer a is a hydrophobic hydrocarbon-based vinyl polymer.

In the polyelectrolyte membrane according to the present invention, the polymer a is a water-repellent hydrocarbon-based vinyl polymer or a fluorocarbonated vinyl polymer.

The polymer a is preferably an aromatic vinyl polymer with excellent chemical stability, and more preferably has a glass transition temperature (Tg, DSC measurement) of 100°C or higher, more preferably 110°C or higher, still more preferably 120°C or higher, and particularly preferably 140°C or higher.

In the polyelectrolyte membrane according to the present invention, the block polymer is composed of a polymer obtained by linking at least the polymer a and the polymer b via at least one covalent bond, and can be produced, for example, by solvent casting and further by press molding.

In the polyelectrolyte membrane according to the present invention, a microscopic-scale phase separation occurs within the block polymer membrane between the phase that has formed an ion channel derived from the acidic functional group of the polymer b and the hydrophobic phase that is formed of the polymer a and that maintains mechanical strength. For this reason, moderately humidifying the block polymer membrane allows protons to hop over anions formed due to detachment of protons from the acidic functional groups and water molecules in the ion channel, and this enables the polyelectrolyte membrane according to the present invention to develop high proton conductivity (e.g., conductivity of from 0.01 S/cm at 80°C and 60% RH, conductivity of from 0.05 S/cm at 80°C and 80% RH).

The polyelectrolyte membrane according to the present invention exhibits conductivity even at 100°C or higher with low humidification, and is usable, in particular, as a polyelectrolyte membrane for polymer electrolyte fuel cells.

A membrane obtained as the polyelectrolyte membrane of the present invention by mixing the block polymer and the hydrophobic polymer a (homopolymer) with a molecular weight of 100,000 or more exhibits improved mechanical strength under humidified conditions compared with block polymer membranes containing no hydrophobic polymer a (homopolymer), and also has excellent dimensional stability when in contact with liquid water and water vapor and exhibits a high proton conductivity (e.g., a conductivity of 0.19 S/cm at 80°C and 80% RH).

Impregnating the block polymer membrane with a non-volatile acid, which is a proton donor, or impregnating a membrane obtained by mixing the block polymer and the hydrophobic polymer a (homopolymer) with a non-volatile acid allows the polyelectrolyte membrane according to the present invention to exhibit a high proton conductivity (e.g., a conductivity of 0.1 S/cm at 125°C) at 100°C or higher under non-humidified conditions.

The polyelectrolyte membrane according to the present invention is useful as an anhydrous electrolyte membrane.

The proton-conducting membrane according to the present invention is usable at a temperature of 100°C or higher and can be suitably used in fuel cells.

### Operating Temperature and Operating Humidity for Polyelectrolyte Membrane

The polyelectrolyte membrane according to the present invention is usable at a temperature within the medium temperature range of 100°C to 150°C.

The operating temperature for the polyelectrolyte membrane according to the present invention is the temperature at which a proton-conducting membrane is used, and is preferably room temperature or higher, more preferably 50°C or higher, 60°C or higher, 70°C or higher, 80°C or higher, 90°C or higher, or in some cases, 100°C or higher. The operating temperature for the polyelectrolyte membrane according to the present invention is, in some cases, 200°C or lower, 150°C or lower, 140°C or lower, 130°C or lower, 120°C or lower, and 110°C or lower.

The polyelectrolyte membrane according to the present invention exhibits a high proton conductivity even under conditions of 100°C or higher and no humidification (e.g., 125°C). The polyelectrolyte membrane according to the present invention can be used, in particular, at a temperature within the medium temperature range of 100°C to 150°C without humidification, and can be used in fuel cells without humidification.

The polyelectrolyte membrane according to the present invention can be used, for example, at 80°C and 60% RH, or at 80°C and 80% RH. The polyelectrolyte membrane according to the present invention exhibits conductivity at 100°C or higher with low humidification, and can be used, in particular, as a polyelectrolyte membrane for polymer electrolyte fuel cells.

Moderately humidifying a block polymer membrane containing no non-volatile acid, which is a proton donor, allows protons to hop over anions formed due to detachment of protons from the acidic functional groups and water molecules in the ion channel and thus enables the polyelectrolyte membrane according to the present invention to exhibit high proton conductivity.

### Block Copolymer

The block copolymer has at least an a-b type unit in which a block a and a block b are covalently linked (a polymer having an acidic functional group I). The block copolymer may contain a block c (third portion), a block d (fourth portion) etc.

### Block a

The block a is composed of a hydrophobic polymer or a water-repellent polymer.

The hydrophobic polymer that constitutes the block a is preferably a hydrophobic hydrocarbon-based vinyl polymer with a glass transition temperature (Tg, DSC measurement) of 100°C or higher. The hydrophobic polymer that constitutes the block a more preferably has a glass transition temperature (Tg, DSC measurement) of 110°C or higher, still more preferably 120°C or higher, and particularly preferably 140°C or higher.

In the present specification, unless otherwise specified, the glass transition temperature (Tg) is a value determined in accordance with JIS K 7121:2012, based on a DSC curve obtained by performing measurement at a temperature increase rate of 10°C/min.

If the glass transition temperature (Tg) is difficult to determine with a DSC curve, the glass transition temperature (Tg) can also be determined as a peak value of the loss tangent (tanδ) in dynamic mechanical analysis (DMA).

The polymer that constitutes the block a is preferably a hydrophobic hydrocarbon-based vinyl polymer, and more preferably a polystyrene-based polymer.

The polystyrene-based polymer preferably contains the styrene moiety in an amount of at least 50 mol% as a repeating unit.

The polystyrene-based polymer preferably includes polystyrene, polyacetylstyrene, polyanisoylstyrene, polybenzoylstyrene, polybiphenylstyrene, polybromoethoxystyrene, polybromomethoxystyrene, polybromostyrene, polybutoxymethylstyrene, poly-tert-butylstyrene, polybutylstyrene, polychlorofluorostyrene, polychloromethylstyrene, polychlorostyrene, polycyanostyrene, polydichlorostyrene, polydifluorostyrene, polydimethylstyrene, polyethoxymethylstyrene, polyethoxystyrene, polyfluoromethylstyrene, polyfluorostyrene, polyiodostyrene, polymethoxycarbonylstyrene, polymethoxymethylstyrene, polymethylstyrene, polymethoxystyrene, polyperfluorostyrene, polyphenoxystyrene, polyphenylacetylstyrene, polyphenylstyrene, polypropoxystyrene, polytoluoylstyrene, and polytrimethylstyrene.

The polymer that constitutes the block a is preferably a water-repellent hydrocarbon-based vinyl polymer, and more preferably polystyrene, polyacetylstyrene, polyanisoylstyrene, polybenzoylstyrene, polybiphenylstyrene polybutoxymethylstyrene, poly-tert-butylstyrene, etc.

The polymer that constitutes the block a is preferably a fluorocarbonated vinyl polymer, more preferably polyperfluorostyrene, polyperfluoromethylstyrene, polypentafluorostyrene, etc.

### Block b

The block b is composed of a polymer having an acidic functional group on a side chain. The acidic functional group is preferably composed of at least member selected from the group consisting of a sulfonic acid group and a phosphonic acid group.

The polymer having an acidic functional group on a side chain that constitutes the block b is preferably a hydrocarbon-based vinyl polymer, containing the acidic functional group in an amount of at least 0.70, preferably at least 0.80, more preferably at least 0.90, preferably at least 0.95, and more preferably at least 0.98 on average in the monomer unit.

The monomer unit forming the polymer having an acidic functional group is preferably a monomer unit having an acidic functional group composed of at least one member selected from the group consisting of 4-styrenesulfonic acid, vinylsulfonic acid, 4-styrenephosphonic acid, and vinylphosphonic acid.

The polymer having an acidic functional group on a side chain that constitutes the block b more preferably contains the acidic functional group in an amount of substantially 100 mol% in the monomer unit.

The polymer that constitutes the block b is preferably a hydrocarbon-based vinyl polymer.

The hydrocarbon-based vinyl polymer may contain the following in an amount of 50 mol% or less: polystyrene, polyacetylstyrene, polyanisoylstyrene, polybenzoylstyrene, polybiphenylstyrene, polybromoethoxystyrene, polybromomethoxystyrene, polybromostyrene, polybutoxymethylstyrene, poly-tert-butylstyrene, polybutylstyrene, polychlorofluorostyrene, polychloromethylstyrene, polychlorostyrene, polycyanostyrene, polydichlorostyrene, polydifluorostyrene, polydimethylstyrene, polyethoxymethylstyrene, polyethoxystyrene, polyfluoromethylstyrene, polyfluorostyrene, polyiodostyrene, polymethoxycarbonylstyrene, polymethoxymethylstyrene, polymethylstyrene, polymethoxystyrene, polyperfluorostyrene, polyphenoxystyrene, polyphenylacetylstyrene, polyphenylstyrene, polypropoxystyrene, polytoluoylstyrene, polytrimethylstyrene, etc.

The acidic functional group on a side chain of the polymer that constitutes the block b is preferably composed of at least one member selected from the group consisting of a sulfonic acid group and a phosphonic acid group.

The polymer having an acidic functional group on a side chain that constitutes the block b is preferably obtained by polymerizing a monomer having the acidic functional group protected by a protecting group and then removing the protecting group, and the polymer contains substantially one acidic functional group in the monomer unit.

In the polyelectrolyte membrane according to the present invention, a microscopic-scale phase separation occurs within the block polymer membrane between the hydrophobic phase that is formed of the polymer a and that maintains mechanical strength and the phase that has formed an ion channel that is formed of the polymer b and that is derived from the acidic functional group. Moderately humidifying the block polymer membrane allows protons to hop over anions formed due to detachment of protons from the acidic functional groups and water molecules in the ion channel, and this enables the polyelectrolyte membrane according to the present invention to develop high proton conductivity.

### Arrangement of a block copolymer

The block copolymer is a di-block copolymer having at least an a-b type unit in which a block a and a block b are covalently linked (a polymer having an acidic functional group I, a polymer having an acidic functional group II, and/or a polymer having an acidic functional group III).

Some examples of a-b type di block copolymers are represented by the following chemical formulas (a sulfonic acid group-containing block polymer and a phosphonic acid group-containing block polymer).

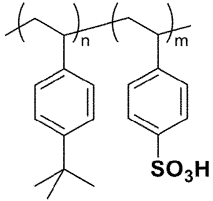

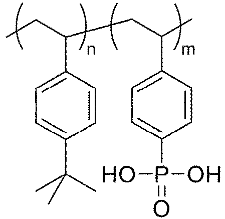

The average degree of polymerization (e.g., n in the above chemical formulas) of the block a that constitutes a di-block copolymer having an a-b type unit (e.g., the poly(4-tert-butylstyrene) moiety in the chemical formulas above) is preferably an integer of 2 or greater, such as 2 or greater, 10 or greater, 30 or greater, 50 or greater, 100 or greater, 200 or greater, 500 or greater, 800 or greater, 1,000 or greater, 1,500 or greater, or 2,000 or greater. The average degree of polymerization of the block a that constitutes a di-block copolymer having an a-b type unit is preferably 20,000 or less, 15,000 or less, 10,000 or less, 8,000 or less, 5,000 or less, or 4,000 or less.

The average degree of polymerization (e.g., m in the chemical formulas above) of the block b that constitutes a di-block copolymer having an a-b type unit (e.g., the poly(4-styrenesulfonic acid) moiety and the poly(4-styrenephosphonic acid) moiety in the chemical formulas above) is preferably an integer of 2 or greater, such as 2 or greater, 10 or greater, 30 or greater, 50 or greater, 100 or greater, 200 or greater, 500 or greater, 800 or greater, 1,000 or greater, 1,500 or greater, or 2,000 or greater. The average degree of polymerization of the block b that constitutes a di-block copolymer having an a-b type unit is preferably 20,000 or less, 15,000 or less, 10,000 or less, 8,000 or less, 5,000 or less, or 4,000 or less.

The average degree of polymerization can be determined according to the ¹H-NMR method.

### Hydrophobic Polymer or Water-repellent Polymer with Molecular Weight of 100,000 or More

The polyelectrolyte membrane according to the present invention contains a polymer, and the polymer contains a block copolymer having at least an a-b type unit in which a block a and a block b are covalently linked, and may additionally contain a hydrophobic polymer or water-repellent polymer with a molecular weight of 100,000 or more.

The hydrophobic polymer or water-repellent polymer is preferably a homopolymer composed of a monomer that constitutes the block a.

The molecular weight of the hydrophobic polymer or water-repellent polymer is preferably 200,000 or greater, 400,000 or greater, 600,000 or greater, or 800,000 or greater. For the molecular weight of the hydrophobic polymer, molecular weight distribution (Mw/Mn) is determined by gel permeation chromatography (GPC) using standard polystyrene for molecular weight calibration.

The membrane obtained by mixing a block copolymer (block polymer) with a hydrophobic polymer a (homopolymer) or water-repellent polymer a (homopolymer) as a polyelectrolyte membrane of the present invention exhibits improved mechanical strength under humidified conditions compared with membranes composed of a block copolymer (block polymer) not containing the hydrophobic polymer a (homopolymer) or water-repellent polymer a (homopolymer), and has excellent dimensional stability when in contact with liquid water and water vapor and exhibits high proton conductivity.

### Proton Donor (Non-volatile Acid)

The polyelectrolyte membrane according to the present invention may preferably further contain a proton donor (plasticizer).

The proton donor (plasticizer) contained in the polyelectrolyte membrane according to the present invention preferably contains at least one member selected from the group consisting of sulfuric acid and phosphoric acid.

Impregnating the block copolymer (block polymer) membrane with a proton donor (non-volatile acid) or impregnating a membrane obtained by mixing the block copolymer (block polymer) and the hydrophobic polymer a (homopolymer) or water-repellent polymer a (homopolymer) with a proton donor (non-volatile acid) allows the polyelectrolyte membrane according to the present invention to exhibit a high proton conductivity under non-humidified conditions.

### Method for Producing Polyelectrolyte Membrane

The polyelectrolyte membrane according to the present invention is produced according to a method comprising
(A) the step of preparing a hydrophobic polymer to produce a block a,
(B) the step of polymerizing the block a with a monomer having an acidic functional group protected by a protecting group or a monomer having a phosphonic acid group protected by a protecting group via a spacer structure to form a block b, and producing a block copolymer having an a-b type unit in which the block a and the block b composed of the unit of the monomer by polymerization are covalently linked; and
(C) the step of removing the protecting group of the block b to produce a polymer containing the acidic functional group or the phosphonic acid group in an amount of at least 0.70 in the monomer unit constituting the block b and containing the acidic functional group or phosphonic acid group on a side chain.

The polyelectrolyte membrane according to the present invention preferably further comprises
(D) the step of adding a hydrophobic polymer (hydrophobic polymer a (homopolymer)) or water-repellent polymer (water-repellent polymer a (homopolymer)), each having a molecular weight of 100,000 or more.

The polyelectrolyte membrane according to the present invention preferably further comprises
(E) the step of adding a proton donor.

In conventional methods that perform sulfonation after polymer synthesis, it is difficult to sulfonate only a specific moiety selectively with high reaction efficiency due to the severe reaction conditions. To perform sulfonation without side reactions such as molecular chain scission, the sulfonation rate is preferably limited to 70 to 80 mol% at most.

In the polyelectrolyte membrane according to the present invention, the polymer b is not sulfonated after polymer synthesis; preferably after a monomer having a protecting group on an acidic group is polymerized, deprotection is performed, thereby enabling the polymer to have the acidic functional group in an amount of at least 0.70, preferably at least 0.80, and more preferably at least 0.90 on average in the monomer unit. For example, when a block polymer containing the polymer b is synthesized, a block polymer is formed with the protecting group attached and then deprotected, thereby forming the block polymer (a polymer having an acidic functional group I, a polymer having an acidic functional group II, and/or a polymer having an acidic functional group III).

The polymer b (a polymer having an acidic functional group on a side chain that constitutes the block b) contains the acidic functional group in an amount of at least 0.70, preferably at least 0.80, more preferably, still more preferably at least 0.95, and particularly preferably at least 0.98 on average in the monomer unit.

The membrane obtained by mixing the block copolymer (block polymer) with the hydrophobic polymer a (homopolymer) or water-repellent polymer a (homopolymer) as a polyelectrolyte membrane of the present invention exhibits improved mechanical strength under humidified conditions compared with membranes composed of a block copolymer (block polymer) not containing the hydrophobic polymer a (homopolymer) or water-repellent polymer a (homopolymer), and has excellent dimensional stability when in contact with liquid water and water vapor and exhibits high proton conductivity.

Impregnating the block copolymer (block polymer) membrane with a proton donor (non-volatile acid) or impregnating a membrane obtained by mixing the block copolymer (block polymer) and the hydrophobic polymer a (homopolymer) or water-repellent polymer a (homopolymer) with a proton donor (non-volatile acid) allows the polyelectrolyte membrane according to the present invention to exhibit a high proton conductivity under non-humidified conditions.

### Synthesis of Block Copolymer (Polymer Having Acidic Functional Group I, Polymer Having Acidic Functional Group II, and/or Polymer Having Acidic Functional Group III)

The method for synthesizing a block copolymer having a block a and a block b is not particularly limited as long as the method is addition polymerization such as anionic polymerization, cationic polymerization, or radical polymerization.

The method for synthesizing a block copolymer having a block a and a block b for use may be the following method.

### (A) Step of preparing a hydrophobic polymer and producing a block a

A monomer to constitute a block a (e.g., a 4-tert-butylstyrene monomer), an RAFT agent (reversible addition-fragmentation chain transfer agent), and a polymerization initiator are mixed to perform polymerization, followed by isolation and purification to synthesize a macro-RAFT agent containing a block a.

The solvent for use in synthesis and isolation generation is preferably a solvent that evaporates relatively easily. Examples of solvents for use include water, alcohol solvents, such as methanol and ethanol, and ether solvents, such as dimethyl ether, diethyl ether, and tetrahydrofuran. The solvent for use is not limited to these solvents.

The means for removing a solvent is not particularly limited. The means for removing a solvent is preferably evaporation at room temperature or evaporation by heating. The means for removing a solvent may additionally include drying or other operations as appropriate.

### (B) Step of polymerizing the block a with a monomer having an acidic functional group protected by a protecting group or a monomer having a phosphonic acid group protected by a protecting group via a spacer structure to form a block b, and producing a block copolymer having an a-b type unit in which the block a and the block b composed of a unit of the monomer by polymerization are covalently linked (a polymer having an acidic functional group I, a polymer having an acidic functional group II, and/or a polymer having an acidic functional group III)

Next, in the presence of a polymerization initiator, the macro-RAFT agent containing the block a is polymerized with a monomer (e.g., an n-butyl 4-styrenesulfonate monomer and a diethyl 4-styrenephosphonate monomer) having an acidic functional group (e.g., a sulfonic acid group or a phosphonic acid group) protected by a protecting group (e.g., an n-butyl group), which constitutes the block b, thereby producing a block copolymer having an a-b type unit in which the block a and the block b are covalently linked.

The solvent for use in synthesis and isolation generation is preferably a solvent that evaporates relatively easily. Examples of solvents for use include water, alcohol solvents, such as methanol and ethanol, and ether solvents, such as dimethyl ether, diethyl ether, and tetrahydrofuran. The solvent for use is not limited to these solvents.

The means for removing a solvent is not particularly limited. The means for removing a solvent is preferably evaporation at room temperature or evaporation by heating. The means for removing a solvent may additionally include drying or other operations as appropriate.

### (C) Step of removing the protecting group of the block b to produce a graft chain containing a monomer unit containing the acidic functional group or phosphonic acid group in an amount of at least 0.70 in the monomer unit constituting the block band containing the acidic functional group or phosphonic acid group on a side chain

Removing the protecting group of the block b with a basic solution (e.g., an aqueous sodium hydroxide solution) produces a polymer having the acidic functional group in an amount of at least 0.95 on average in the monomer unit that constitutes the block b and having the acidic functional group on a side chain.

The polymer having an acidic functional group on a side chain that constitutes the block b more preferably contains an acidic functional group in an amount of substantially 100 mol% in the monomer unit.

### (D) Step of adding a hydrophobic polymer or water-repellent polymer, each having a molecular weight of 100,000 or more

The polyelectrolyte membrane according to the present invention preferably contains a hydrophobic polymer or water-repellent polymer in addition to the polymer containing a block copolymer having at least an a-b type unit in which a block a and a block b are covalently linked.

The hydrophobic polymer or water-repellent polymer is preferably a homopolymer composed of a monomer that constitutes the block a.

The membrane obtained by mixing a block copolymer (block polymer) with a hydrophobic polymer a (homopolymer) or water-repellent polymer a (homopolymer) as a polyelectrolyte membrane of the present invention exhibits improved mechanical strength under humidified conditions compared with membranes composed of a block copolymer (block polymer) not containing the hydrophobic polymer a (homopolymer) or water-repellent polymer a (homopolymer), and has excellent dimensional stability when in contact with liquid water and water vapor and exhibits high proton conductivity.

### Ratio of a polymer containing a block copolymer having an a-b type unit (a polymer having an acidic functional group I, a polymer having an acidic functional group II, and/or a polymer having an acidic functional group III) to a hydrophobic polymer or water-repellent polymer

The ratio by weight of the block copolymer having an a-b type unit to the hydrophobic polymer or water-repellent polymer ((block copolymer having an a-b type unit):(hydrophobic polymer or water-repellent polymer)) is preferably 6 to 9:4 to 1, and more preferably 7 to 8:3 to 2 from the viewpoint of improved mechanical strength under humidified conditions, excellent dimensional stability when in contact with liquid water and water vapor, and high proton conductivity.

### (E) Step of adding a proton donor

The polyelectrolyte membrane according to the present invention preferably further contains a proton donor (a volatile solvent (in methanol)).

The proton donor (which can act as a plasticizer) contained in the polyelectrolyte membrane according to the present invention preferably contains at least one member selected from the group consisting of sulfuric acid and phosphoric acid.

The proton donor (non-volatile acids such as sulfuric acid and phosphoric acid) preferably contains a proton-donating compound involved in proton transport and is well soluble with and well penetrated into the block b, composed of a polymer having an acidic functional group (e.g., a sulfonic acid group and a phosphonic acid group) on a side chain.

Impregnating the block copolymer (block polymer) membrane with a proton donor (non-volatile acid) or impregnating a membrane obtained by mixing the block copolymer (block polymer) and the hydrophobic polymer a (homopolymer) with a proton donor (non-volatile acid) allows the polyelectrolyte membrane according to the present invention to exhibit a high proton conductivity under non-humidified conditions.

### Ratio of a block copolymer having an a-b type unit (a polymer having an acidic functional group I, a polymer having an acidic functional group II, and/or a polymer having an acidic functional group III) to a proton donor

The ratio by weight of the block copolymer having an a-b type unit to the proton donor ((block copolymer having a-b type unit):(proton donor)) is preferably 3 to 7:7 to 3, and more preferably 5 to 7:5 to 3, from the viewpoint of developing high proton conductivity under non-humidified conditions.

The molar ratio of the block copolymer having an a-b type unit to the proton donor ((number of moles of sulfone groups in block copolymer having a-b type unit):(total number of moles of protons that can be donated by proton donor) is preferably 1 to 4:9 to 6, and more preferably 2 to 3:8 to 7 from the viewpoint of developing high proton conductivity under non-humidified conditions.

### Ratio of a block copolymer having an a-b type unit (a polymer having an acidic functional group I, a polymer having an acidic functional group II, and/or a polymer having an acidic functional group III), a hydrophobic polymer or water-repellent polymer, and a proton donor

The ratio by weight of the block copolymer having an a-b type unit, the hydrophobic polymer or water-repellent polymer, and the proton donor ((block copolymer having a-b type unit):(hydrophobic polymer or water-repellent polymer):(proton donor)) is preferably 20 to 50:5 to 20:40 to 70 from the viewpoint of improved mechanical strength under humidified conditions, excellent dimensional stability and high proton conductivity when in contact with liquid water and water vapor, and high proton conductivity under non-humidified conditions.

### RAFT Agent (Reversible Addition-fragmentation Chain Transfer Agent)

The RAFT agent is preferably a thiocarbonylthio compound, such as dithioesters, dithiocarbamates, trithiocarbonates, and xanthates.

The RAFT agent is preferably the following: 4-[(2-carboxyethylsulfanylthiocarbonyl)sulfanyl]-4-cyanopentanoic acid, 2-{[(2-carboxyethyl)sulfanylthiocarbonyl]sulfanyl}propanoic acid, 4-cyano-4-[(dodecylsulfanylthiocarbonyl)sulfanyl]pentanoic acid, 2-[(dodecylsulfanylthiocarbonyl)sulfanyl]propanoic acid, 2-(dodecylthiocarbonothioylthio)-2-methylpropanoic acid, methyl 2-(dodecylthiocarbonothioylthio)-2-methylpropionate, 2-(dodecylthiocarbonothioylthio)propionic acid, 2-(dodecylthiocarbonothioylthio)-2-methylpropanoic acid pentafluorophenyl ester, 2-(dodecylthiocarbonothioylthio)-2-methylpropionic acid 3-azide-1-propanol ester, 4-cyano-4-[(dodecylsulfanylthiocarbonyl)sulfanyl]pentanoic acid, methyl 4-cyano-4-[(dodecylsulfanylthiocarbonyl)sulfanyl]pentanoate, N-hydroxysuccinimidyl 2-(dodecylthiocarbonothioylthio)-2-methylpropionate, 3-[[(benzylthio)carbonothioyl]thio]propionic acid, 2-cyano-2-propyldodecyltrithiocarbonate, 4-cyano-4-(phenylcarbonothioylthio)pentanoic acid, cyanomethyl[3-(trimethoxysilyl)propyl]trithiocarbonate, 3-butenyl-2-(dodecylthiocarbonothioylthio)-2-methyl propane, phthalimide methylbutyltrithiocarbonate, 2-(2-carboxyethylsulfanylthiocarbonylsulfanyl)propionic acid, 4-((((2-carboxyethyl)thio)carbonothioyl)thio)-4-cyanopentanoic acid, 4-cyano-4-[(dodecylsulfanylthiocarbonyl)sulfanyl]pentanol, and 1,4-phenylenebis(methylene)didodecylbis(carbonotrithioate) cyanomethyldodecyltrithiocarbonate, 1,4-phenylenebis(methylene)dibutylbis(carbonotrithioate), and 1,4-phenylenebis(methylene)dioctadecylbis(carbonotrithioate) .

A target arrangement of the block copolymer can be synthesized by selecting an RAFT agent as appropriate.

### Polymerization Initiator

The polymerization initiator is preferably an azo radical polymerization initiator, a peroxide radical polymerization initiator, etc.

The polymerization initiator is preferably an azo radical polymerization initiator, such as azobisisobutyronitrile (AIBN), 2,2'-azobis(4-methoxy-2,4-dimethylvaleronitrile), 2,2'-azobis(2-cyclopropylpropionitrile), 2,2'-azobis(2,4-dimethylvaleronitrile), or dimethyl 2,2'-azobisisobutyrate.

The polymerization initiator is preferably a peroxide radical polymerization initiator, such as benzoyl peroxide, t-butyl hydroperoxide, or cumene hydroperoxide.

### Formation of Polyelectrolyte Membrane

When forming the polyelectrolyte membrane according to the present invention in a membrane form, it is preferred to perform it according to casting, pressing, or other methods before removing the solvent. When forming the polyelectrolyte membrane according to the present invention in a membrane form, it is preferred to perform it according to a hot-melt method or the like.

### Film Thickness of Polyelectrolyte Membrane

Because the polyelectrolyte membrane according to the present invention has excellent moldability and can be formed according to a hot-melt method, a solvent casting method, etc., the polyelectrolyte membrane can be formed into a thinner membrane than conventional proton-conducting membranes.

The film thickness of the polyelectrolyte membrane according to the present invention is preferably 1.00 mm or less, 0.90 mm or less, 0.80 mm or less, 0.75 mm or less, 0.73 mm or less, 0.72 mm or less, 0.71 mm or less, 0.70 mm or less, 0.68 mm or less, 0.65 mm or less, 0.60 mm or less, 0.55 mm or less, 0.50 mm or less, 0.45 mm or less, 0.40 mm or less, 0.35 mm or less, 0.30 mm or less, 0.28 mm or less, 0.25 mm or less, 0.23 mm or less, or 0.20 mm or less.

### Proton Conductivity of Polyelectrolyte Membrane

The polyelectrolyte membrane according to the present invention exhibits high proton conductivity in a non-humidified, low-humidified, or humidified environment.

The proton conductivity of the polyelectrolyte membrane according to the present invention is preferably 0.003 S/cm or higher, 0.0032 S/cm or higher, 0.005 S/cm or higher, 0.010 S/cm or higher, 0.014 S/cm or higher, 0.015 S/cm or higher, 0.030 S/cm or higher, 0.040 S/cm or higher, 0.050 S/cm or higher, 0.075 S/cm or higher, 0.080 S/cm or higher, 0.090 S/cm or higher, or 0.095 S/cm or higher in a low-humidity environment or in a humidified environment (e.g., a temperature of about 80°C to 95°C and a humidity of about 20% RH to 80% RH).

The proton conductivity of the polyelectrolyte membrane according to the present invention is preferably 0.010 S/cm or higher, 0.020 S/cm or higher, 0.030 S/cm or higher, 0.050 S/cm or higher, 0.075 S/cm or higher, 0.100 S/cm or higher, 0.125 S/cm or higher, 0.150 S/cm or higher, 0.175 S/cm or higher, or 0.200 S/cm or higher in a non-humidified environment (e.g., a temperature of about 125°C).

### Fuel cell

The fuel cell according to the present invention contains the polyelectrolyte membrane according to the present invention.

The fuel cell according to the present invention preferably contains a laminate in which a fuel-electrode-side separator with a fuel channel, a fuel-electrode-side catalyst layer, the proton-conducting membrane of the present invention, an air-electrode-side catalyst layer, and an air-electrode-side separator with an air channel are stacked in this order.

The fuel cell according to the present invention preferably contains a laminate in which a fuel-electrode-side separator with a fuel channel, a fuel-electrode-side gas diffusion layer, a fuel-electrode-side catalyst layer, the proton-conducting membrane of the present invention, an air-electrode-side catalyst layer, an air-electrode-side gas diffusion layer, and an air-electrode-side separator with an air channel are stacked in this order.

### Item C: Monomer

The monomer according to the present invention has a phosphonic acid group and/or a phosphonic acid ester via a spacer structure.

The monomer according to the present invention contains no highly hydrolyzable functional group between a portion that forms the main chain structure of a polymer after polymerization and the phosphonic acid group and/or the phosphonic acid ester that becomes a portion of a side chain of the polymer after polymerization.

The "portion that forms the main chain structure of a polymer after polymerization" refers to the portion that becomes the main chain (corresponding to the center of the chain or the stem) of a chain compound (typically a polymer). In vinyl monomers, the portion is generally the vinyl group CH₂=CH-. The functional group, the unit containing the functional group, and the graft chain (branch, branch polymer) that branches off from the portion that becomes the main chain structure are side chains.

In the present specification, "phosphonic acid ester" refers to a phosphonic acid diester or phosphonic acid monoester with a protecting group attached to the phosphonic acid, and particularly refers to a phosphonic acid diester.

The spacer structure is preferably an alkyl spacer.

The spacer structure is preferably an alkyl spacer with the number of methylene group repetitions being 2 to 12.

The monomer has phosphonic acid and/or phosphonic acid ester, which is an acidic functional group, on a side chain via a spacer structure.

A phosphonic acid is easily prepared by deprotecting a phosphonic acid ester.

The monomer according to the present invention has a phosphonic acid group and/or a phosphonic acid ester via a spacer structure.

The monomer according to the present invention contains no highly hydrolyzable functional groups between a portion that forms the main chain structure of a polymer after polymerization and the phosphonic acid group and/or the phosphonic acid ester that becomes a portion of a side chain of the polymer after polymerization.

The spacer structure is preferably an alkyl spacer.

The spacer structure is preferably a linear, branched, or cyclic alkyl spacer. Examples of alkyl spacers include linear or branched C₁₋₁₈ alkyl spacers, such as methyl, ethyl, n-propyl, isopropyl, n-butyl, isobutyl, sec-butyl, tert-butyl, 1-ethylpropyl, n-pentyl, isopentyl, neopentyl, n-hexyl, isohexyl, 3-methylpentyl, n-heptyl, n-octyl, n-nonyl, n-decyl, n-undecyl, n-dodecyl, 5-propylnonyl, n-tridecyl, n-tetradecyl, n-pentadecyl, hexadecyl, heptadecyl, and octadecyl; and cyclic C₃₋₈ alkyl spacers, such as cyclopropyl, cyclobutyl, cyclopentyl, cyclohexyl, cycloheptyl, and cyclooctyl.

The spacer structure is preferably a linear alkyl spacer with the number of methylene (methylene: -CH₂-) group repetitions being 2 to 12 (n represents 2 to 12 in -(CH₂)ₙ-units).

The spacer structure is more preferably an alkyl spacer, such as ethyl, n-propyl, isopropyl, n-butyl, isobutyl, sec-butyl, tert-butyl, 1-ethylpropyl, n-pentyl, isopentyl, neopentyl, n-hexyl, isohexyl, 3-methylpentyl, n-heptyl, n-octyl, n-nonyl, n-decyl, n-undecyl, n-dodecyl, or 5-propylnonyl.

The spacer structure is preferably bonded to a styrene monomer that constitutes a monomer arbitrarily at the o-, m-, or p-position, for example, with 1 to 5 bonds.

By way of example, the chemical structural formula below is a case with 2 bonds. A styrene monomer that constitutes a monomer has two phosphonic acid esters via a spacer structure. 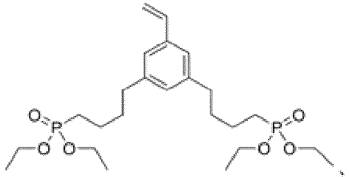 etc.

Carbon tetrabromide (CBr₄), bromoform (CHBr₃), or the like is first bonded arbitrarily to the o-, m-, or p-position of a styrene monomer that constitutes a monomer to form, for example, 3,5-bis(tribromomethyl)styrene, 3,5-bis(dibromomethyl)styrene, etc., and then an alkyl spacer may be introduced to the tribromomethyl group or dibromomethyl group. Furthermore, introducing phosphonic acid enables the synthesis of a styrene monomer having multiple phosphonic acid groups with alkyl spacers introduced. The number of phosphonic acid groups with alkyl spacers to be introduced is one or more, and may be two, three, four, five, six, eight, ten, or greater.

By way of example, the following chemical structural formulas are cases with 2, 3, or 4 phosphonic acid groups with an alkyl spacer in which a styrene-based monomer that constitutes a monomer has multiple phosphonic acid esters via a spacer structure.

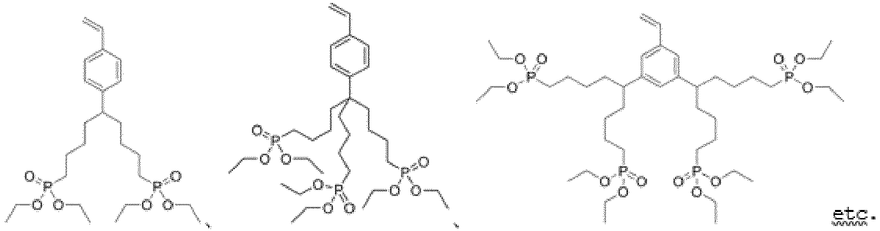

### Item B: Composite Polymer Membrane

The composite polymer membrane according to the present invention comprises
(1) a polymer having an acidic functional group, and
(2) a polymer having a basic functional group,
wherein (1) the polymer having an acidic functional group is
(i) a block copolymer having at least an a-b type unit in which a block a and a block b are covalently linked,
(ii) a chemically crosslinked polymer having an acidic functional group on a side chain, and/or
(iii) a polymer containing a monomer unit having a phosphonic acid group via a spacer structure and containing no highly hydrolyzable functional group between the main chain structure and the phosphonic acid group,

the block a in (i) contains a hydrophobic polymer or water-repellent polymer,
the block b in (i) contains a polymer having an acidic functional group on a side chain or the polymer in (iii), or
the side chain of the block b in (i) contains a graft chain containing a monomer unit having an acidic functional group, and
the composite polymer membrane produces a conductivity of 1.0 × 10⁻³ S/cm or higher.

The polyelectrolyte membrane according to the present invention contains a polymer having an acidic functional group, and the polymer is (i) a block copolymer having at least an a-b type unit in which a block a and a block b are covalently linked (polymers having an acidic functional group I to III).

The polyelectrolyte membrane according to the present invention contains a polymer having an acidic functional group, and the polymer is (ii) a chemically crosslinked polymer having an acidic functional group on a side chain (a polymer having an acidic functional group IV).

The polyelectrolyte membrane according to the present invention contains a polymer having an acidic functional group, and the polymer is (iii) a polymer that contains a monomer unit having a phosphonic acid group via a spacer structure, and that contains no highly hydrolyzable functional group between the main chain structure and the phosphonic acid group (a polymer having an acidic functional group V).

In the polyelectrolyte membrane according to the present invention, the block a in (i) is composed of a hydrophobic polymer or water-repellent polymer.

In the polyelectrolyte membrane according to the present invention, the block b in (i) is composed of a polymer having an acidic functional group on a side chain (a polymer having an acidic functional group I) or a polymer in (iii) (a polymer having an acidic functional group II).

In the polyelectrolyte membrane according to the present invention, the side chain of the block b in (i) is composed of a graft chain having an acidic functional group (a polymer having an acidic functional group III).

The composite polymer membrane according to the present invention produces a conductivity of 1.0 × 10⁻³S/cm or higher.

The mixture of (1) a polymer having an acidic functional group and (2) a polymer having a basic functional group, which forms a composite polymer membrane, is referred to as a "composite polymer."

### Polymer Having Basic Functional Group

The composite polymer membrane contains a polymer having a basic functional group in addition to the polymer having an acidic functional group.

Containing a polymer having a basic functional group in addition to the polymer having an acidic functional group, the composite polymer membrane forms multiple acid-base complexes between the phosphonic acid groups and the basic functional groups; not basically containing a low-molecular-weight electrolyte, the membrane exhibits suppressed elution of the polyelectrolyte (the polymer having an acidic functional group), the polymer having a basic functional group, and the low-molecular-weight electrolyte into water, and exhibits accelerated proton release from the acidic functional groups, thus producing good conductivity of 1.0 × 10⁻³ S/cm or higher.

The polymer having a basic functional group preferably has a glass transition temperature of 300°C or lower, 200°C or lower, and 100°C or lower, and more preferably 80°C or lower, still more preferably 60°C or lower, and particularly preferably 50°C or lower.

In the present specification, unless otherwise specified, the glass transition temperature (Tg) is a value determined in accordance with JIS K 7121:2012, based on a DSC curve obtained by performing measurement at a temperature increase rate of 10°C/min.

If the glass transition temperature (Tg) is difficult to determine with a DSC curve, the glass transition temperature (Tg) can also be determined as a peak value of the loss tangent (tanδ) in dynamic mechanical analysis (DMA).

The polymer having a basic functional group is preferably a polymer having a basic functional group composed of at least one member selected from the group consisting of an amino group, an imino group, a pyridyl group, an imidazolyl group, a pyrazolyl group, a pyrrolyl group, and a triazolyl group.

The polymer having a basic functional group is preferably a block copolymer having at least a c-d type unit wherein a block c and a block d are covalently linked. The block c is composed of a hydrophobic polymer or water-repellent polymer. The block d is composed of a polymer having at least one basic functional group selected from the group consisting of an amino group, an imino group, a pyridyl group, an imidazolyl group, a pyrazolyl group, a pyrrolyl group, and a triazolyl group.

The polymer having a basic functional group preferably has 5 or more, more preferably 10 or more, and still more preferably 15 or more basic functional groups.

The polymer having a basic functional group more preferably has a glass transition temperature of 100°C or lower and has five or more basic functional groups composed of at least one member selected from the group consisting of an amino group, an imino group, a pyridyl group, an imidazolyl group, a pyrazolyl group, a pyrrolyl group, and a triazolyl group.

The polymer having a basic functional group is more preferably a block copolymer having at least a c-d type unit wherein a block c and a block d are covalently linked. The block c is composed of a hydrophobic polymer or water-repellent polymer. The block d is composed of a polymer having five or more basic functional groups composed of at least one member selected from the group consisting of an amino group, an imino group, a pyridyl group, an imidazolyl group, a pyrazolyl group, a pyrrolyl group, and a triazolyl group.

The polymer having a basic functional group still more preferably has a glass transition temperature of 100°C or lower, and contains five or more monomer units having a basic functional group, the monomer units being composed of at least one member selected from the group consisting of ethyleneimine, allylamine, vinylamine, vinylpyridine, 2-vinylpyridine, vinylimidazole, vinylpyrazole, and vinylpyrrole.

The polymer having a basic functional group is still more preferably a block copolymer having at least a c-d type unit wherein a block c and a block d are covalently linked. The block c is composed of a hydrophobic polymer or water-repellent polymer. The block d is composed of a polymer having five or more monomer units composed of at least one member selected from the group consisting of ethyleneimine, allylamine, vinylamine, vinylpyridine, 2-vinylpyridine, vinylimidazole, vinylpyrazole, vinylpyrrole, and vinyltriazole.

The polymer having a basic functional group is still more preferably a block copolymer having at least a c-d type unit wherein a block c and a block d are covalently linked. The block c is composed of a hydrophobic polymer or water-repellent polymer. The block d is composed of a polymer composed of at least one member selected from the group consisting of polyethyleneimine, polyallylamine, polyvinylamine, polyvinylpyridine, poly(2-vinylpyridine), polyvinylimidazole, polyvinylpyrazole, polyvinylpyrrole, and polyvinyltriazole.

The polymer having a basic functional group is still more preferably polyethylenimine (EI), polyallylamine (aAm, Tg (DSC): for example, about 30°C), polyvinylamine, polyvinylpyridine (VP), poly(2-vinylpyridine) (2VP, Tg (DSC): for example, about 100°C), polybenzimidazole, polybenzoxazole, polybenzthioazol, polyindole, polyquinoline, polyvinylimidazole, dialkylamine-ammonia-epichlorohydrin polycondensates, such as dimethylamine-ammonia-epichlorohydrin polycondensate, dialkylamine-epichlorohydrin polycondensates, such as dimethylamine-epichlorohydrin polycondensate, or the like.

The polymer that constitutes the block c is preferably a hydrophobic polymer or water-repellent polymer, and can be the hydrophobic polymer or water-repellent polymer that constitutes the block a, as described in section [3] Block Copolymer.

The molecular weight of the polymer having a basic functional group is preferably 200 or more, 500 or more, or 1,000 or more, and more preferably 2,000 or more, 5,000 or more, 10,000 or more, 20,000 or more, 40,000 or more, or 80,000 or more.

For the molecular weight of the polymer having a basic functional group, the number average molecular weight (Mn) can be determined by gel permeation chromatography (GPC) using standard polystyrene for molecular weight calibration.

In the composite polymer membrane according to the present invention, (2) the polymer having a basic functional group may be a polymer having a cationic functional group based on the basic functional group. Some of the basic functional groups are quaternized by an organic halogen compound to produce cations, and the polymer thus has cationic functional groups based on basic functional groups.

In the composite polymer membrane according to the present invention, the cationic functional groups based on basic functional groups account for at least 10 mol% of the basic functional groups.

In the composite polymer membrane according to the present invention, the organic halogen compound has an alkyl halide moiety.

In the compound having an alkyl halide moiety, the alkyl halide is represented by CₙH₂ₙ₊₁-X (wherein n represents a natural number, and X represents F, Cl, Br, or I), and the compound having an alkyl halide moiety is a compound represented by R-CₙH₂ₙ-X (R represents any organic functional group, n represents a natural number, and X represents F, Cl, Br, or I), and particularly preferably an alkyl halide.

The composite polymer membrane according to the present invention comprises
a polymer having an anionic group based on an acidic functional group, and
a polymer having a cationic functional group based on a basic functional group,
the polymer having an anionic group based on an acidic functional group being obtained by forming a composite of (1) the polymer having an acidic functional group and the polymer having a cationic functional group based on a basic functional group to ionize (1) the polymer having an acidic functional group to release a proton from the acidic functional group, thereby forming an anionic functional group, and allowing a low-molecular-weight acid composed of a counter anion of the cationic functional group of the polymer having the cationic functional group based on the basic functional group and the proton to exit from the membrane,
   wherein
the composite polymer membrane produces a conductivity of 1.0 × 10⁻³ S/cm or higher.

### An embodiment of a composite polymer membrane

The composite polymer membrane contains (1) a polymer having an acidic functional group and (2) a polymer having a basic functional group.

An embodiment of the composite polymer membrane is represented by the following chemical formula.

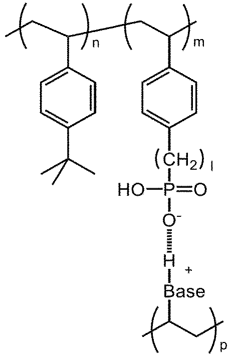

When the composite polymer membrane contains a block copolymer, the equivalent weight EW (100 to 400) of the polymer constituting the block b roughly corresponds to the molecular weight of the monomer. Thus, the composite polymer membrane has a high ion cluster formation capacity.

The composite polymer membrane shows no significant change in conductivity before and after immersion in water. The composite polymer membrane does not show a decrease in conductivity by 25% or higher before and after immersion in water. The composite polymer membrane does not show a difference in conductivity by 25% or higher when immersed in water at 20°C to 70°C, for example, 60°C for 1 hour as compared with the membrane that is not immersed in water. The degree of change in conductivity before and after immersion in water, including errors, is preferably 25% or lower, more preferably 15% or lower, and still more preferably 5% or lower.

After being immersed in water, the composite polymer membrane achieves a conductivity of 1.0 × 10⁻³ S/cm or higher under appropriate conditions of (e.g., at 20°C and 70°C) 60°C to 150°C and 0% RH to 100% RH without eluting the polymer and low-molecular-weight electrolyte.

After being immersed in water at 20°C to 70°C, for example, water at 60°C for 1 hour, the composite polymer membrane elutes substantially no eluate from the membrane. The amount of the material eluted from the membrane into water is preferably 25 mass% or lower, more preferably 15 mass% or lower, and still more preferably 5 mass% or lower.

In the composite polymer membrane, the block copolymer (block polymer) is composed of a polymer obtained by linking at least a polymer a and a polymer b via at least one covalent bond, and can be produced, for example, by solvent casting and further by press molding.

In the composite polymer membrane, a microscopic-scale phase separation occurs within the block polymer membrane between the phase that has formed an ion channel derived from the phosphonic acid groups of the polymer b and the hydrophobic phase that is formed from the polymer a and that maintains mechanical strength. For this reason, moderately humidifying the block polymer membrane allows protons to hop over anions formed due to detachment of protons from the phosphonic acid groups and water molecules in the ion-conducting channel, and this enables the composite polymer membrane to develop good proton conductivity, such as a conductivity of 1.0 × 10⁻³ S/cm or higher under appropriate conditions of 60°C to 150°C and 0% RH to 100% RH.

The composite polymer membrane exhibits conductivity even at 100°C or higher under humidified conditions or low humidification conditions, and is usable, in particular, as a polyelectrolyte membrane for polymer electrolyte fuel cells.

In the composite polymer membrane, a membrane of the block polymer or a membrane obtained by mixing the block polymer with the hydrophobic polymer a (homopolymer) may be impregnated with a non-volatile acid (e.g., phosphoric acid), which is a proton donor of a low-molecular-weight electrolyte. Doing so enables the membrane to develop good proton conductivity (e.g., a conductivity of 1.0 × 10⁻³ S/cm or higher), for example, at 100°C or higher without humidification.

The proton conductivity to be developed may be 1.0 × 10⁻³ S/cm or higher, 2.0 × 10⁻³ S/cm or higher, 3.0 × 10⁻³ S/cm or higher, 5.0 × 10⁻³ S/cm or higher, 7.0 × 10⁻³ S/cm or higher, 1.0 × 10⁻² S/cm or higher, 2.0 × 10⁻² S/cm or higher, 3.0 × 10⁻² S/cm or higher, 5.0 × 10⁻² S/cm or higher, 7.0 × 10⁻² S/cm or higher, 1.0 × 10⁻¹ S/cm or higher.

The composite polymer membrane is useful as an electrolyte membrane.

The composite polymer membrane is usable at a temperature of 100°C or higher and can be suitably used in fuel cells.

### Operating Temperature and Operating Humidity for Composite Polymer Membrane

The composite polymer membrane according to the present invention is usable at a temperature within the medium temperature range of 100°C to 200°C.

The operating temperature for the composite polymer membrane is the temperature at which a proton-conducting membrane is used, and is preferably room temperature or higher, more preferably 50°C or higher, 60°C or higher, 70°C or higher, 80°C or higher, 90°C or higher, or in some cases, 100°C or higher. The operating temperature for the composite polymer membrane is, in some cases, 200°C or lower, 150°C or lower, 140°C or lower, 130°C or lower, 120°C or lower, and 110°C or lower.

The composite polymer membrane exhibits a high proton conductivity even under conditions of 100°C or higher and no humidification (e.g., 125°C). The composite polymer membrane can be used, in particular, at a temperature within the medium temperature range of 100°C to 150°C without humidification, and can be used in fuel cells without humidification.

The composite polymer membrane can be used, for example, at 80°C and 60% RH, or at 80°C and 80% RH. The composite polymer membrane exhibits conductivity at 100°C or higher with humidification, and can be used, in particular, as a polyelectrolyte membrane for polymer electrolyte fuel cells.

Moderately humidifying a block polymer membrane containing no non-volatile acid, which is a proton donor, allows protons to hop over anions formed due to detachment of protons from the phosphonic acid groups or water molecules in the ion channel and thus enables the composite polymer membrane to exhibit good proton conductivity.

The polymer having an acidic functional group may or may not be a vinyl-based polymer based on a vinyl monomer (CH₂=CH-R wherein R represents a substituent).

The polymer having an acidic functional group that constitutes a composite polymer membrane may be a homopolymer or random copolymer having an acidic functional group. The generalized chemical structural formula (chemical structural formula including A-H (Acid)) for these polymers is shown below.

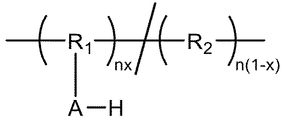

### (A-H: acidic functional group, n≥1, 0<x≤1)

The polymer having an acidic functional group that constitutes a composite polymer membrane may be a block copolymer (a block polymer) having an acidic functional group. The generalized chemical structural formula (chemical structural formula including A-H (Acid)) for these polymers is shown below.

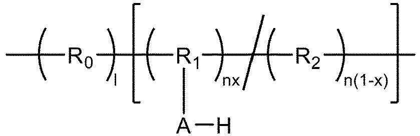

### (A-H: acidic functional group, l≥1, n≥1, 0<x≤1)

In the chemical structural formulas generalizing homopolymers, random copolymers, and block polymers each having an acidic functional group, A-H (Acid) represents an acidic functional group, such as sulfonic acid or phosphonic acid.

In the chemical structural formulas generalizing homopolymers, random copolymers, and block polymers each having an acidic functional group, n represents the overall degree of polymerization of the polymer having an acidic functional group.

In the chemical structural formulas generalizing homopolymers, random copolymers, and block polymers each having an acidic functional group, x represents the percentage of the monomer unit having an acidic functional group.

In the chemical structural formulas generalizing homopolymers, random copolymers, and block polymers each having an acidic functional group, (1-x) represents the percentage of the monomer unit that does not have an acidic functional group.

In the chemical structural formulas generalizing homopolymers, random copolymers, and block polymers each having an acidic functional group, a smaller percentage (1-x) of R₂ is preferred, and the percentage x of R₁ is preferably 100%. For example, if the percentage (1-x) of R₂ is 0%, a homopolymer of R₁ results.

In the chemical structural formulas generalizing homopolymers, random copolymers, and block polymers each having an acidic functional group, R₁ represents the main chain structure of the monomer unit having an acidic functional group. When -R₁ (A-H (Acid))- represents a vinyl phosphonic acid unit, R₁ is -CH₂-CH-. When -R₁(A-H (Acid))- represents a styrene phosphonic acid unit, R₁ is -CH₂-CH(C₆H₄)-.

In the chemical structural formulas generalizing homopolymers, random copolymers, and block polymers each having an acidic functional group, R₂ represents a monomer unit that does not have an acidic functional group. The monomer unit that does not have an acidic functional group represented by R₂ (e.g., styrene-CH₂-CH(C₆H₅)-, acrylate-CH₂-CH(COOR)-) may be one type alone or a combination of two or more types.

In the chemical structural formulas generalizing homopolymers, random copolymers, and block polymers each having an acidic functional group, the monomer unit having an acidic functional group may have one or more acidic functional groups.

In the chemical structural formulas generalizing homopolymers, random copolymers, and block polymers each having an acidic functional group, R₀ represents a monomer unit of a hydrophobic polymer or water-repellent polymer, and may be two or more monomer units.

In the chemical structural formulas generalizing homopolymers, random copolymers, and block polymers each having an acidic functional group, l represents the degree of polymerization of the monomer unit of a hydrophobic polymer or water-repellent polymer.

In the chemical structural formulas generalizing homopolymers, random copolymers, and block polymers each having an acidic functional group, a slash "/" on a hyphen "-" means that the monomer unit on one side and the monomer unit on the other side with respect to the "/" are randomly connected. A "-" alone means that the polymers on both sides are connected in a block manner.

The polymer having a basic functional group that constitutes a composite polymer membrane may be a homopolymer or random copolymer having a basic functional group. The generalized chemical structural formula (chemical structural formula including Z (Base)) of these polymers is shown below.

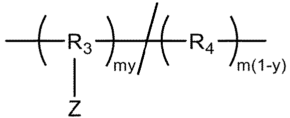

### (Z: basic functional group, m≥1, 0<y≤1)

The polymer having a basic functional group that constitutes a composite polymer membrane may be a homopolymer or random copolymer having a basic functional group and a cationic functional group. The generalized chemical structural formula (chemical structural formula including Z (Base)) for these polymers is shown below. 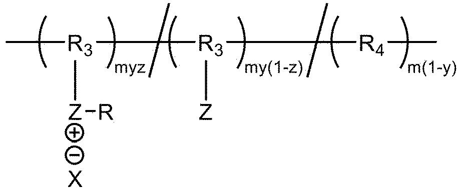
(Z: basic functional group, m≥1, 0<y≤1,
(+) Z-R: cationic functional group formed of an organic group attached to a basic functional group,
R: organic group (alkyl group, benzyl group, etc.)
X(-): counter anion of a cationic functional group)

The polymer having a basic functional group that constitutes a composite polymer membrane may be a block polymer having a basic functional group. The generalized chemical structural formula (chemical structural formula including Z (Base)) for these polymers is shown below.

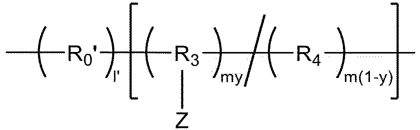

### (Z: basic functional group, l'≥1, m≥1, 0<y≤1)

The polymer having a basic functional group that constitutes a composite polymer membrane may be a block polymer having a basic functional group and a cationic functional group. The generalized chemical structural formula (chemical structural formula including Z (Base)) for these polymers is shown below. 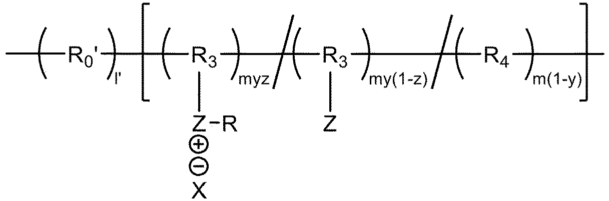
(Z: basic functional group, l'≥1, m≥1, 0<y≤1,
(+) Z-R: cationic functional group formed of an organic group attached to a basic functional group,
R: organic group (alkyl group, benzyl group, etc.)
X(-): counter anion of a cationic functional group)

In the chemical structural formulas generalizing homopolymers, random copolymers, and block polymers each having a basic functional group, Z (Base) represents a basic functional group, such as amine, imine, pyridine, imidazole, pyrazole, pyrrole, and triazole.

In the chemical structural formulas generalizing homopolymers, random copolymers, and block polymers each having a basic functional group, m represents the overall degree of polymerization of the polymer having a basic functional group.

In the chemical structural formulas generalizing homopolymers, random copolymers, and block polymers each having a basic functional group, y represents the percentage of the monomer unit having a basic functional group.

In the chemical structural formulas generalizing homopolymers, random copolymers, and block polymers each having a basic functional group, (1-y) represents the percentage of the monomer unit that does not have a basic functional group.

In the chemical structural formulas generalizing homopolymers, random copolymers, and block polymers each having a basic functional group, R₃ represents the main chain structure of the monomer unit having a basic functional group.

In the chemical structural formulas generalizing homopolymers, random copolymers, and block polymers each having a basic functional group, R₄ represents a monomer unit that does not have a basic functional group.

In the chemical structural formulas generalizing homopolymers, random copolymers, and block polymers each having a basic functional group, the monomer unit having a basic functional group may have one or more basic functional groups.

In the chemical structural formulas generalizing homopolymers, random copolymers, and block polymers each having a basic functional group, R₀' represents the monomer unit of a hydrophobic polymer or water-repellent polymer, and may be two or more monomer units.

In the chemical structural formulas generalizing homopolymers, random copolymers, and block polymers each having a basic functional group, l' represents the degree of polymerization of the monomer unit of a hydrophobic polymer or water-repellent polymer.

In the chemical structural formulas generalizing homopolymers, random copolymers, and block polymers each having a basic functional group, a slash "/" on a hyphen "-" means that the monomer unit on one side and the monomer unit on the other side with respect to the "/" are randomly connected. A "-" alone means that the polymers on both sides are connected in a block manner.

Because the composite polymer membrane has multiple acid-base complexes per molecule of a polymer (homopolymer, random copolymer, and block polymer) having an acidic functional group and per molecule of a polymer (homopolymer, random copolymer, and block polymer) having a basic functional group, the composite polymer membrane can achieve high conductivity (e.g., under low-humidified conditions) while decreasing the elution of polymers and other substances from the composite polymer membrane.

The mixture of (1) a polymer having an acidic functional group and (2) a polymer having a basic functional group, which forms a composite polymer membrane, is referred to as a "composite polymer."

The specific form of the composite polymer membrane according to the present invention and its chemical structural formula are shown below.

The composite polymer membrane according to the present invention encompasses a combination of a polymer (a random polymer or homopolymer) having an acidic functional group and a polymer (a random polymer or homopolymer) having a basic group.

### Composite polymer membrane composed of a homopolymer or random copolymer having an acidic functional group and a homopolymer or random copolymer having a basic functional group

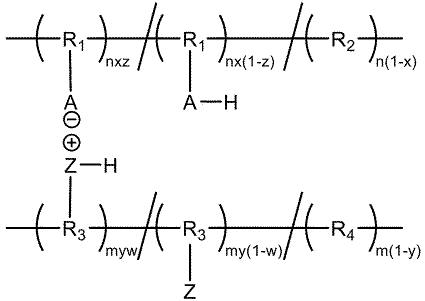

(A-H: acidic functional group, n≥1, 0<x≤1, 0<z≤1,
Z: basic functional group, m≥1, 0<y≤1, 0<w≤1,
A (-): anionic functional group formed due to release of a proton (H (+)) from an acidic functional group,
(+)Z-H: cationic functional group formed of a proton attached to a basic functional group,
A(-) (+)Z-H: acid-base complex composed of an acidic functional group and a basic functional group (ion pair composed of an acid-base itself)

### Composite polymer membrane composed of a homopolymer or random copolymer having an acidic functional group and a homopolymer or random copolymer having a basic functional group and a cationic functional group (the volatile acid HX is removed from the system by coming into contact with liquid water or by humidification)

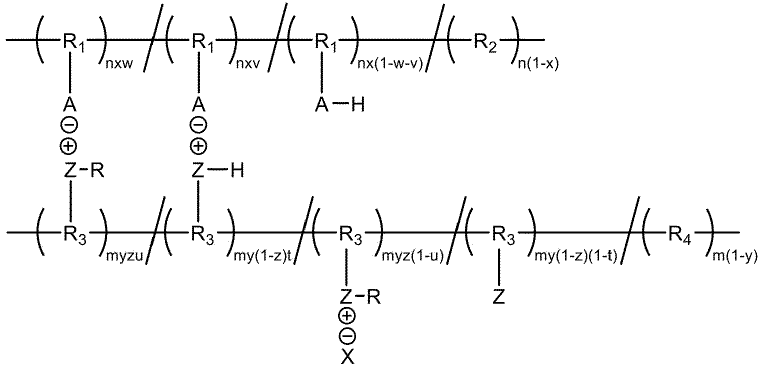

(A-H: acidic functional group, n≥1, 0<x≤1, 0<z≤1,
Z: basic functional group, m≥1, 0<y≤1, 0<w≤1,
0<t≤ 1, 0<u≤ 1, 0<v≤1, v+w = 1,
A (-): anionic functional group formed due to release of a proton (H (+)) from an acidic functional group,
(+) Z-H: cationic functional group formed of a proton attached to a basic functional group,
A (-) (+)Z-H: acid-base complex composed of an acidic functional group and a basic functional group (ion pair composed of an acid-base itself)
A (-) (+)Z-R: ion pair composed of an anionic functional group and a cationic functional group)

The composite polymer membrane according to the present invention encompasses a combination of a block copolymer (a graft copolymer including a star copolymer) containing a polymer (a random polymer or homopolymer) having an acidic functional group with a polymer (a random polymer or homopolymer) having a basic group.

### Composite polymer membrane composed of a block polymer having an acidic functional group and a homopolymer or random copolymer having a basic functional group

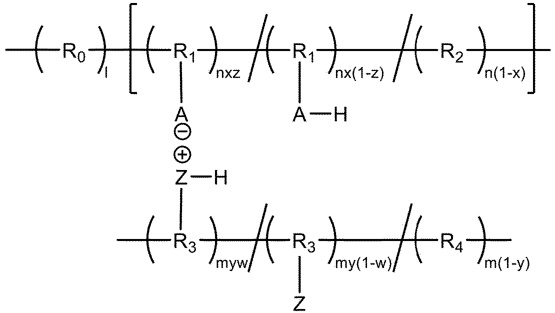

(A-H: acidic functional group, n≥1, 0<x≤1, l≥1, 0<z≤1,
Z: basic functional group, m≥1, 0<y≤1, 0<w≤1,
A(-): anionic functional group formed due to release of a proton (H (+)) from an acidic functional group,
(+)Z-H: cationic functional group formed of a proton attached to a basic functional group,
A(-) (+)Z-H: acid-base complex composed of an acidic functional group and a basic functional group (ion pair composed of an acid-base itself)

### Composite polymer membrane composed of a block polymer having an acidic functional group and a homopolymer or random copolymer having a basic functional group and a cationic functional group (volatile acid HX is removed from the system by coming into contact with liquid water or by humidification)

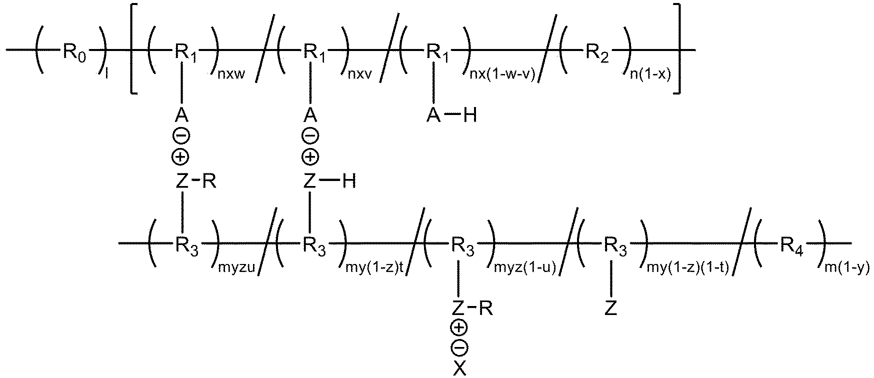

(A-H: acidic functional group, n≥1, 0<x≤1, 0<z≤1,
Z: basic functional group, m≥1, 0<y≤1, 0<w≤1,
0<t≤1, 0<u≤1, 0<v≤1, v+w = 1,
A(-): anionic functional group formed due to release of a proton (H (+)) from an acidic functional group,
(+)Z-H: cationic functional group formed of a proton attached to a basic functional group,
A(-)(+)Z-H: acid-base complex composed of an acidic functional group and a basic functional group (ion pair composed of an acid-base itself),
A(-)(+)Z-R: ion pair composed of an anionic functional group and a cationic functional group)

The composite polymer membrane according to the present invention encompasses a combination of a polymer (a random polymer or homopolymer) having an acidic functional group with a block copolymer (a graft copolymer including a star copolymer) containing a polymer (a random polymer or homopolymer) having a basic group.

### Composite polymer membrane composed of a homopolymer or random copolymer having an acidic functional group and a block polymer having a basic functional group

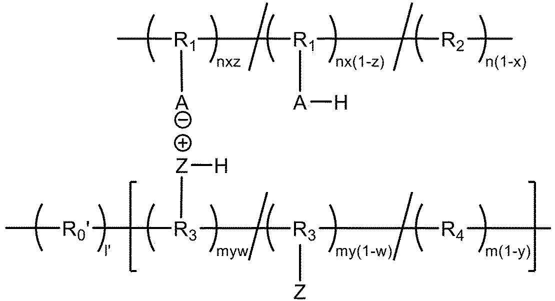

(A-H: acidic functional group, n≥1, 0<x≤1, 0<z≤1,
Z: basic functional group, m≥1, 0<y≤1, 1'≥1, 0<w≤1,
A(-): anionic functional group formed due to release of a proton (H (+)) from an acidic functional group,
(+)Z-H: cationic functional group formed of a proton attached to a basic functional group,
A(-)(+)Z-H: acid-base complex composed of an acidic functional group and a basic functional group (ion pair composed of an acid-base itself)

### Composite polymer membrane composed of a homopolymer or random copolymer having an acidic functional group and a block polymer having a basic functional group and a cationic functional group (volatile acid HX is removed from the system by coming into contact with liquid water or by humidification)

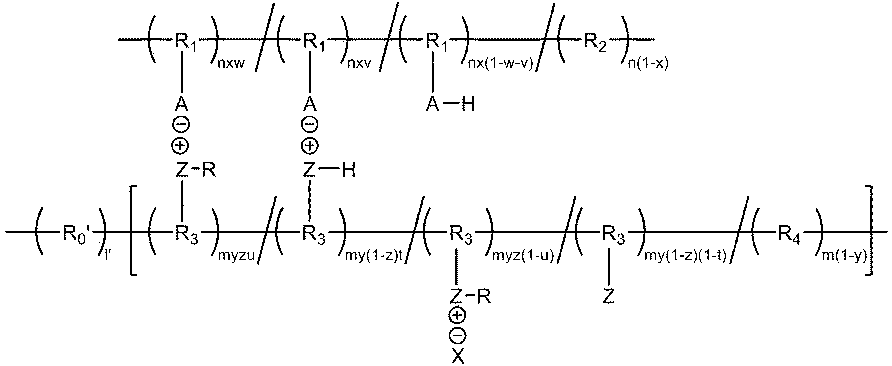

(A-H: acidic functional group, n≥1, 0<x≤1, 0<z≤1,
Z: basic functional group, m≥1, 0<y≤1, 0<w≤1,
0<t≤1, 0<u≤1, 0<v≤1, v+w = 1,
A(-): anionic functional group formed due to release of a proton (H (+)) from an acidic functional group,
(+)Z-H: cationic functional group formed of a proton attached to a basic functional group,
A(-) (+)Z-H: acid-base complex composed of an acidic functional group and a basic functional group (ion pair composed of an acid-base itself),
A(-) (+)Z-R: ion pair composed of an anionic functional group and a cationic functional group)

The composite polymer membrane according to the present invention encompasses a combination of a block copolymer (a graft copolymer including a star copolymer) containing a polymer (a random polymer or homopolymer) having an acidic functional group and a block copolymer (a graft copolymer including a star copolymer) containing a polymer (a random polymer or homopolymer) having a basic group.

### Composite polymer membrane composed of a block polymer having an acidic functional group and a block polymer having a basic functional group

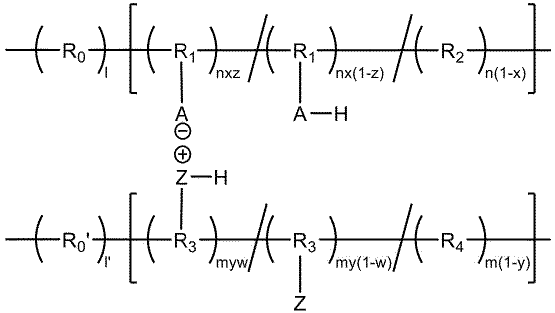

(A-H: acidic functional group, n≥1, 0<x≤1, l≥1, 0<z≤1,
Z: basic functional group, m≥1, 0<y≤1, 1'≥1, 0<w≤1,
A(-): anionic functional group formed due to release of a proton (H (+)) from an acidic functional group,
(+)Z-H: cationic functional group formed of a proton attached to a basic functional group,
A(-) (+)Z-H: acid-base complex composed of an acidic functional group and a basic functional group (ion pair composed of an acid-base itself),

### Composite polymer membrane composed of a block polymer having an acidic functional group and a block polymer having a basic functional group and a cationic functional group (volatile acid HX is removed from the system by coming into contact with liquid water or by humidification)

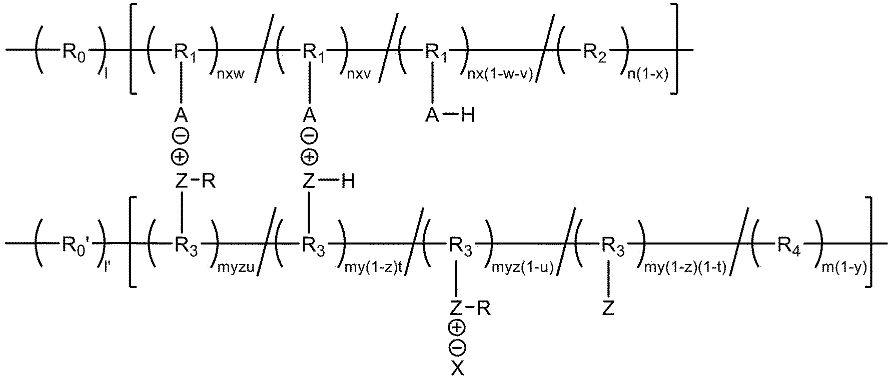

(A-H: acidic functional group, n≥1, 0<x≤1, 0<z≤1,
Z: basic functional group, m≥1, 0<y≤1, 0<w≤1,
0<t≤1, 0<u≤1, 0<v≤1, v+w = 1,
A(-): anionic functional group formed due to release of a proton (H (+)) from an acidic functional group,
(+)Z-H: cationic functional group formed of a proton attached to a basic functional group,
A(-) (+)Z-H: acid-base complex composed of an acidic functional group and a basic functional group (ion pair composed of an acid-base itself),
A(-) (+)Z-R: ion pair composed of an anionic functional group and a cationic functional group)

In the chemical structural formulas generalizing composite polymers, A-H (Acid) and Z (Base) are as described for the chemical structural formulas generalizing polymers having an acidic functional group and for the chemical structural formulas generalizing polymers having a basic functional group.

In the chemical structural formulas generalizing composite polymers, A-H(Acid) (-)(+) Z (Base), wherein A-H (Acid) and Z (Base) are paired, represents an acid-base complex. A-H (Acid) unpaired with Z (Base) is a free acidic functional group, which can release a proton that contributes to proton conductivity. Z (Base) unpaired with A-H (Acid) is a free basic functional group.

In the chemical structural formulas generalizing composite polymers, n, l, x, (1-x), R₁, R₂, and R₀ are as described for the chemical structural formulas generalizing polymers having an acidic functional group.

In the chemical structural formulas generalizing composite polymers, m, l', y, (1-y), R₃, R₄, and R₀' are as described for the chemical structural formulas generalizing polymers having a basic functional group.

In the chemical structural formulas generalizing composite polymers, z represents the percentage of acid-base complexes formed of acidic functional groups of the monomer units each having an acidic functional group and basic functional groups.

In the chemical structural formulas generalizing composite polymers, (1-z) represents the percentage of free acidic functional groups, which are some of the acidic functional groups of the monomer units each having an acidic functional group, not forming acid-base complexes with basic functional groups.

In the chemical structural formulas generalizing composite polymers, w represents the percentage of acid-base complexes formed of basic functional groups of the monomer units each having a basic functional group and acidic functional groups.

In the chemical structural formulas generalizing composite polymers, (1-w) represents the percentage of free basic functional groups, which are some of the basic functional groups of the monomer units each having a basic functional group, not forming acid-base complexes with acidic functional groups.

The polymer having an acidic functional group in the composite polymer membrane (II) (2) excludes polymers composed of a monomer unit having phosphonic acid via a spacer structure. The polymer having an acidic functional group in the composite polymer membrane (II) of the present invention excludes a polymer composed of a monomer unit having phosphonic acid (acidic functional group) on a side chain via a spacer structure, as described in [2] Polymer.

### Polymer having an acidic functional group

The polymer having an acidic functional group is preferably a hydrocarbon-based vinyl polymer that contains the acidic functional group in an amount of at least 0.70, at least 0.80, at least 0.90, preferably at least 0.95, and more preferably at least 0.98 in the monomer unit.

The polymer having an acidic functional group more preferably contains substantially 100 mol% of acidic functional groups in the monomer unit.

The polymer having an acidic functional group is preferably a hydrocarbon-based vinyl polymer and may contain the following in an amount of 50 mol% or lower: polystyrene, polyacetylstyrene, polyanisoylstyrene, polybenzoylstyrene, polybiphenylstyrene, polybromoethoxystyrene, polybromomethoxystyrene, polybromostyrene, polybutoxymethylstyrene, poly-tert-butylstyrene, polybutylstyrene, polychlorofluorostyrene, polychloromethylstyrene, polychlorostyrene, polycyanostyrene, polydichlorostyrene, polydifluorostyrene, polydimethylstyrene, polyethoxymethylstyrene, polyethoxystyrene, polyfluoromethylstyrene, polyfluorostyrene, polyiodostyrene, polymethoxycarbonylstyrene, polymethoxymethylstyrene, polymethylstyrene, polymethoxystyrene, polyperfluorostyrene, polyphenoxystyrene, polyphenylacetylstyrene, polyphenylstyrene, polypropoxystyrene, polytoluoylstyrene, and polytrimethylstyrene.

The acidic functional group on a side chain of a polymer having an acidic functional group is preferably an acidic functional group composed of at least one member selected from the group consisting of a sulfonic acid group and a phosphonic acid group.

The polymer having an acidic functional group may be prepared without deprotection or with deprotection. The polymer having an acidic functional group is, for example, obtained by polymerizing a monomer having a protecting group on an acidic functional group and then removing the protecting group, and is a polymer containing substantially one acidic functional group in the monomer unit. The polymer having an acidic functional group is, for example, a polymer obtained by deprotecting phosphonic acid ester to form a phosphonic acid group or a polymer obtained by deprotecting sulfonic acid ester to form a sulfonic acid group.

The polymer having an acidic functional group preferably contains a monomer unit having an acidic functional group composed of at least one member selected from the group consisting of 4-styrenesulfonic acid, vinylsulfonic acid, 4-styrenephosphonic acid, and vinylphosphonic acid (units).

The monomer unit having an acidic functional group in the polymer having an acidic functional group is preferably 50 mol% or higher, more preferably 70 mol% or higher, and still more preferably 90 mol% or higher. The polymer having an acidic functional group may be, for example, a random copolymer in which styrene phosphonic acid is present in an amount of about 90 mol% and another monomer is present in an amount of about 90 mol%.

The polymer having an acidic functional group is preferably a polymer having an acidic functional group composed of at least one member selected from the group consisting of poly(4-styrenesulfonic acid), polyvinylsulfonic acid, poly(4-styrenephosphonic acid), and polyvinylphosphonic acid.

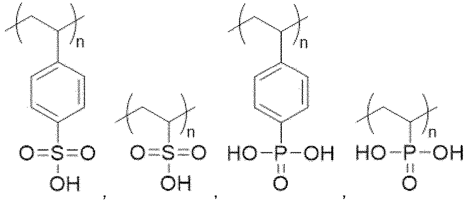

### Block copolymer (an example of a polymer having an acidic functional group)

The polymer having an acidic functional group may be in the form of a block copolymer having at least an a-b type unit in which a block a and a block b are covalently linked.

In the block copolymer, the block a is composed of a hydrophobic polymer or water-repellent polymer. The hydrophobic polymer is preferably a hydrophobic hydrocarbon-based vinyl polymer with a glass transition temperature (Tg, DSC measurement) of 100°C or higher.

In the block copolymer, the block b is a polymer having an acidic functional group composed of a polymer having an acidic functional group on a side chain. The acidic functional group is preferably composed of at least one member selected from the group consisting of a sulfonic acid group and a phosphonic acid group.

The block copolymer contains at least an a-b type unit in which a block a and a block b are covalently linked, and may further contain a block c as a third portion, a block d as a fourth portion etc.

The block copolymer includes copolymers with branched structures, such as graft copolymers and star copolymers.

Within a membrane composed of a block copolymer, the hydrophobic phase or water-repellent phase of a polymer a maintains mechanical strength, and a microscopic-scale phase separation occurs between this phase and the phase that has formed an ion channel derived from a polymer having a sulfonic acid group or phosphonic acid group, which is the acidic functional group of a polymer b. Moderately humidifying the composite polymer membrane allows protons to hop over anions formed due to detachment of protons from the sulfonic acid groups or phosphonic acid groups and water molecules in the ion-conducting channel composed of multiple sulfonic acids or phosphonic acids, resulting in development of good proton conductivity.

### Block a

The block a is composed of a hydrophobic polymer or a water-repellent polymer.

The block a exhibits mechanical strength at high temperatures (100°C or higher) when formed into a composite membrane.

The polymer that constitutes the block a is preferably a polymer with a glass transition temperature (Tg, DSC measurement) of 100°C or higher. The glass transition temperature (Tg, DSC measurement) of the polymer that constitutes the block a is more preferably 120°C or higher, and still more preferably 140°C or higher.

In the present specification, unless otherwise specified, the glass transition temperature (Tg) is a value determined in accordance with JIS K 7121:2012, based on a DSC curve obtained by performing measurement at a temperature increase rate of 10°C/min.

If the glass transition temperature (Tg) is difficult to determine with a DSC curve, the glass transition temperature (Tg) can also be determined as a peak value of the loss tangent (tanδ) in dynamic mechanical analysis (DMA).

The polymer that constitutes the block a is preferably a hydrophobic polymer or a hydrophobic hydrocarbon-based vinyl polymer with excellent chemical stability, more preferably an aromatic vinyl polymer, and still more preferably a polystyrene-based polymer.

The polystyrene-based polymer preferably includes polystyrene, polyacetylstyrene, polyanisoylstyrene, polybenzoylstyrene, polybiphenylstyrene, polybromoethoxystyrene, polybromomethoxystyrene, polybromostyrene, polybutoxymethylstyrene, poly-tert-butylstyrene, polybutylstyrene, polychlorofluorostyrene, polychloromethylstyrene, polychlorostyrene, polycyanostyrene, polydichlorostyrene, polydifluorostyrene, polydimethylstyrene, polyethoxymethylstyrene, polyethoxystyrene, polyfluoromethylstyrene, polyfluorostyrene, polyiodostyrene, polymethoxycarbonylstyrene, polymethoxymethylstyrene, polymethylstyrene, polymethoxystyrene, polyperfluorostyrene, polyphenoxystyrene, polyphenylacetylstyrene, polyphenylstyrene, polypropoxystyrene, polytoluoylstyrene, and polytrimethylstyrene.

The polymer that constitutes the block a may also be a water-repellent polymer. The water-repellent polymer is a polymer that has the property of repelling water droplets when water droplets are dropped on the surface of the polymer (water repellency), and preferably has a contact angle of 90° or more, and more preferably 100° or more.

The water-repellent polymer preferably includes a silicone compound and a fluorinated polymer.

The silicone compound is a compound having a siloxane bond (Si-O-Si), and preferably a polyorganosiloxane. Examples of polyorganosiloxanes include polydimethylsiloxane and polymethylphenylsiloxane. Polyorganosiloxanes may have a functional group such as an unsaturated bond and an amino group.

The fluorinated polymer is preferably a copolymer composed of a fluorinated (meth)acrylic compound. The fluorinated (meth)acrylic compound refers to a compound formed of a (meth)acrylic compound at least having some hydrogen atoms replaced with fluorine atoms, and examples include fluoroalkyl (meth)acrylates such as perfluoroalkyl (meth)acrylate, and N-alkyl perfluoroalkylsulfonamide alkyl (meth)acrylates such as N-methyl perfluorooctylsulfonamide ethyl (meth)acrylate.

### Block b

The block b is a polymer composed of a monomer unit having an acidic functional group on a side chain.

The acidic functional group is preferably composed of at least one member selected from the group consisting of a sulfonic acid group and a phosphonic acid group.

The polymer that constitutes the block b preferably contains a monomer unit having an acidic functional group composed of at least one member selected from the group consisting of 4-styrenesulfonic acid, vinylsulfonic acid, 4-styrenephosphonic acid, and vinylphosphonic acid.

### An Embodiment of the arrangement of a block copolymer

The block copolymer is a di-block copolymer containing at least an a-b type unit in which a block a and a block b are covalently linked.

An embodiment of the a-b type di-block copolymer is represented by the following chemical formulas.

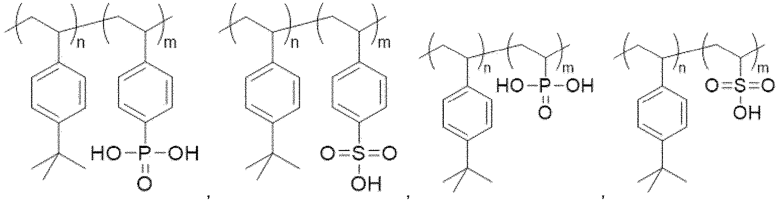

The average degree of polymerization (e.g., n in the above chemical formulas) of the block a (e.g., the poly(4-tert-butylstyrene) moiety in the above chemical formulas) is preferably an integer of 2 or greater, such as 2 or greater, 10 or greater, 30 or greater, 50 or greater, 100 or greater, 200 or greater, 500 or greater, 800 or greater, 1,000 or greater, 1,500 or greater, or 2,000 or greater. The average degree of polymerization of the block a is preferably 20,000 or less, 15,000 or less, 10,000 or less, 8,000 or less, 5,000 or less, or 4,000 or less.

The average degree of polymerization (e.g., m in the chemical formulas) of the block b (e.g., the polymer portion composed of a monomer unit containing a sulfonic acid group or a phosphonic acid group in the chemical formulas described above) is preferably an integer of 2 or greater, such as 2 or greater, 10 or greater, 30 or greater, 50 or greater, 100 or greater, 200 or greater, 500 or greater, 800 or greater, 1,000 or greater, 1,500 or greater, or 2,000 or greater. The average degree of polymerization of the block b is preferably 20,000 or less, 15,000 or less, 10,000 or less, 8,000 or less, 5,000 or less, or 4,000 or less.

The average degree of polymerization is determined by performing gel permeation chromatography (GPC) using standard polystyrene or according to ¹H-NMR, which compares the proton intensity of the initiator residues etc. with that of the polymer repeating unit.

### Polymer having a basic functional group

The composite polymer membrane contains a polymer having a basic functional group in addition to the polymer having an acidic functional group.

Containing a polymer having a basic functional group in addition to the polymer having an acidic functional group, the composite polymer membrane forms multiple acid-base complexes between the phosphonic acid groups or sulfonic acid groups and the basic functional groups; not basically containing a low-molecular-weight electrolyte, the membrane exhibits suppressed elution of the polyelectrolyte (the polymer having phosphonic acid groups or the polymer having sulfonic acid groups), the polymer having basic functional groups, and the low-molecular-weight electrolyte from the membrane into water, and exhibits accelerated proton release from the phosphonic acid groups or sulfonic acid groups, thus producing good conductivity of 1.0 × 10⁻³ S/cm or higher.

The polymer having a basic functional group has a glass transition temperature of preferably in the order of 300°C or lower, 250°C or lower, 200°C or lower, 150°C or lower, and 100°C or lower, and more preferably 80°C or lower, still more preferably 60°C or lower, and particularly preferably 50°C or lower.

In the present specification, unless otherwise specified, the glass transition temperature (Tg) is a value determined in accordance with JIS K 7121:2012, based on a DSC curve obtained by performing measurement at a temperature increase rate of 10°C/min.

If the glass transition temperature (Tg) is difficult to determine with a DSC curve, the glass transition temperature (Tg) can also be determined as a peak value of the loss tangent (tanδ) in dynamic mechanical analysis (DMA).

The polymer having a basic functional group is preferably a polymer having a basic functional group composed of at least one member selected from the group consisting of an amino group, an imino group, a pyridyl group, an imidazolyl group, a pyrazolyl group, a pyrrolyl group, and a triazolyl group.

The polymer having a basic functional group is preferably a block copolymer having at least a c-d type unit wherein a block c and a block d are covalently linked. The block c is composed of a hydrophobic polymer or water-repellent polymer. The block d is a polymer having a basic functional group composed of at least one member selected from the group consisting of an amino group, an imino group, a pyridyl group, an imidazolyl group, a pyrazolyl group, a pyrrolyl group, and a triazolyl group.

The polymer having a basic functional group preferably has 5 or more, more preferably 10 or more, and still more preferably 15 or more basic functional groups.

The polymer having a basic functional group more preferably has a glass transition temperature of 100°C or lower and has five or more basic functional groups composed of at least one member selected from the group consisting of an amino group, an imino group, a pyridyl group, an imidazolyl group, a pyrazolyl group, a pyrrolyl group, and a triazolyl group.

The polymer having a basic functional group is more preferably a block copolymer having at least a c-d type unit wherein a block c and a block d are covalently linked. The block c is composed of a hydrophobic polymer or water-repellent polymer. The block d is composed of a polymer having five or more basic functional groups composed of at least one member selected from the group consisting of an amino group, an imino group, a pyridyl group, an imidazolyl group, a pyrazolyl group, a pyrrolyl group, and a triazolyl group.

The polymer having a basic functional group still more preferably has a glass transition temperature of 100°C or lower, and contains five or more monomer units having a basic functional group composed of at least one member selected from the group consisting of ethyleneimine, allylamine, vinylamine, vinylpyridine, 2-vinylpyridine, vinylimidazole, vinylpyrazole, and vinylpyrrole.

The polymer having a basic functional group is still more preferably a block copolymer having at least a c-d type unit wherein a block c and a block d are covalently linked. The block c is composed of a hydrophobic polymer or water-repellent polymer. The block d is composed of a polymer having five or more monomer units composed of at least one member selected from the group consisting of ethyleneimine, allylamine, vinylamine, vinylpyridine, 2-vinylpyridine, vinylimidazole, vinylpyrazole, vinylpyrrole, and vinyltriazole.

The polymer having a basic functional group is still more preferably a block copolymer having at least a c-d type unit wherein a block c and a block d are covalently linked. The block c is composed of a hydrophobic polymer or water-repellent polymer. The block d is composed of a polymer composed of at least one member selected from the group consisting of polyethyleneimine, polyallylamine, polyvinylamine, polyvinylpyridine, poly(2-vinylpyridine), polyvinylimidazole, polyvinylpyrazole, polyvinylpyrrole, and polyvinyltriazole.

The polymer having a basic functional group is preferably polyethylenimine (EI), polyallylamine (aAm, Tg (DSC): e.g., about 30°C), polyvinylamine, polyvinylpyridine (VP), poly(2-vinylpyridine) (2VP, Tg (DSC): e.g., about 100°C), polyvinylimidazole, polyvinylpyrazole, polyvinylpyrrole, or the like.

The polymer that constitutes the block c is preferably a hydrophobic polymer or water-repellent polymer, and can be the hydrophobic polymer or water-repellent polymer that constitutes the block a, as described in section [3] Block Copolymer.

The molecular weight of the polymer having a basic functional group is preferably 200 or more, 500 or more, preferably 1,000 or more, and more preferably 2,000 or more, 5,000 or more, 10,000 or more, 20,000 or more, 40,000 or more, or 80,000 or more.

For the molecular weight of the polymer having a basic functional group, the number average molecular weight (Mn) can be determined by gel permeation chromatography (GPC) using standard polystyrene for molecular weight calibration.

In the composite polymer membrane according to the present invention, (2) the polymer having a basic functional group may be a polymer having a cationic functional group based on the basic functional group. Some of the basic functional groups are quaternized by an organic halogen compound to give rise to cations, and the polymer thus has cationic functional groups based on basic functional groups.

In the composite polymer membrane according to the present invention, cationic functional groups based on basic functional groups account for at least 10 mol% of the basic functional groups.

In the composite polymer membrane according to the present invention, the organic halogen compound has an alkyl halide moiety.

In the compound having an alkyl halide moiety, the alkyl halide is represented by CₙH₂ₙ₊₁-X (wherein n represents a natural number, and X represents F, Cl, Br, or I), and the compound having an alkyl halide moiety is a compound represented by R-CₙH₂ₙ-X (R represents any organic functional group, n represents a natural number, and X represents F, Cl, Br, or I), and particularly preferably an alkyl halide.

The composite polymer membrane according to the present invention comprises
a polymer having an anionic group based on an acidic functional group, and
a polymer having a cationic functional group based on a basic functional group,
the polymer having an anionic group based on an acidic functional group being obtained by forming a composite of (1) the polymer having an acidic functional group and the polymer having a cationic functional group based on a basic functional group to ionize (1) the polymer having an acidic functional group to release a proton from the acidic functional group, thereby forming an anionic functional group, and allowing a low-molecular-weight acid composed of a counter anion of the cationic functional group of the polymer having a cationic functional group based on the basic functional group and the proton to exit from the membrane,
   wherein
the composite polymer membrane produces a conductivity of 1.0 × 10⁻³ S/cm or higher.

### An embodiment of a composite polymer membrane

The composite polymer membrane contains (1) a polymer having an acidic functional group and (2) a polymer having a basic functional group.

An embodiment of the composite polymer membrane is a combination of (1) a polymer having an acidic functional group and (2) a polymer having a basic functional group as described below.

### (1) Polymer having an acidic functional group

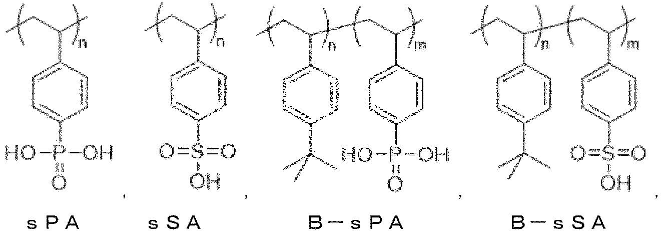

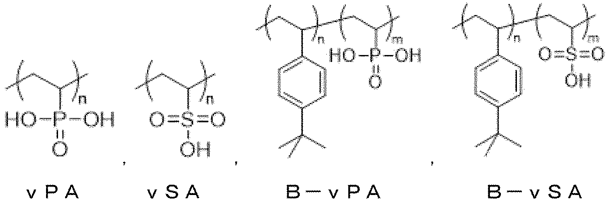

### (2) Polymer having a basic functional group

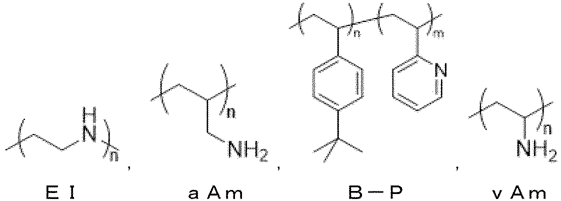

A preferred embodiment of the composite polymer membrane is a composite polymer membrane (electrolyte membrane) that is a combination of a polymer having an acidic functional group, such as poly(4-styrenephosphonic acid) (sPA) (a polymer having a phosphonic acid group), and a polymer having a basic functional group, such as polyethyleneimine (EI).

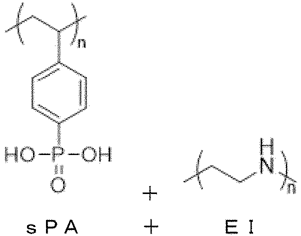

The composite polymer membrane has a high ion cluster formation capacity because the equivalent weight EW (100 to 400) of the polymer having an acidic functional group roughly corresponds to the molecular weight of the monomer.

The composite polymer membrane shows no significant change in conductivity before and after immersion in water. The composite polymer membrane does not show a decrease in conductivity before and after immersion in water by 25% or higher. The composite polymer membrane does not show a difference in conductivity by 25% or higher when immersed in water at 20°C to 70°C, for example, 60°C for 1 hour as compared with the membrane that is not immersed in water. The degree of change in conductivity before and after immersion in water, including errors, is preferably 25% or lower, more preferably 15% or lower, and still more preferably 5% or lower.

After being immersed in water, the composite polymer membrane achieves a conductivity of 1.0 × 10⁻³ S/cm or higher under appropriate conditions of (e.g., 20°C and 70°C) 60°C to 150°C and 0% RH to 100% RH without eluting the polymer and low-molecular-weight electrolyte.

After being immersed in water at 20°C to 70°C, for example, water at 60°C for 1 hour, the composite polymer membrane elutes substantially no eluate from the membrane. The amount of the material eluted from the membrane into water is preferably 25 mass% or lower, more preferably 15 mass% or lower, and still more preferably 5 mass% or lower.

The composite polymer membrane can be produced, for example, by solvent casting and further by press molding.

In the composite polymer membrane, there is a phase forming an ion channel derived from the phosphonic acid group or sulfonic acid group of the polymer having an acidic functional group. Moderately humidifying the composite polymer membrane allows protons to hop over anions formed due to detachment of protons from the phosphonic acid groups or sulfonic acid groups and water molecules in the ion-conducting channel, and this enables the composite polymer membrane to develop good proton conductivity, such as a conductivity of 1.0 × 10⁻³ S/cm or higher under appropriate conditions of 60°C to 150°C and 0% RH to 100% RH.

The composite polymer membrane exhibits conductivity even at 100°C or higher under humidified conditions or low-humidification conditions, and is usable, in particular, as a polyelectrolyte membrane for polymer electrolyte fuel cells.

The composite polymer membrane may be impregnated with a non-volatile acid (e.g., phosphoric acid), which is a proton donor of a low-molecular-weight electrolyte. Doing so enables the membrane to develop good proton conductivity (e.g., a conductivity of 1.0 × 10⁻³ S/cm or higher), for example, at 100°C or higher without humidification.

The proton conductivity to be developed may be 1.0 × 10⁻³ S/cm or higher, 2.0 × 10⁻³ S/cm or higher, 3.0 × 10⁻³ S/cm or higher, 5.0 × 10⁻³ S/cm or higher, 7.0 × 10⁻³ S/cm or higher, 1.0 × 10⁻² S/cm or higher, 2.0 × 10⁻² S/cm or higher, 3.0 × 10⁻² S/cm or higher, 5.0 × 10⁻² S/cm or higher, 7.0 × 10⁻² S/cm or higher, 1.0 × 10⁻¹ S/cm or higher.

The composite polymer membrane is useful as an electrolyte membrane.

The composite polymer membrane is usable at a temperature of 100°C or higher and can be suitably used in fuel cells.

### Operating Temperature and Operating Humidity for Composite Polymer Membrane

The composite polymer membrane is usable at a temperature within the medium temperature range of 100°C to 200°C.

The operating temperature for the composite polymer membrane is the temperature at which a proton-conducting membrane is used, and is preferably room temperature or higher, more preferably 50°C or higher, 60°C or higher, 70°C or higher, 80°C or higher, 90°C or higher, or in some cases, 100°C or higher. The operating temperature for the composite polymer membrane is, in some cases, 200°C or lower, 150°C or lower, 140°C or lower, 130°C or lower, 120°C or lower, and 110°C or lower.

The composite polymer membrane can be used, for example, at 80°C and 60% RH, or at 80°C and 80% RH. The composite polymer membrane exhibits conductivity at 100°C or higher with humidification, and can be used, in particular, as a polyelectrolyte membrane for polymer electrolyte fuel cells.

Moderately humidifying the composite polymer membrane allows protons released from acidic functional groups to hop over anions or water molecules in the ion channel and thus enables the composite polymer membrane to exhibit a good proton conductivity of 1.0 × 10⁻³ S/cm or higher.

The polymer having an acidic functional group may or may not be a vinyl-based monomer based on a vinyl polymer (CH₂=CH-R wherein R represents a substituent).

### Ionomer

The ionomer according to the present invention contains a composite polymer that constitutes the composite polymer membrane and can be used in forming a catalyst layer of polymer electrolyte fuel cells.

The mixture of (1) a polymer having an acidic functional group and (2) a polymer having a basic functional group, which forms a composite polymer membrane, is referred to as a "composite polymer."

The polymer and the composite polymer according to the present invention are usable not only as an electrolyte membrane but also as a proton-conducting polymer used in a catalyst layer, which is an "ionomer."

### Method for Producing Composite Polymer

### First Step

For example, a monomer having a protecting group (e.g., an ethyl group or an n-butyl group) on a phosphonic acid group (e.g., diethyl 4-(4-vinylphenyl)butylphosphonate) is synthesized as a phosphonic acid ester monomer having a space structure (preferably an alkyl spacer).

Alternatively, a monomer having a protecting group (e.g., an ethyl group) on a phosphonic acid group (e.g., diethyl 4-styrenephosphonate) is synthesized as a phosphonic acid ester monomer.

Alternatively, a monomer having a protecting group (e.g., n-butyl group) on a sulfonic acid group (e.g., n-butyl 4-styrenesulfonate) is synthesized as a sulfonic acid ester monomer.

### Second Step

Subsequently, the monomer is polymerized.

### Third Step

The resulting polymer (e.g., diethyl poly(4-(4-vinylphenyl)butylphosphonate)) is then deprotected by removing an alkyl protection group to synthesize poly(4-(4-vinylphenyl)butylphosphonic acid (also known as poly(4-(4-phosphonobutyl)styrene)), which is a phosphonic acid polymer having an alkyl spacer.

### Fourth Step

Subsequently, the resulting polymer (e.g., poly(4-(4-vinylphenyl)butylphosphonic acid)) is formed into a membrane to prepare a proton-conducting electrolyte membrane.

### Method for producing a block copolymer

The block copolymer containing a block a and a block b is preferably synthesized by addition polymerization, such as anionic polymerization, cationic polymerization, or radical polymerization.

### (1) Step of preparing a hydrophobic polymer or water-repellent polymer to produce a block a

A monomer to constitute a block a (e.g., a 4-tert-butylstyrene monomer as a hydrophobic polymer), an RAFT agent (reversible addition-fragmentation chain transfer agent), and a polymerization initiator are mixed to perform polymerization, followed by isolation and purification to synthesize a macro-RAFT agent containing a block a.

The RAFT agent (reversible addition-fragmentation chain transfer agent) is preferably a thiocarbonylthio compound, such as dithioesters, dithiocarbamates, trithiocarbonates, and xanthates.

The RAFT agent is preferably the following: 4-[(2-carboxyethylsulfanylthiocarbonyl)sulfanyl]-4-cyanopentanoic acid, 2-{[(2-carboxyethyl)sulfanylthiocarbonyl]sulfanyl}propanoic acid, 4-cyano-4-[(dodecylsulfanylthiocarbonyl)sulfanyl]pentanoic acid, 2-[(dodecylsulfanylthiocarbonyl)sulfanyl]propanoic acid, 2-(dodecylthiocarbonothioylthio)-2-methylpropanoic acid, methyl 2-(dodecylthiocarbonothioylthio)-2-methyl propionate, 2-(dodecylthiocarbonothioylthio)propionic acid, 2-(dodecylthiocarbonothioylthio)-2-methylpropanoic acid pentafluorophenyl ester, 2-(dodecylthiocarbonothioylthio)-2-methylpropionic acid 3-azide-1-propanol ester, 4-cyano-4-[(dodecylsulfanylthiocarbonyl)sulfanyl]pentanoic acid, methyl 4-cyano-4-[(dodecylsulfanylthiocarbonyl)sulfanyl]pentanoate, N-hydroxysuccinimidyl 2-(dodecylthiocarbonothioylthio)-2-methylpropionate, 3-[[(benzylthio)carbonothioyl]thio]propionic acid, 2-cyano-2-propyldodecyltrithiocarbonate, 4-cyano-4-(phenylcarbonothioylthio)pentanoic acid, cyanomethyl[3-(trimethoxysilyl)propyl]trithiocarbonate, 3-butenyl-2-(dodecylthiocarbonothioylthio)-2-methyl propane, phthalimide methylbutyltrithiocarbonate, 2-(2-carboxyethylsulfanylthiocarbonylsulfanyl)propionic acid, 4-((((2-carboxyethyl)thio)carbonothioyl)thio)-4-cyanopentanoic acid, 4-cyano-4-[(dodecylsulfanylthiocarbonyl)sulfanyl]pentanol, cyanomethyldodecyl trithiocarbonate, 1,4-phenylenebis(methylene) didodecylbis(carbonotrithioate), 1,4-phenylenebis(methylene) dibutylbis(carbonotrithioate), and 1,4-phenylenebis(methylene) dioctadecylbis(carbonotrithioate) .

A target arrangement of the block copolymer can be synthesized by selecting an RAFT agent as appropriate.

The polymerization initiator is preferably an azo radical polymerization initiator, a peroxide radical polymerization initiator, etc.

The polymerization initiator is preferably an azo radical polymerization initiator, such as azobisisobutyronitrile (AIBN), 2,2'-azobis(4-methoxy-2,4-dimethylvaleronitrile), 2,2'-azobis(2-cyclopropylpropionitrile), 2,2'-azobis(2,4-dimethylvaleronitrile), or dimethyl 2,2'-azobisisobutyrate.

The polymerization initiator is preferably a peroxide radical polymerization initiator, such as benzoyl peroxide, t-butyl hydroperoxide, or cumene hydroperoxide.

The solvent for use in synthesis and isolation generation is not particularly limited. The solvent is preferably a solvent that evaporates relatively easily. Examples of solvents for use include water, alcohol solvents, such as methanol and ethanol, and ether solvents, such as dimethyl ether, diethyl ether, and tetrahydrofuran.

The means for removing a solvent is not particularly limited. The means for removing a solvent is preferably evaporation at room temperature or evaporation by heating. The means for removing a solvent may additionally include drying or other operations as appropriate.

### (2) Step of polymerizing a block a with a monomer to constitute a block b having a phosphonic acid group protected by a protecting group on a side chain via a spacer structure to produce a block copolymer having an a-b type unit in which the block a and the block b are covalently linked

In the presence of a polymerization initiator, a macro-RAFT agent containing a block a is polymerized with a monomer to constitute a block b, having a phosphonic acid group protected by a protecting group (e.g., an n-butyl group) (e.g., diethyl 4-(4-vinylphenyl)butylphosphonate) to produce a block copolymer having an a-b type unit in which the block and the block b are covalently linked.

The solvent for use in synthesis and isolation generation is not particularly limited. The solvent is preferably a solvent that evaporates relatively easily. Examples of solvents for use include water, alcohol solvents, such as methanol and ethanol, and ether solvents, such as dimethyl ether, diethyl ether, and tetrahydrofuran.

The means for removing a solvent is not particularly limited. The means for removing a solvent is preferably evaporation at room temperature or evaporation by heating. The means for removing a solvent may additionally include drying or other operations as appropriate.

### (3) Step of removing the protecting group of the block b to produce a polymer having a phosphonic acid group in the monomer unit constituting the block b

Removing the protecting group of the block b with a basic solution (e.g., an aqueous sodium hydroxide solution) or bromotrimethylsilane (see Tetrahedron Letters 1977, 18, 155-158) produces a polymer having a phosphonic acid group on a side chain, on a monomer unit that constitutes the block b.

### Method for producing a composite polymer membrane

### Step of adding a polymer having a basic functional group in a composite polymer membrane

The composite polymer membrane contains (1) a polymer having an acidic functional group and (2) a polymer having a basic functional group.

The composite polymer membrane according to the present invention is prepared by mixing (1) a polymer having an acidic functional group with (2) a polymer having a basic functional group.

The composite polymer membrane of the present invention obtained by mixing a block copolymer (block polymer) with a polymer having a basic functional group forms multiple acid-base complexes between the phosphonic acid groups and basic functional groups and basically contains no low-molecular-weight electrolyte. Thus, the composite polymer membrane according to the present invention does not elute a low-molecular-weight electrolyte from the membrane into liquid water, and additionally exhibits suppressed elution of the polyelectrolyte (the polymer having a phosphonic acid group) and the polymer having a basic functional group from the membrane to liquid water, with accelerated proton release from the phosphonic acid groups, resulting in good conductivity of 1.0 × 10⁻³ S/cm or higher.

### Ratio of a polymer having an acidic functional group to a polymer having a basic functional group

In regards to the ratio of the polymer having an acidic functional group to the polymer having a basic functional group, the proportion of the polymer having an acidic functional group is preferably such that the proportion of basic functional groups is greater than the proportion of basic functional groups of the polymer having a basic functional group in terms of the molar ratio of acidic functional groups to basic functional groups, from the viewpoint of suppressed elution of the polyelectrolyte (a polymer having an acidic functional group) and the polymer having a basic functional group from the membrane into liquid water, accelerated release of protons from phosphonic acid groups, and development of good conductivity of 1.0 × 10⁻³ S/cm or higher.

In regards to the ratio of the polymer having an acidic functional group to the polymer having a basic functional group, the molar ratio of acidic functional groups to basic functional groups (acidic functional groups of the polymer having an acidic functional group):(basic functional groups of the polymer having a basic functional group) is preferably 50 to 99:50 to 1, more preferably 65 to 99:35 to 1, and still more preferably 80 to 99:20 to 1.

### Formation of Composite Polymer Membrane

When forming the composite polymer membrane according to the present invention in a membrane form, it is preferred to perform it according to casting, pressing, or other methods before removing the solvent.

When forming the composite polymer membrane according to the present invention in a membrane form, it is preferred to perform it according to a hot-melt method or the like.

### Film Thickness of Composite Polymer Membrane

Because the composite polymer membrane according to the present invention has excellent moldability and can be formed according to a hot-melt method, a solvent casting method, etc., the composite polymer membrane can be formed into a thinner membrane than conventional proton-conducting membranes.

The film thickness of the composite polymer membrane is preferably 1.00 mm or less, 0.90 mm or less, 0.80 mm or less, 0.75 mm or less, 0.73 mm or less, 0.72 mm or less, 0.71 mm or less, 0.70 mm or less, 0.68 mm or less, 0.65 mm or less, 0.60 mm or less, 0.55 mm or less, 0.50 mm or less 0.45 mm or less, 0.40 mm or less, 0.35 mm or less, 0.30 mm or less, 0.28 mm or less, 0.25 mm or less, 0.23 mm or less, or 0.20 mm or less.

### Proton Conductivity of Composite Polymer Membrane

The composite polymer membrane according to the present invention exhibits good proton conductivity in a non-humidified, low-humidified, or humidified environment.

The proton conductivity of the composite polymer membrane is preferably 0.0003 S/cm or higher, 0.0005 S/cm or higher, or 0.001 S/cm or higher in a low-humidified or humidified environment (e.g., a temperature of about 80°C to 150°C and a humidity of about 0% RH to 100% RH).

The conductivity to be produced may be 2.0 × 10⁻³ S/cm or higher, 3.0 × 10⁻³ S/cm or higher, 5.0 × 10⁻³ S/cm or higher, 7.0 × 10⁻³ S/cm or higher, 1.0 × 10⁻² S/cm or higher, 2.0 × 10⁻² S/cm or higher, 3.0 × 10⁻² S/cm or higher, 5.0 × 10⁻² S/cm or higher, 7.0 × 10⁻² S/cm or higher, or 1.0 × 10⁻¹ S/cm or higher. The conductivity may be determined according to the AC impedance method.

### Fuel Cell

The polymer having an acidic functional group and composite polymer for forming a composite polymer membrane according to the present invention are usable as an electrolyte membrane and also as a proton-conducting polymer, a so-called "ionomer," used in a catalyst layer.

The fuel cell according to the present invention contains the composite polymer membrane according to the present invention.

The fuel cell according to the present invention preferably contains a laminate in which a fuel-electrode-side separator with a fuel channel, a fuel-electrode-side catalyst layer, the proton-conducting membrane of the present invention, an air-electrode-side catalyst layer, and an air-electrode-side separator with an air channel are stacked in this order.

The fuel cell according to the present invention preferably contains a laminate in which a fuel-electrode-side separator with a fuel channel, a fuel-electrode-side gas diffusion layer, a fuel-electrode-side catalyst layer, the proton-conducting membrane of the present invention, an air-electrode-side catalyst layer, an air-electrode-side gas diffusion layer, and an air-electrode-side separator with an air channel are stacked in this order.

### Examples

The present disclosure is described below in more detail with reference to Examples.

However, the present disclosure is not limited thereto.

### [1] Example 1

### (1) Preparation of polyelectrolyte membrane (proton-conducting membrane)

In Example 1, according to Scheme-1 below, poly(4-tert-butylstyrene)-b-poly(n-butyl 4-styrenesulfonate) (also referred to below as "B-nBsS di-block copolymer") was synthesized as a block copolymer (First Step).

Subsequently, the ester-protecting group of the poly(n-butyl styrene sulfonate) block was removed for deprotection by hydrolysis to synthesize poly(4-tert-butylstyrene)-b-poly(4-styrenesulfonic acid) having a proton-donating group (also referred to below as "B-sSA di-block copolymer") (Second Step).

This B-sSA di-block copolymer was formed into a membrane to produce a proton-conducting membrane of Example 1 (also referred to below as "B-sSA membrane") (Third Step).

"B" in the term "B-sSA" is an abbreviation for poly(4-tert-butylstyrene). "B" is a hydrophobic block not having proton-accepting groups. At the operation temperature and humidity at which the proton-conducting electrolyte membrane is used, the hydrophobic blocks B aggregate together to form a domain in a glass state. That is, block B corresponds to the "block a" of the present invention.

"sSA" in the term "B-sSA" is an abbreviation for poly(4-styrenesulfonic acid). sSA is a polymer having a proton-donating group. That is, sSA refers to the "block b" of the present invention disclosure.

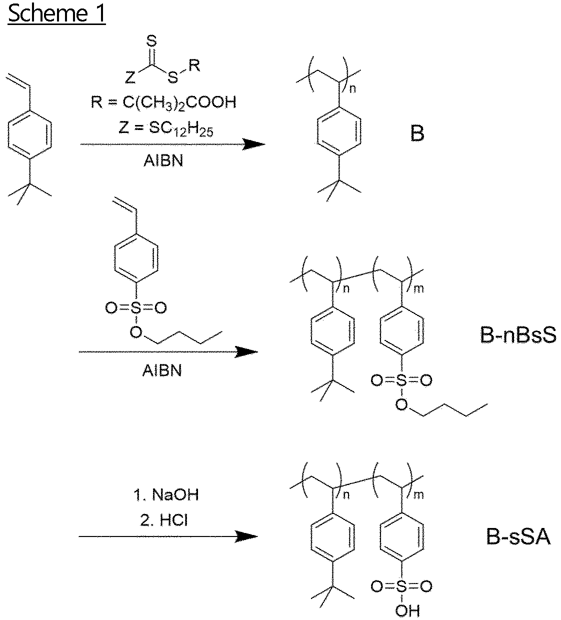

### (1-1) First step

### Step 1-1

A commercially available 4-tert-butylstyrene monomer was purified. Specifically, the unpurified 4-tert-butylstyrene monomer was passed through a column packed with basic alumina. The 4-tert-butylstyrene monomer was further purified by using an alkyl metal compound.

8.84 g (0.0552 mol) of the purified 4-tert-butylstyrene monomer, 269 mg (0.738 mmol) of an RAFT agent, 269 mg (0.738 mmol) of azobisisobutyronitrile (AIBN), and 8.70 g (0.0648 mol) of diethylbenzene (an isomer mixture) were individually weighed out and mixed in a round-bottom flask with a stopcock to prepare a solution.

The solution was bubbled with nitrogen gas for 30 minutes and polymerization was allowed to proceed with stirring at 500 rpm at atmospheric pressure at 130°C using an oil bath. After 2.5 hours, the flask was immersed in liquid nitrogen to thereby completely stop the polymerization reaction.

As the RAFT agent, 2-(dodecylthiocarbonothioylthio)-2-methylpropanoic acid was used.

Next, about 20 mL of tetrahydrofuran (THF) was added to the reaction solution to prepare a roughly 8 mass% polymer solution. This polymer solution was added dropwise to about 300 mL of methanol to precipitate a polymer in the form of a powder (crude poly(4-tert-butylstyrene)). After the obtained polymer was separated by suction filtration and fully dried by vacuum drying, the resulting polymer was dissolved again in THF and the solution was added dropwise to methanol to precipitate a polymer.

The operation of precipitating a polymer was performed 3 times in total and unreacted monomers and low-molecular-weight oligomers were removed to thereby obtain a purified poly(4-tert-butylstyrene). This purified poly(4-tert-butylstyrene) is also referred to below as "B-1."

Using deuterated chloroform, the average degree of polymerization of B-1 was estimated by proton nuclear magnetic resonance spectroscopy (¹H-NMR). The average degree of polymerization was 280 and the average molecular weight was about 45000.

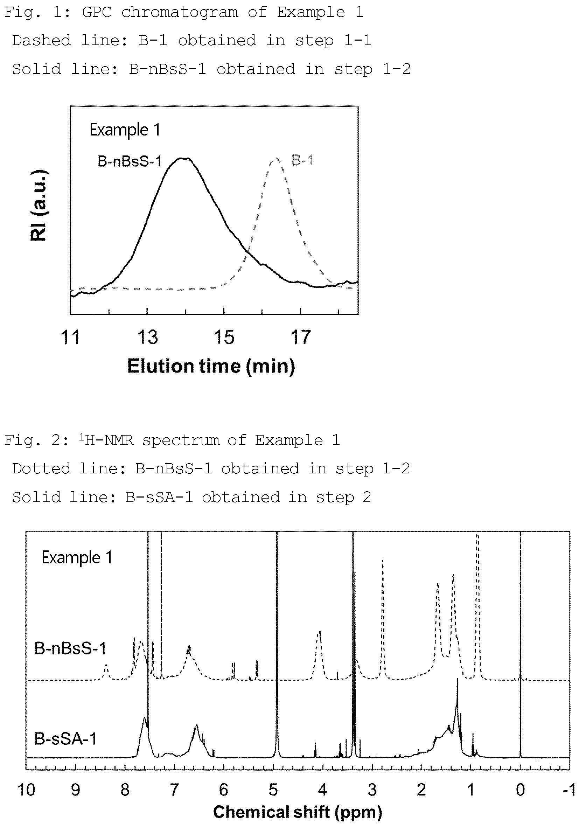

B-1 was dissolved in THF to prepare a roughly 0.1 mass% B-1 solution. The molecular weight distribution (Mw/Mn) was determined by gel permeation chromatography (GPC). The GPC chromatogram of B-1 is shown as a dashed line in Fig. 1.

For molecular weight calibration, standard polymethyl methacrylate was used.

Using a solvent mainly containing THF as the eluent, the measurement was performed at a flow rate of 1 mL/min at a temperature of 45°C, with two TSK-GEL columns α-M (produced by Tosoh Corporation) being connected.

### Step 1-2

The B-1 obtained above in step 1-1 has an RAFT agent residue introduced to an end of the molecular chain. Accordingly, using the B-1 as a macro RAFT agent (called a "macro RAFT agent" because it is an RAFT agent having a large molecular weight), polymerization with an n-butyl 4-styrenesulfonate monomer was performed.

The n-butyl 4-styrenesulfonate monomer was synthesized according to literature (Bull. Chem. Soc. Jpn., 1983, 56, 762-765; and Polymer, 2002, 43, 3155-3162).

The n-butyl 4-styrenesulfonate monomer was passed through a column packed with basic alumina to purify the monomer.

10.0 g (0.0417 mol) of the purified n-butyl 4-styrenesulfonate monomer, 0.229 g (0.00520 mmol) of the macro RAFT agent, 0.2 mg (0.001 mmol) of AIBN, 4.3 g of toluene, and 4.7 g of DMF were weighed out and mixed in a round-bottom flask with a stopcock to prepare a solution.

The solution was bubbled with nitrogen gas for 30 minutes, and polymerization was allowed to proceed with stirring at 500 rpm at atmospheric pressure at 85°C using an oil bath. After 4.5 hours, the flask was immersed in liquid nitrogen to completely stop the polymerization reaction.

THF was added to the reaction solution to prepare a roughly 8 mass% polymer solution. This polymer solution was added dropwise to about 300 mL of hexane to precipitate a crude B-nBsS di-block copolymer. After the obtained polymer was separated by suction filtration and fully dried by vacuum drying, the resulting polymer was dissolved again in THF, and the solution was added dropwise to hexane to precipitate the polymer.

The operation of precipitating the polymer was performed two times in total and unreacted monomers and low-molecular-weight oligomers were removed to thereby obtain a purified B-sSPS di-block copolymer. The purified B-sSnB di-block copolymer of Example 1 is also referred to as "B-sSnB-1."

The B-nBsS-1 was dissolved in deuterated chloroform to prepare a roughly 2 mass% B-nBsS-1 solution, and the average degree of polymerization was determined by the ¹H-NMR method. Fig. 2 shows a ¹H-NMR spectrum of B-nBsS-1 as a dotted line. The average degree of polymerization of block A component chains was 280, the average degree of polymerization of block B component chains was 960, and the total number average molecular weight was about 275000.

B-nBsS-1 was dissolved in THF to prepare a roughly 0.1 mass% B-nBsS-1 solution, and GPC measurement was performed. Using a solvent mainly containing THF as the eluent, the measurement was performed at a flow rate of 1 mL/min at a temperature of 45°C, with two TSK-GEL columns α-M (produced by Tosoh Corporation) being connected.

Fig. 1 shows a GPC chromatogram of B-nBsS-1. Since the peak of B-nBsS-1 shifted towards the lower elution time side, a block copolymer was confirmed to have been produced.

### (1-2) Second step

4.00 g (0.100 mol) of sodium hydroxide was dissolved in a mixed solvent composed of 67 mL of THF and 33 mL of ethanol to prepare a basic solution. About 3.0 g of B-nBsS-1 obtained in the first step was dissolved in this basic solution to perform a deprotection reaction by hydrolysis at 50°C for 3 hours.

The above solution was concentrated by rotary evaporation at 45°C, and 100 mL of pure water and 100 mL of about 35 wt% hydrochloric acid were added. The resulting mixture was stirred at room temperature for 12 hours to exchange sodium ions in the polymer with protons.

In order to remove the sodium chloride produced during protonation, the solution was then transferred to a dialysis cellulose tube and immersed in pure water for about 3 hours. This dialysis was repeated 3 times in total. The solution after dialysis was dried at 100°C to obtain a polymer.

This polymer was added to 20 mL of about 0.1 mol/L hydrochloric acid, transferred to a dialysis cellulose tube, and immersed in about 0.1 mol/L hydrochloric acid for about 3 hours. This dialysis was repeated 3 times in total. The solution after dialysis was dried at 100°C to obtain a B-sSA di-block copolymer.

The B-sSA di-block copolymer obtained in Example 1 is also referred to as "B-sSA-1."

The B-sSA-1 was dissolved in deuterated chloroform/deuterated methanol = 6/4 (volume ratio) to prepare a roughly 2% B-sSA-1 solution, and ¹H-NMR was measured.

Fig. 2 shows a ¹H-NMR spectrum of B-sSA-1 as a solid line. From the disappearance of the signal attributable to an ester of poly(n-butyl 4-styrenesulfonate) around δ = 4.0, hydrolysis was confirmed to have been almost complete.

The sharp peaks around 3.4 ppm and 7.5 ppm are peaks derived from methanol and chloroform, respectively. The peak around 4.9 ppm is a peak derived from residual water in the polymer.

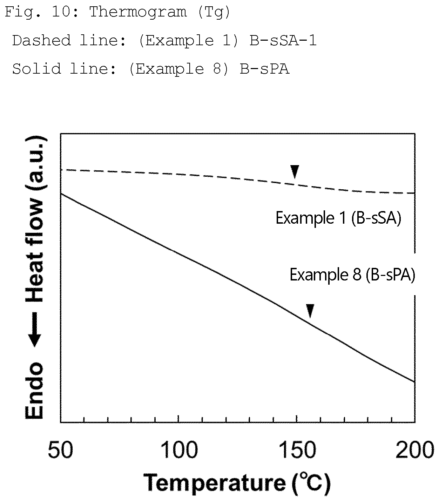

Differential scanning calorimetry (DSC) was performed in accordance with JIS K 7121:2012 to confirm the Tg of B-sSA-1. Fig. 10 shows a thermogram of B-sSA-1. A small but certain step was observed around 149°C in the DSC curve, and a small peak was observed around 149°C in the differential DSC curve. These results confirmed that the Tg is at 149°C. Since the Tg of homopolymer B is generally considered to be about 150°C, this Tg is considered to be derived from the block B.

### (1-3) Third step

0.50 g of B-sSA-1 was dissolved in 5 mL of a solvent mainly containing a mixed solvent of THF and ethanol and transferred to a polypropylene container. The solution was allowed to stand at 50°C for about 1 day to evaporate the solvent. The residue was then dried at 50°C for about 1 day using a vacuum dryer to further remove the solvent, thus obtaining a B-sSA-1 membrane.

### (1-4) Evaluation

### AC Impedance measurement

Using a platinum mesh with a thickness of 0.1 mm as electrodes, AC impedance of a sample of the proton-conducting electrode membrane of Example 1 was measured.

The sample of the proton-conducting electrode membrane obtained in Example 1 was cut into a strip (0.24 mm thick, 2.25 mm wide, and 10 mm long). The strip was interposed between a pair of electrodes disposed to face each other with a distance between the electrodes of 0.70 cm and an electrode width of 0.159 cm.

The sample interposed between the electrodes was placed in a small environmental tester (SH-242, produced by Espec) and allowed to stand at a temperature of 80°C and a relative humidity of 50% RH (partial pressure of water vapor p_{H2O} = 237 hPa) for 3 hours or more.

AC impedance measurement was performed under humidified conditions at 50% RH using a VersaSTAT 4-400 potentiometer/galvanostat (produced by Bio-Logic Science Instruments) with a voltage of 50 mV and a frequency varying from 10⁶ Hz to 10° Hz. The resistance reading at the minimum of the Nyquist plot was 3.2 x 10³ Q.

The proton conductivity of this proton-conducting electrolyte membrane sample as calculated according to the following formula (1) was 0.057 S/cm. Proton conductivity = Distance between electrodes/(Thickness of membrane x Width of electrode x Resistance at the minimum of the Nyguist plot)

Subsequently, the proton-conducting electrolyte membrane sample was allowed to stand under the measurement conditions at a temperature of 80°C and a relative humidity of 60% RH (p_{H2O} = 284 hPa) for about 2 hours, and AC impedance measurement was performed. The resistance at the minimum of the Nyquist plot was 1.7 x 10³ Ω, and the proton conductivity was 0.11 S/cm, thus showing a very high proton conductivity.

Subsequently, the proton-conducting electrolyte membrane sample was allowed to stand under the measurement conditions at a temperature of 80°C and a relative humidity of 70% RH (p_{H2O} = 332 hPa) for about 2 hours, and AC impedance measurement was performed. The resistance at the minimum of the Nyquist plot was 8.1 x 10² Ω, and the proton conductivity was 0.23 S/cm, thus showing a very high proton conductivity.

Subsequently, the proton-conducting electrolyte membrane sample was allowed to stand under the measurement conditions at a temperature of 80°C and a relative humidity of 80% RH (p_{H2O} = 379 hPa) for about 2 hours, and AC impedance measurement was performed. The resistance at the minimum of the Nyquist plot was 4.0 x 10² Ω, and the proton conductivity was 0.46 S/cm, thus showing a very high proton conductivity.

The sample of the proton-conducting electrolyte membrane obtained in Example 1 and cut into strips (0.48 mm thick, 2.15 mm wide, and 10 mm long) was interposed between a pair of electrodes disposed to face each other with a distance between the electrodes of 0.70 cm and an electrode width of 0.159 cm. AC impedance measurement was performed at a temperature of 95°C and a relative humidity of 50% RH (p_{H2O} = 423 hPa). The resistance at the minimum of the Nyquist plot was 1.3 x 10³ Ω, and the proton conductivity was 0.071 S/cm, thus showing a very high proton conductivity.

Subsequently, AC impedance measurement was performed under the following different measurement conditions: at a temperature of 95°C and a relative humidity of 60% RH (p_{H2O} = 508 hPa); at a temperature of 95°C and a relative humidity of 70% RH (p_{H2O} = 592 hPa); and at a temperature of 95°C and a relative humidity of 80% RH (p_{H2O} = 677 hPa). The resistance at the minimum of the Nyquist plot under the above three different conditions was 6.5 x 10² Ω, 3.1 × 10² Ω, and 1.7 × 10² Ω, and the proton conductivity under the above three different conditions was 0.14 S/cm, 0.30 S/cm, and 0.53 S/cm, thus showing a very high proton conductivity under each condition.

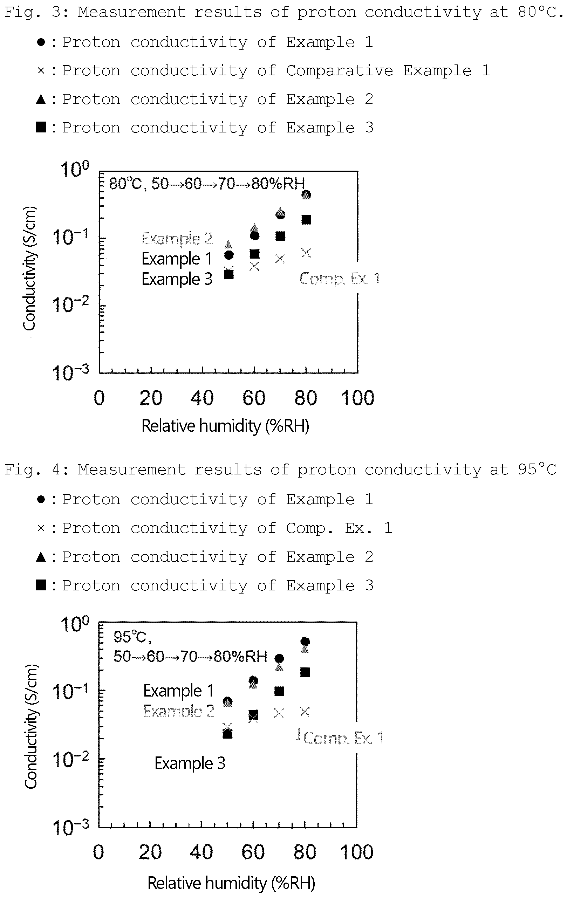

Figs 3 and 4 show the measurement results of proton conductivity of Example 1 at 80°C and 95°C, respectively as black circles (•). Table 1 summarizes these results.

As described above, the proton-conducting membrane in Example 1 showed a tendency for proton conductivity to increase with increasing humidity. This is probably because an increase of water content in the sSA block with increasing humidity facilitated the migration of protons of sulfonic acid groups through water molecules.

### [2] Comparative Example 1

In Comparative Example 1, using Nafion membrane (registered trademark, NR212, Aldrich), AC impedance measurement was performed in the same manner as in Example 1 to measure the proton conductivity of the Nafion membrane.

Figs 3 and 4 show the measurement results of proton conductivity of Comparative Example 1 at 80°C and 95°C, respectively, as cross (x) marks. Table 1 summarizes these results.

The membrane in Comparative Example 1 exhibited, for example, a proton conductivity of 0.061 S/cm at 80°C and 80% RH and 0.049 S/cm at 95°C and 80% RH.

The B-sSA-1 membrane of Example 1 is found to have a higher proton conductivity than the Nafion membrane of Comparative Example 1. This is probably because in the Nafion membrane, sulfonic acid groups are present at random in the polymer chain and the density of sulfonic acid groups is low (equivalent mass EW = 1100, the equivalent mass indicating the amount of ion exchange), whereas the B-sSA-1 membrane contains a higher density of sulfonic acid groups in the sSA block (EW in sSA block = 184) and is thus more prone to absorb moisture.

Further, the NR212 membrane was interposed between electrodes and dried for 1 hour or more at a temperature of 125°C and a relative humidity of substantially 0% RH. The proton conductivity as determined by AC impedance measurement under no-humidified conditions was 0.00014 S/cm, thus showing a low conductivity.

### [3] Example 2

In Example 2, a B-nBsS di-block copolymer (degree of polymerization of block B: 291, degree of polymerization of block nBsS: 690, number average molecular weight: 210000; referred to below as "B-nBsS-2") was synthesized. The B-nBsS di-block copolymer was hydrolyzed in the same manner as in Example 1 to synthesize a B-sSA di-block copolymer (referred to below as "B-sSA-2") and a B-sSA-2 membrane was prepared.

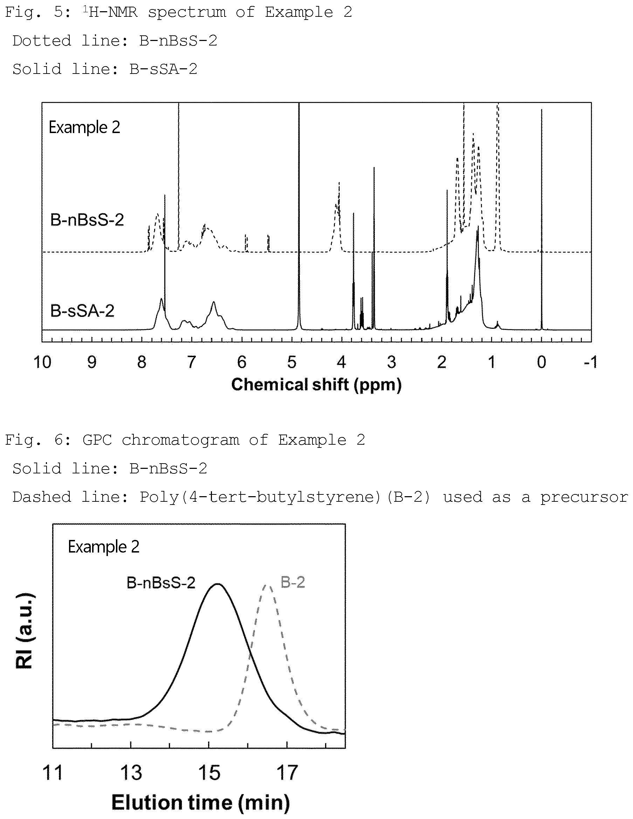

Fig. 5 shows ¹H-NMR spectra of B-nBsS-2 and B-sSA-2 as a dotted line and a solid line, respectively.

In the spectrum of B-sSA-2, the sharp peaks around 3.4 ppm and 7.5 ppm are peaks derived from methanol and chloroform, respectively; the peaks around 1.9 ppm and 3.8 ppm are derived from residual THF in the polymer; the peak around 3.6 ppm is derived from residual ethanol in the polymer; and the peak around 4.9 ppm is derived from residual water in the polymer.

Fig. 6 shows GPC chromatograms of B-nBsS-2 and its precursor poly(4-tert-butylstyrene) (referred to below as "B-2") as a solid line and a dashed line, respectively.

Since the peak of B-nBsS-2 shifted towards the lower elution time side, a block copolymer was confirmed to have been synthesized.

AC impedance measurement was performed in the same manner as in Example 1 and proton conductivity of the B-sSA-2 membrane was measured. Figs. 3 and 4 show the measurement results of proton conductivity of Example 2 at 80°C and 95°C, respectively, as grey triangles (▲). Table 1 summarizes these results.

The membrane obtained in Example 2 exhibited, for example, a proton conductivity of 0.45 S/cm at 80°C and 80% RH and 0.41 S/cm at 95°C and 80% RH. The B-sSA-2 membrane of Example 2 was found to exhibit higher proton conductivity than the Nafion membrane of Comparative Example 1.

This is probably because in the Nafion membrane, sulfonic acid groups were present at random in the polymer chain and the density of sulfonic acid groups was low, whereas the B-sSA-2 membrane contained a higher density of sulfonic acid groups in the sSA block and more easily absorbed moisture.

### [4] Example 3

In Example 3, a membrane composed of a mixture of a poly(4-tert-butylstyrene) homopolymer (also referred to below as "B-3") and B-sSA-1 synthesized in Example 1 was prepared to produce a proton-conducting membrane of Example 3 (also referred to below as "B-3/B-sSA-1 membrane").

0.0098 g of B-3 (number average molecular weight: 832400, Mw/Mn = 1.40, produced by Polymer Source, Inc.) and 0.039 g of B-sSA-1 were dissolved in 10.0 g of a mixed solvent of THF and methanol (weight ratio: THF/methanol = 2/1). The solvent was volatilized by rotary evaporation. Vacuum drying was performed at 50°C for about 4 hours and the resulting mixture was hot-pressed at 180°C for about 30 seconds. The hot-pressing was performed 5 times to prepare a B-3/B-sSA-1 membrane (weight ratio: B-3/B-sSA-1 = 2/8).

AC impedance measurement was performed in the same manner as in Example 1 and the proton conductivity of the B-3/B-sSA-1 membrane (weight ratio: B-3/B-sSA-1 = 2/8) was measured. Figs. 3 and 4 shows the measurement results of proton conductivity of Example 3 at 80°C and 95°C, respectively, as black squares (■). Table 1 summarizes these results.

The membrane of Example 3 exhibited, for example, a proton conductivity of 0.19 S/cm at 80°C and 80% RH and a proton conductivity of 0.19 S/cm at 95°C and 80% RH. The B-sSA-2 membrane of Example 2 was also found to exhibit a higher proton conductivity than the Nafion membrane of Comparative Example 1.

### [5] Example 4

In Example 4, a B-3/B-sSA-1 membrane with a weight ratio of 3/7 was prepared in the same manner as in Example 3, and sulfuric acid (H₂SO₄) was introduced into this membrane to prepare a proton-conducting electrolyte membrane.

A solution of 0.0555 g of concentrated sulfuric acid (97%) in 2.08 g of methanol was poured into a polypropylene container, and 0.0801 g of the B-3/B-sSA-1 membrane was immersed in the solution and allowed to stand at 50°C for 1 day to evaporate the volatile solvent (methanol).

The residue was then dried at 50°C for about 1 day using a vacuum dryer to remove the volatile solvent, thus obtaining a B-3/B-sSA-1/H₂SO₄ membrane having H₂SO₄ introduced into a B-3/B-sSA-1 membrane. Note that H₂SO₄ is considered to penetrate only the component sSA of B-sSA-1.

Here, the weight ratio of B-3 to B-sSA-1 to H₂SO₄ in proton-conducting electrolyte membrane in Example 4 was 18:42:40. The molar ratio of sulfuric acid to sulfonic acid groups was 2.2.

### AC impedance measurement

In the same manner as in Example 1, the B-3/B-sSA-1/H₂SO₄ membrane was interposed between the electrodes, and this sample was placed in the small environmental tester and dried at a temperature of 125°C and a relative humidity of substantially 0% RH for 1 hour or more. The proton conductivity was determined by AC impedance measurement under non-humidified conditions and was found to be 0.056 S/cm, thus showing a value much higher than the conductivity of the Nafion membrane of Comparative Example 1 under non-humidified conditions (Table 2).

### Tensile Test

The proton-conducting electrolyte membrane obtained in Example 4 was subjected to a tensile test. Specifically, a strip test piece of 20 mm long and 3 mm wide was prepared from the proton-conducting electrolyte membrane of Example 4. The test piece had a thickness of 0.30 mm.

Using an ARES-G2 produced by TA Instruments as a measuring device, a tensile test was performed at 125°C with a distance between fixtures of 5.95 mm and an initial strain rate of 0.1/s (tensile rate: 0.595 mm/s).

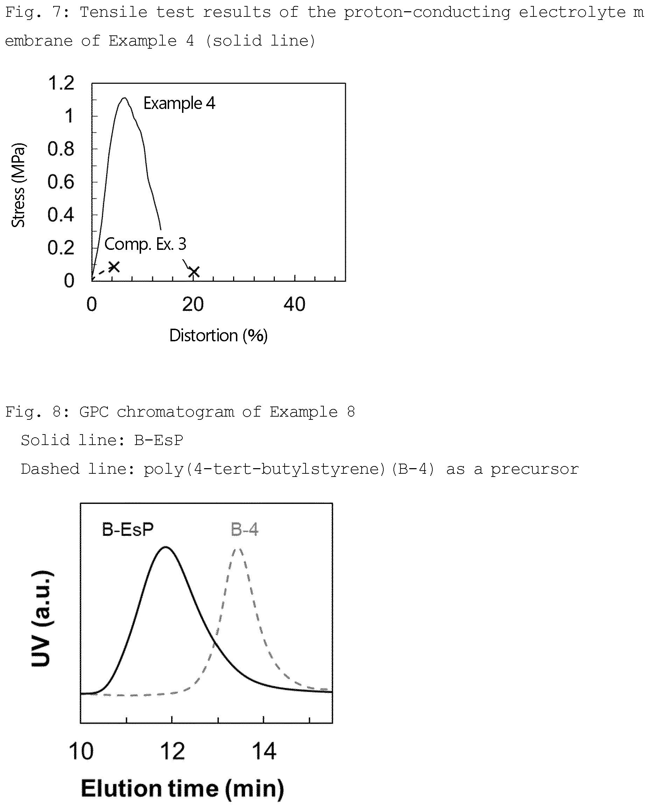

Fig. 7 shows stress-strain curves resulting from the tensile test as a solid line. The Young's modulus, tensile strength, elongation at break, and inner area of the stress-strain curve (an indicator of material toughness) were 12 MPa, 1.1 MPa, 20%, and 0.11 MJ/m³, respectively. The Young's modulus was determined from the initial slope of the stress-strain curve (within 3% strain).

### [6] Comparative Example 2

In Comparative Example 2, a poly(4-tert-butylstyrene)-b-poly(2-vinylpyridine) (also referred to below as "B-2VP di-block copolymer") was synthesized as a block copolymer prepared using a 2-vinylpyridine monomer having a basic functional group in place of an acidic functional group. A B-3/B-2VP membrane at a B-3/B-2VP weight ratio of 3/7 was prepared in the same manner as in Example 4. H₂SO₄ was introduced into this membrane to prepare a proton-conducting electrolyte membrane.

Note that the B-2VP di-block copolymer (degree of polymerization of block B: 255 and degree of polymerization of block 2VP: 1950, number average molecular weight: 250000) was synthesized in the same manner as in Example 1 except that the amount of the 4-tert-butylstyrene monomer was appropriately changed and a 2-vinylpyridine monomer was used in place of the n-butyl 4-styrenesulfonate monomer.

The weight ratio of B-3 to B-2VP to H₂SO₄ in the proton-conducting electrolyte membrane obtained in Comparative Example 2 was 14:34:52. The molar ratio of sulfuric acid to pyridyl groups was 2.0. The proton conductivity as determined at a temperature of 125°C and a relative humidity of substantially 0% RH was 0.022 S/cm. The proton-conducting electrolyte membrane of Example 6, which had a lower H₂SO₄ content, exhibited higher conductivity than the proton-conducting electrolyte membrane of Comparative Example 2.

This is probably because in Comparative Example 2, H₂SO₄ molecules in an amount equimolar to the basic functional groups (proton-accepting functional group) were consumed to form an ionic complex, and free protons that would contribute to proton conduction were not released from H₂SO₄ molecules in an amount equimolar to the basic functional groups, whereas the membrane of Example 6, which contained no basic functional groups, could allow free protons involved in proton transport to be released from almost all of the H₂SO₄ molecules that permeated the membrane, thus exhibiting high proton conductivity.

### [7] Comparative Example 3

In Comparative Example 3, poly(4-tert-butylstyrene)-b-poly(2-vinylpyridine)-b-poly(4-tert-butylstyrene) (also referred to below as "B-2VP-B tri-block copolymer") was synthesized as a block copolymer, and H₂SO₄ was introduced into the membrane to prepare a proton-conducting electrolyte membrane.

Note that a B-2VP-B tri block copolymer (degree of polymerization of block B including both ends: 486, degree of polymerization of block 2VP: 970, and number average molecular weight: 180000) was synthesized in the same manner as in Comparative Example 2 except that the amounts of the 4-tert-butylstyrene monomer and the 2-vinylpyridine monomer were appropriately changed and a bifunctional RAFT agent was used.

The weight ratio of B-2VP-B to H₂SO₄ in the proton-conducting electrolyte membrane obtained in Comparative Example 3 was 30:70, and the molar ratio of sulfuric acid to pyridyl groups was 4.4. The proton conductivity was determined at a temperature of 125°C and a relative humidity of substantially 0% RH and found to be 0.091 S/cm.

A tensile test was performed in the same manner as in Example 4. Fig. 7 shows a stress-strain curve resulting from the tensile test as a dotted line. The Young's modulus, tensile strength, elongation at break, and the inner area of the stress-strain curve were 1.9 MPa, 0.10 MPa, 5%, and 5.6 × 10⁻⁴ MJ/m³, respectively.

The membrane of Example 4 showed a higher tensile strength than the membrane of Comparative Example 3 probably for the following reasons. Homopolymer B, which is in a glass state at the temperature and humidity at which the proton-conducting electrolyte membrane is used, is the same component as block B in B-sSA that contributes to the exhibition of mechanical strength of the membrane; therefore, homopolymer B and block B in B-sSA are moderately compatible, and a high molecular weight and relative toughness of homopolymer B contributed to the improvement of mechanical strength of the membrane.

### [8] Example 5

In Example 5, the same procedures were performed as in Example 4 except that in place of H₂SO₄, phosphoric acid (H₃PO₄) was introduced into the B-3/B-sSA-1 membrane of Example 3 (weight ratio: 2/8) to prepare a B-3/B-sSA-1/H₃PO₄ membrane.

The weight ratio of B-3 to B-sSA-1 to H₂SO₄ was 6:24:70, and the molar ratio of phosphoric acid to sulfonic acid groups was 6.9. The proton conductivity was determined at a temperature of 125°C and a relative humidity of substantially 0% RH. The B-3/B-sSA-1/H₃PO₄ membrane was found to have a proton conductivity of 0.10 S/cm, thus showing a conductivity higher than the Nafion membrane of Comparative Example 1 in spite of being determined under non-humidified conditions (Table 2).

### [9] Example 6

In Example 6, a proton-conducting electrolyte membrane was prepared in the same manner as in Example 4 except that the weight ratio of B-3 to B-sSA-1 to H₂SO₄ was 14:34:52. The molar ratio of sulfuric acid to sulfonic acid groups was 3.6.

The proton conductivity was determined at a temperature of 125°C and a relative humidity of substantially 0% RH. The proton-conducting electrolyte membrane was found to have a proton conductivity of 0.079 S/cm, thus showing a conductivity higher than the Nafion membrane of Comparative Example 1 in spite of being determined under non-humidified conditions (Table 2).

### [10] Example 7

In Example 7, a proton-conducting electrolyte membrane was prepared in the manner as in Example 4, except that the weight ratio of B-3 to B-sSA-1 to H₂SO₄ was 12:28:60. The molar ratio of sulfuric acid to sulfonic acid groups was 5.0.

The proton conductivity was determined at a temperature of 125°C and a relative humidity of substantially 0% RH. The proton-conducting electrolyte membrane was found to have a proton conductivity of 0.094 S/cm, thus showing a conductivity higher than the Nafion membrane of Comparative Example 1 in spite of being determined under non-humidified conditions (Table 2).

### [11] Comparative Example 4

In Comparative Example 4, a proton-conducting electrolyte membrane was prepared in the same manner as in Example 4, except that the weight ratio of B-3 to B-2VP to H₂SO₄ was 18:42:40. The molar ratio of sulfuric acid to pyridyl groups was 1.3.

The proton conductivity was determined at a temperature of 125°C and a relative humidity of substantially 0% RH. The proton-conducting electrolyte membrane was found to have a relative humidity of 0.00093 S/cm. Thus, the proton-conducting electrolyte membrane of Example 4, which had a similar H₂SO₄ content, showed higher conductivity than the proton-conducting electrolyte membrane of Comparative Example 4.

This is probably because in Comparative Example 4, H₂SO₄ molecules in an amount equimolar to the basic functional group (proton-accepting functional group) were consumed to form an ionic complex and free protons that would contribute to proton conduction were not released from H₂SO₄ molecules in an amount equimolar to the basic functional group, whereas the membrane of Example 4, which contained no basic functional groups, could release free protons involved in proton transport from almost all of the H₂SO₄ molecules that permeated the membrane, thus exhibiting high proton conductivity.

### [12] Comparative Example 5

In Comparative Example 5, a proton-conducting electrolyte membrane was prepared in the same manner as in Example 4 except that the weight ratio of B-3 to B-2VP to H₂SO₄ was 12:28:60. The molar ratio of sulfuric acid to sulfonic acid groups was 2.8.

The proton conductivity was determined at a temperature of 125°C and a relative humidity of substantially 0% RH and the proton-conducting electrolyte membrane was found to have a proton conductivity of 0.040 S/cm. Thus, the proton-conducting electrolyte membrane of Example 7, which had a similar H₂SO₄ content, showed higher conductivity than the proton-conducting electrolyte membrane of Comparative Example 5.

This is probably because in Comparative Example 5, H₂SO₄ molecules in an amount equimolar to the basic functional groups (proton-accepting functional group) were consumed to form an ionic complex and free protons that would contribute to proton conduction were not released from the H₂SO₄ molecules in an amount equimolar to the basic functional group, whereas the membrane of Example 7, which contained no basic functional groups, could allow free protons involved in proton transport to be released from almost all of the H₂SO₄ molecules that permeated the membrane, thus exhibiting high proton conductivity.

### [13] Example 8

### (1) Preparation of polyelectrolyte membrane (proton-conducting membrane) in Example 8

In Example 8, according to Scheme-2 below, poly(4-tert-butylstyrene)-b-poly(4-styrene diethyl phosphonate) (also referred to below as "B-EsP di-block copolymer") was synthesized as a block copolymer (First Step).

Subsequently, the alkyl-protecting group of the poly(4-styrene diethyl phosphonate) block was removed for deprotection to thereby synthesize poly(4-tert-butylstyrene)-b-poly(4-styrene phosphonic acid) having a proton-donating group (also referred to below as "B-sPA-1 di-block copolymer") (Second Step).

The B-sPA-1 di-block copolymer was formed into a membrane to produce a proton-conducting membrane of Example 8 (also referred to below as "B-sPA-1 membrane") (Third Step).

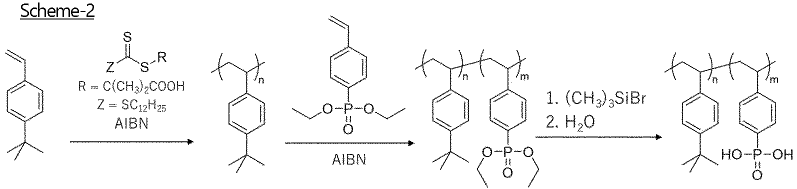

Literature (Org. Lett. 2011, 13(8), 2110-2113) describes that p-styrylboronic acid was reacted with diethyl phosphite in the presence of 1,10-phenanthroline and a copper(I) oxide catalyst to synthesize a diethyl 4-styrene phosphonate monomer. With reference to this reaction, a diethyl 4-styrene phosphonate monomer was synthesized in the same manner.

### (1-1) First step

In Example 8, the same procedures were performed as in Example 1 except that the amount of 4-tert-butylstyrene monomer was appropriately changed in step 1-1 and a diethyl 4-styrenephosphonate monomer was used in place of the n-butyl 4-styrenesulfonate monomer and the amount of the monomer used was changed in step 1-2 to synthesize a B-EsP di-block copolymer (degree of polymerization: 255, degree of polymerization of block bEsP: 1260, average molecular weight: 340000).

Fig. 8 shows GPC chromatograms of B-EsP and its precursor poly(4-tert-butylstyrene) (referred to below as "B-4") as a solid line and a dashed line, respectively.

Since the peak of B-EsP shifted towards the lower elution time side, a block copolymer was confirmed to have been synthesized. The Mw/Mn was 2.3.

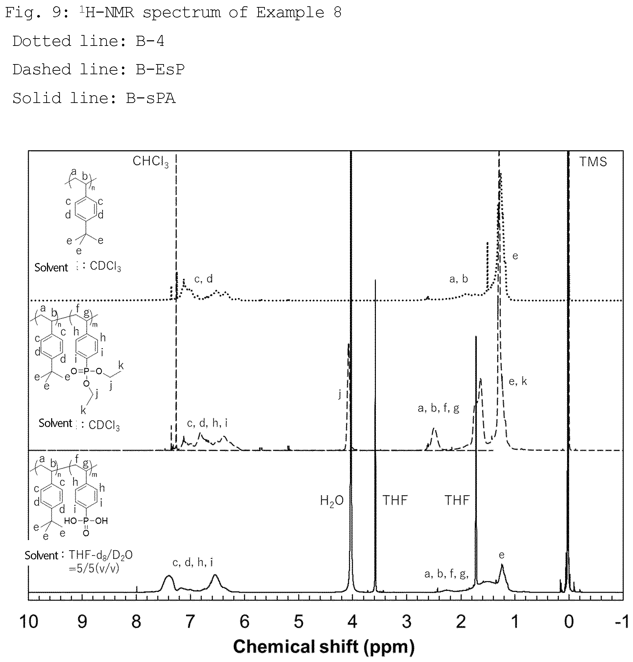

Fig. 9 shows ¹H-NMR spectra of B-4 and B-EsP as a dotted line and a dashed line, respectively.

### (1-2) Second step

Literature (Macromolecules, 2018, 51, 1120-1128) describes that after poly(diethyl 4-styrenephosphonate) was reacted with bromotrimethylsilane, dialysis was performed using a methanol solvent to deprotect the alkyl group of poly(diethyl 4-styrenephosphonate), thus synthesizing poly(4-styrenephosphonic acid). With reference to this reaction, the B-EsP obtained in the first step was reacted with bromotrimethylsilane and then dialysis was performed using water in place of methanol to perform a deprotection reaction.

Specifically, 0.855 g (3.1 mmol of phosphonic acid diester) of B-EsP was dissolved in 5.0 mL of chloroform, and 2.5 mL (2.9 g, 0.019 mol) of bromotrimethylsilane was added. The resulting mixture was placed in an oil bath at 40°C for 19 hours.

After this solution was concentrated by rotary evaporation, the concentrate was mixed with about 5 mL of pure water. The mixture was transferred to a dialysis cellulose tube and immersed in pure water for about 3 hours to allow dialysis to proceed. This dialysis was repeated 3 times in total. The contents of the cellulose tube were removed and dried at 100°C to obtain B-sPA-1.

B-sPA-1 was dissolved in deuterated THF/deuterated water = 5/5 (volume ratio) to prepare a roughly 2 mass% B-sPA-1 solution and ¹H-NMR was measured. Fig. 9 shows a ¹H-NMR spectrum of B-sPA as a solid line.

From the disappearance of the peak around 4.1 ppm derived from the proton of the methylene group adjacent to the oxygen atom of the phosphonic acid di-ester and the reduction of the peak around 1.2 ppm derived from the proton of the methyl group adjacent to it, the deprotection was confirmed to have been almost complete.

The sharp peak around 4.0 ppm is a peak derived from water, whereas the peaks around 1.8 and 3.7 ppm are peaks derived from THF.

To confirm the Tg of B-sPA-1, DSC was performed according to JIS K 7121:2012. Fig. 10 shows a thermogram of B-sPA-1. A small but certain step was observed around 155°C in the DSC curve, and a small peak was observed around 155°C in the differential DSC curve. These results confirmed that B-sPA-1 has a Tg of 155°C.

### (1-3) Third Step

0.100 g of B-sPA-1 was dispersed in 4.2 g of a solvent mainly containing a mixed solvent of 1-propanol and water. The dispersion was allowed to stand at 60°C for about 12 hours to evaporate the solvent, thus preparing a proton-conducting electrolyte membrane of Example 8.

### (1-4) Evaluation

### AC impedance measurement

AC impedance measurement was performed in the same manner as in Example 1 and the proton conductivity of the B-sPA-1 membrane was measured. The membrane showed a proton conductivity of 0.00066 S/cm at 80°C and 80% RH, 0.00089 S/cm at 95°C and 80% RH, and 0.0080 S/cm at 95°C and 98% RH.

### [14] Example 9

In Example 9, a B-nBsS di-block copolymer was synthesized in the same manner as in Example 1 except that the amounts of 4-tert-butylstyrene monomer and n-butyl 4-styrenesulfonate monomer were changed appropriately. The B-nBsS di-block copolymer was hydrolyzed in the same manner as in Example 1 to synthesize a B-sSA di-block copolymer (degree of polymerization of block B: 255, degree of polymerization of block sSA: 3474, and number average molecular weight: 680000; referred to below as B-sSA-3).

AC impedance measurement was performed in the same manner as in Example 1 and proton conductivity of the B-sSA-3 membrane was measured. Table 1 summarizes the measurement results of the proton conductivity of Example 9 at 80°C.

The membrane of Example 9 exhibited a proton conductivity of 1.4 S/cm at 80°C and 80% RH and 0.13 S/cm at 80°C and 40% RH. The B-sSA-3 membrane of Example 9 was found to exhibit higher proton conductivity than the Nafion membrane of Comparative Example 1.

This is probably because in the Nafion membrane, sulfonic acid groups are present at random in the polymer chains and at a low density, whereas the B-sSA-3 membrane contains a higher density of sulfonic acid groups in the sSA block and is more prone to absorb moisture.

### [15] Example 10

### (1) Preparation of polyelectrolyte membrane (proton-conducting membrane) of Example 10

In Example 10, according to Scheme-3 below, poly(4-tert-butylstyrene)-b-poly(butyl 4-styrenesulfonate-co-diethyl 4-styrenephosphonate) (also referred to below as "B-(nBsS-co-EsP) di-block copolymer") was synthesized as a block copolymer (First Step).

Subsequently, the alkyl-protecting group of the poly(butyl 4-styrene sulfonate-co-diethyl 4-styrene phosphonate) block was removed for deprotection to synthesize a poly(4-tert-butylstyrene)-b-poly(4-styrenesulfonic acid-co-4-styrenephosphonic acid) having a proton-donating group (also referred to below as "B-(sSA-co-sPA) di-block copolymer," degree of polymerization of block B: 525, degree of polymerization of component sSA in block SA-co-sPA: 1265, degree of polymerization of component sPA in block sSA-co-sPA: 597, and number average molecular weight: 430000) (Second Step).

This B-(sSA-co-sPA) di-block copolymer was formed into a membrane to prepare a proton-conducting membrane of Example 10 (also referred to below as "B-(sSA-co-sPA)-1 membrane") (Third Step).

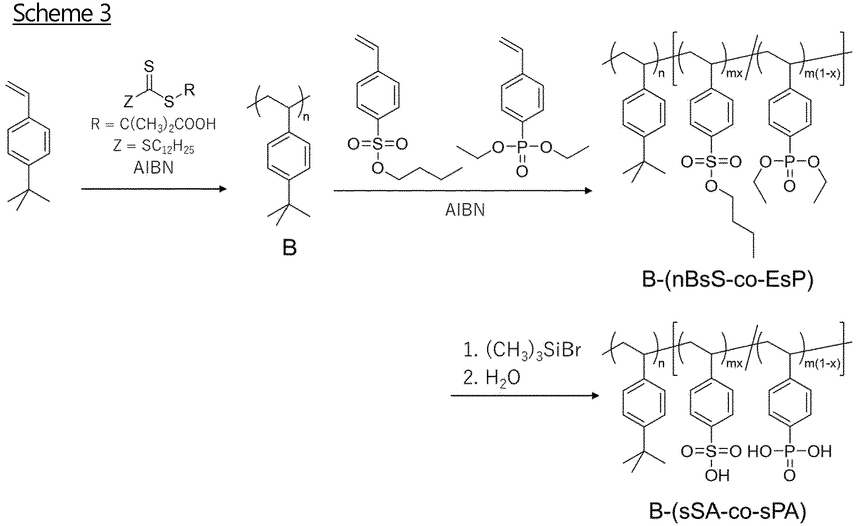

### (1-1) First step

In Example 10, a B-(nBsS-co-EsP)-1-di-block copolymer was synthesized in the same manner as in Example 1 except that in step 1-1, the amount of 4-tert-butylstyrene monomer was changed and in step 1-2, and n-butyl 4-styrenesulfonate and the diethyl 4-styrenephosphonic acid monomer synthesized in Example 8 were subjected to random copolymerization.

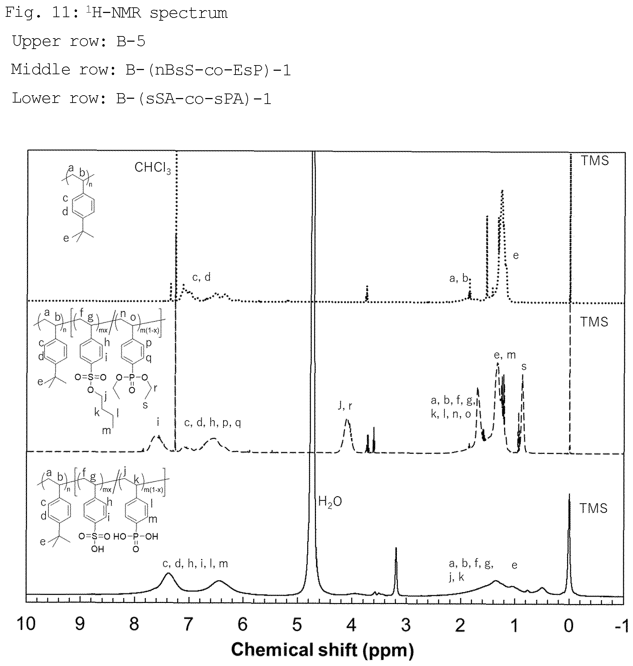

Fig. 11 shows ¹H-NMR spectra of B-5 and B-(nBsS-co-EsP)-1 as a dotted line and a dashed line, respectively.

### (1-2) Second step

After B-(nBsS-co-EsP)-1 was reacted with bromotrimethylsilane in the same manner as in the second step of Example 8, the reaction product was dialyzed using water to deprotect the alkyl group of the poly(butyl 4-styrenesulfonate-co-diethyl 4-styrenephosphonate), thus obtaining B-(sSA-co-sPA)-1.

B-(sSA-co-sPA)-1 was dissolved in deuterated THF/deuterated water = 5/5 (volume ratio) to prepare a roughly 2 mass% B-(sSA-co-sPA)-1 solution, and ¹H-NMR was measured. Fig. 11 shows a ¹H-NMR spectrum of B-(sSA-co-sPA)-1 as a solid line.

Since the peaks around 4.1 ppm, derived from the proton of the methylene group adjacent to the oxygen atom of the sulfonic acid ester and the phosphonic acid diester were reduced or disappeared, it was confirmed from the integral ratio that the deprotection had progressed by 92%.

Note that the sharp peak around 4.7 ppm is a peak derived from water.

### (1-3) Third step

0.050 g of B-(sSA-co-SPA)-1 was dispersed in 1.67 g of a solvent mainly containing a mixed solvent of 1-propanol and water. The dispersion was allowed to stand at 60°C for about 12 hours to evaporate the solvent, thus preparing a proton-conducting electrolyte membrane of Example 10.

### (1-4) Assessment

### AC impedance measurement

AC impedance measurement was performed in the same manner as in Example 1 and proton conductivity of the B-(sSA-co-sPA)-1 membrane was measured. The membrane exhibited, for example, a proton conductivity of 0.14 S/cm at 80°C and 80% RH and 0.0092 S/cm at 80°C and 40% RH.

### [16] Example 11

In Example 11, the same procedures were performed as in Example 10 except that the amounts of 4-tert-butylstyrene monomer, n-butyl 4-styrenesulfonate monomer, and diethyl 4-styrenephosphate monomer were changed appropriately to synthesize a B-(nBsS-co-EsP) di-block copolymer. The B-(nBsS-co-EsP) di-block copolymer was hydrolyzed in the same manner as in Example 10 to synthesize a B-(sSA-co-SPA) di-block copolymer (degree of polymerization of block B: 480, degree of polymerization of component sSA in sSA-co-SPA block: 465, degree of polymerization of component sPA in sSA-co-sPA block: 555, number average molecular weight: 260000; also referred to below as "B-(sSA-co-sPA) -2") .

AC impedance measurement was performed in the same manner as in Example 1 and proton conductivity of the B-(sSA-co-sPA)-2 membrane was measured. Table 1 summarizes the measurement results of proton conductivity of Example 11 at 80°C.

The membrane of Example 11 exhibited, for example, a proton conductivity of 0.080 S/cm at 80°C and 80% RH and 0.00084 S/cm at 80°C and 40% RH.

### [17] Example 12

### (1) Preparation of polyelectrolyte membrane (proton-conducting membrane) of Example 12

In Example 12, according to Scheme 4 below, a crosslinked poly(n-butyl 4-styrenesulfonate) membrane (also referred to below as "CL-nBsS membrane") was synthesized (First Step).

Subsequently, the ester-protecting group in the poly(n-butyl styrenesulfonate) was removed for deprotection by hydrolysis to prepare a crosslinked poly(4-styrenesulphonic acid) membrane having a proton-donating group (also referred to below as "CL-sSA membrane") (Second Step).

The "CL-" in the term "CL-sSA" is an abbreviation that means chemically crosslinked polymer.

The "sSA" in the term "CL-sSA" is an abbreviation for poly(4-styrenesulfonic acid), which is a polymer having a proton-donating group.

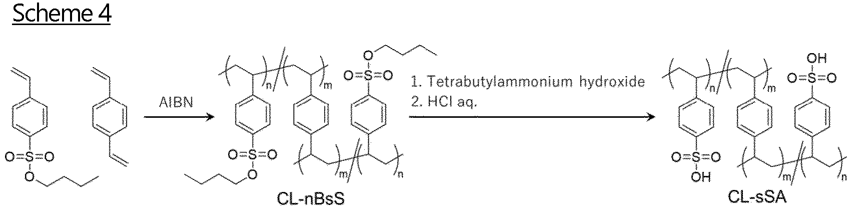

### (1-1) First step

0.0050 g (0.03 mmol) of AIBN, 0.021 g (0.13 mmol) of divinylbenzene, 3.0 g (13 mmol) of the n-butyl 4-styrenesulfonate monomer synthesized in the same manner as in Example 1, and 2.0 g of dimethyl sulfoxide (DMSO) were weighed out to prepare a homogeneous solution. The molar ratio of the n-butyl 4-styrenesulfonate monomer to the divinylbenzene was 99:1. The obtained solution was transferred to an airtight glass container. The solution was bubbled with nitrogen gas for 30 minutes and the container was placed in an oil bath at 75°C at atmospheric pressure to allow polymerization to proceed for 20 hours. The resulting membrane was immersed in THF several times to remove unreacted monomers and uncrosslinked oligomers, thus obtaining a CL-nBsS membrane.

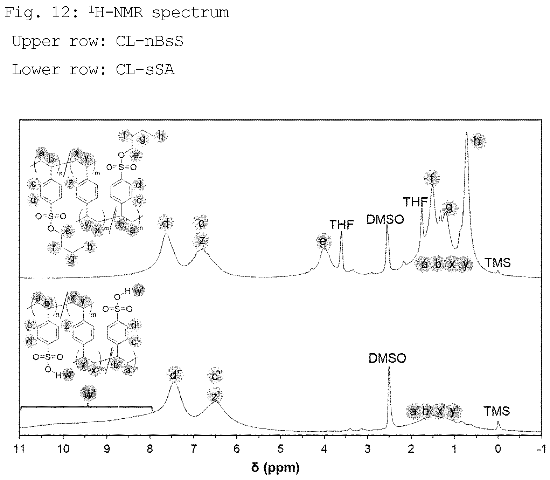

A part of the CL-nBsS membrane was crushed until it became a powder. The powder was swollen with deuterated DMSO to prepare a sample. Using this sample, ¹H-NMR was measured. The upper row of Fig. 12 shows a ¹H-NMR spectrum of CL-nBsS.

2.65 g (0.011 mol in terms of monomer unit) of the CL-nBsS membrane was swollen with 44 g of DMSO and mixed with a 37% solution of 78.6 g (0.11 mol) of tetrabutylammonium hydroxide in methanol. The mixture was heated at 50°C for 1 day to perform a deprotection reaction by hydrolysis. After the deprotection reaction, the membrane sample was collected and immersed in pure water to remove an excess of tetrabutylammonium hydroxide. The membrane was immersed in 200 mL of 1M hydrochloric acid at a concentration of 1M for 24 hours and then washed in pure water to prepare a CL-sSA membrane.

A part of the CL-sSA membrane was crushed until it became a powder, and the powder was swollen with deuterated DMSO to prepare a sample. Using this sample, ¹H-NMR was measured. The lower row of Fig. 12 shows a ¹H-NMR spectrum of CL-sSA as a solid line. From the almost disappearance of 4 signals attributable to the n-butyl sulfonate group, which were observed in CL-nBsS, the deprotection reaction was confirmed to have progressed. A comparison of the CL-sSA with the CL-nBsS in integration ratio showed that progression of the deprotection reaction was about 99%.

### (1-3) Assessment

AC impedance measurement was performed in the same manner as in Example 1 and proton conductivity of the CL-sSA membrane was measured. Table 1 summarizes the measurement results of proton conductivity of Example 12 at 80°C.

The membrane of Example 12 exhibited, for example, a proton conductivity of 0.58 S/cm at 80°C and 90% RH and 0.33 S/cm at 80°C and 80% RH. The CL-sSA membrane of Example 9 was also found to have a higher proton conductivity than the Nafion membrane of Comparative Example 1.

### [18] Example 13

### (1) Preparation of polyelectrolyte membrane (proton-conducting membrane) of Example 13

In Example 13, a crosslinked poly(diethyl 4-styrenephosphonate) membrane (also referred to below as "CL-EsP membrane") was synthesized according to Scheme 5 below (First Step).

Subsequently, the ester-protecting group in poly(diethyl styrenephosphonate) was removed for deprotection by hydrolysis to prepare a crosslinked poly(4-styrenephosphonic acid) membrane having a proton-donating group (also referred to below as "CL-sPA membrane") (Second Step).

The "CL-" in the term "CL-sPA" is an abbreviation that means chemically crosslinked polymer.

The "sPA" in the term "CL-sPA" is an abbreviation for poly(4-styrenephosphonic acid), which is a polymer having a proton-donating group.

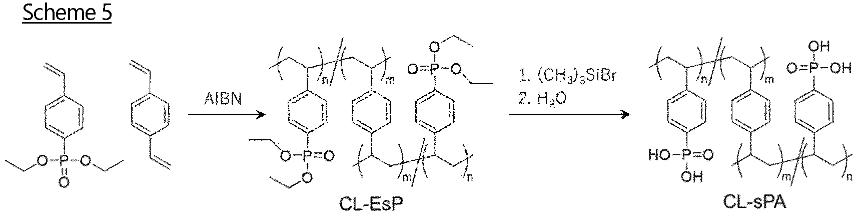

### (1-1) First step

The same procedures were performed as in Example 12 except that the diethyl 4-styrene phosphonate monomer synthesized in Example 8 was used to copolymerize the diethyl 4-styrenephosphonate monomer and divinylbenzene, thus obtaining a CL-EsP membrane. The molar ratio of the diethyl 4-styrenephosphonate monomer and the divinylbenzene used was 98:2.

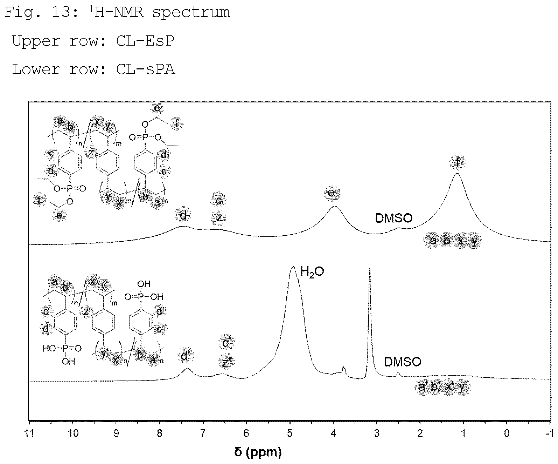

A part of the CL-EsP membrane was crushed until it became a powder. The powder was swollen with deuterated DMSO to prepare a sample. Using this sample, ¹H-NMR was measured. The upper row of Fig. 13 shows a ¹H-NMR spectrum of CL-EsP.

0.581 g (2.42 mmol in terms of monomer unit) of the CL-EsP membrane was swollen with 18.8 g of dehydrated chloroform, and 1.8 mL (2.2 g, 0.014 mol) of bromotrimethylsilane was added. The resulting mixture was placed in an oil bath at 40°C and stirred for about 12 hours.

The membrane sample after the reaction was collected and immersed in methanol for about 12 hours for hydrolysis. An excess of bromotrimethylsilane and byproduct were removed to prepare a CL-sPA membrane.

A part of the CL-sPA membrane was crushed until it became a powder. The powder was swollen with deuterated DMSO to prepare a sample. Using this sample, ¹H-NMR was measured. The lower row of Fig. 13 shows a ¹H-NMR spectrum of CL-sPA. From the almost disappearance of signals attributable to the diethyl phosphonate group, which were observed in CL-EsP, the deprotection reaction was confirmed to have progressed. A comparison of the CL-sPA with the CL-EsP in integration ratio showed that the progression of the deprotection reaction was about 98%.

### (1-3) Assessment

AC impedance measurement was performed in the same manner as in Example 1, and proton conductivity of the CL-sPA membrane was measured. Table 1 summarizes the measurement results of proton conductivity of Example 13 at 80°C.

The membrane of Example 13 exhibited, for example, a proton conductivity of 0.012 S/cm at 80°C and 80% RH and 0.0045 S/cm at 80°C and 60% RH.

### [19] Example 14

### (1) Preparation of polyelectrolyte membrane (proton-conducting membrane) of Example 14

In Example 14, according to Scheme 6 below, poly(4-bromostyrene)-b-poly(4-tert-butylstyrene) (also referred to below as "Brs-B di-block copolymer") was first synthesized as a block copolymer (First Step).

Subsequently, a graft polymer comprising poly(diethyl vinylphosphonate) grafted as a branched chain onto block Brs of the Brs-B di-block copolymer (also referred to below as "(Brs-g-EvP)-B") was synthesized (Second Step).

Subsequently, the ester-protecting group in the poly(diethyl vinylphosphonate) as a branched chain was removed for deprotection by hydrolysis to synthesize a graft polymer comprising poly(vinylphosphonic acid) grafted as a branched chain onto block Brs of the Brs-B di-block copolymer having a proton-donating group (also referred to below as "(Brs-g-vPA)-B") (Third Step).

The (Brs-g-vPA)-B was formed into a membrane, thus obtaining a proton-conducting membrane of Example 11 (also referred to below as "(Brs-g-vPA)-B membrane") (Fourth Step).

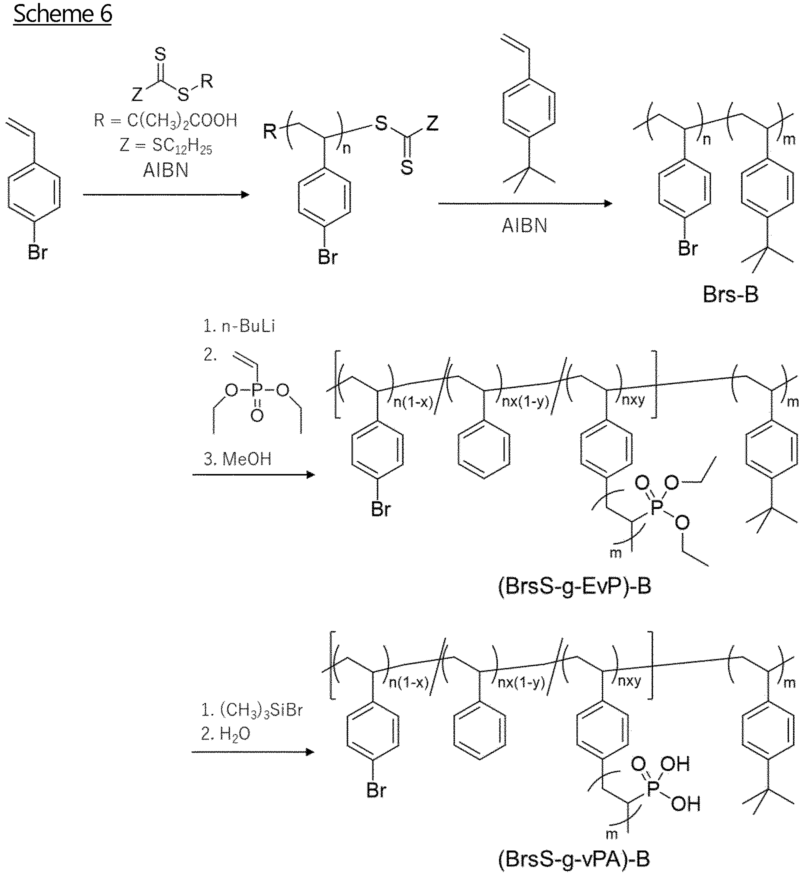

### (1-1) First step

### Step 1-1

A commercially available 4-bromostyrene was passed through a column packed with basic alumina to purify the 4-bromostyrene monomer.

6.00 g (0.037 mol) of the purified 4-bromostyrene monomer, 68.0 mg (0.19 mmol) of the RAFT agent, and 3.0 mg (0.019 mmol) of azobisisobutyronitrile (AIBN) were individually weighed out and mixed in a round-bottom flask with a stopcock to prepare a solution.

The solution was bubbled with nitrogen gas for 20 minutes and polymerization was allowed to proceed with stirring at 500 rpm at atmospheric pressure at 90°C using an oil bath. After 4 hours, the flask was immersed in liquid nitrogen to completely stop the polymerization reaction.

As the RAFT agent, 2-(dodecylthiocarbonothioylthio)-2-methylpropanoic acid was used.

About 40 mL of THF was added to the above reaction solution to prepare a roughly 8 mass% polymer solution. This polymer solution was added dropwise to about 300 mL of n-hexane to precipitate a polymer in the form of a powder (crude poly(4-bromostyrene)). The obtained polymer was separated by suction filtration and fully dried by vacuum drying, and then dissolved again in THF. The solution was added dropwise to methanol to precipitate a polymer.

The operation of precipitating a polymer was performed 3 times in total to remove unreacted monomers and low-molecular-weight oligomers, thus obtaining a purified poly(4-tert-bromostyrene). This purified poly(4-bromo-styrene) is also referred to below as "Brs."

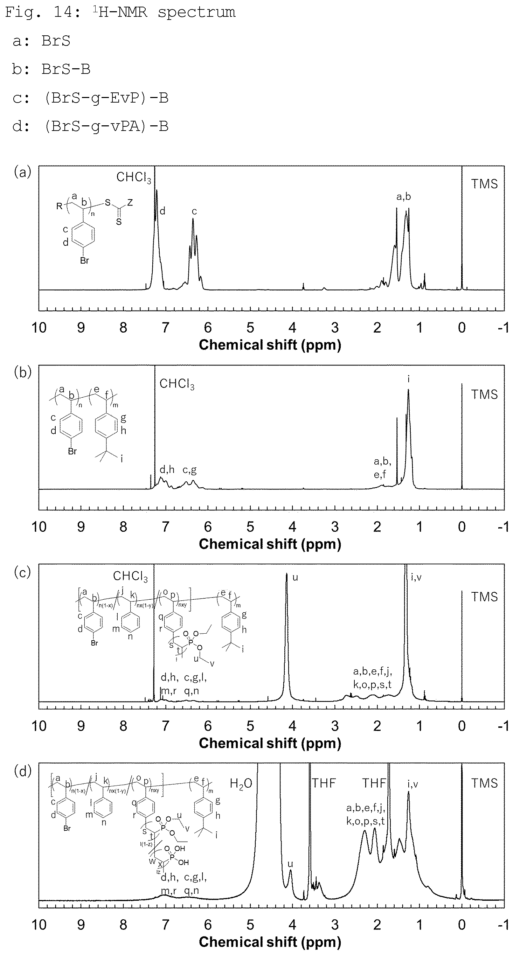

Using deuterated chloroform, the average degree of polymerization of Brs was estimated by the ¹H-NMR method (Fig. 14a). The average degree of polymerization was 100 and the average molecular weight was about 18000.

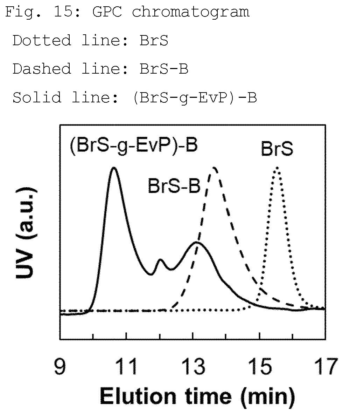

Brs was dissolved in THF to prepare a roughly 0.1 mass% Brs solution. The molecular weight distribution (Mw/Mn) was determined by GPC. Fig. 15 shows a GPC chromatogram of Brs as a dotted line. The Mw/Mn of Brs was 1.1.

### Step 1-2

Polymerization was performed in the same manner as in step 1-1 of Example 1 except that the Brs macro RAFT obtained in step 1-1 above was used as an RAFT agent and the amount of the 4-tert-butylstyrene monomer was changed appropriately to obtain a Brs-B di-block copolymer.

Brs-B was dissolved in deuterated chloroform to prepare a roughly 2 mass% Brs-B solution. The average degree of polymerization was determined by the ¹H-NMR method. Fig. 14b shows a ¹H-NMR spectrum of Brs-B. The average degree of polymerization of block Brs was 100, the average degree of polymerization of block B was 468, and the total number average molecular weight was about 93000.

The GPC measurement of Brs-B was performed. Fig. 15 shows a GPC chromatogram of Brs-B as a dashed line.

Since the peak of Brs-B shifted towards the B lower elution time side as compared to the peak of Brs, a block copolymer was confirmed to have been synthesized. The Mw/Mn was 1.5.

### (1-2) Second step

1.0 g of Brs-B (bromo group in the polymer: 1.2 mmol) was weighed out and placed in a round-bottom flask with a stopcock. The flask was purged with nitrogen. About 500 g of dehydrated THF was added to prepare a solution. The flask was placed in a cool bath and cooled to about -78°C. 1.5 mL (2.4 mmol) of a solution of n-butyl lithium in n-hexane (concentration: 1.59 mol/L) was added and stirred for about 15 minutes. The temperature was raised to about -40°C, and 6.3 g (38.5 mmol) of a diethyl vinylphosphate monomer that had been dried using molecular sieves 5A at least overnight was added and the resulting mixture was stirred for 1.5 hours. 0.79 g (25 mmol) of methanol was added to stop the reaction.

The above solution was concentrated by rotary evaporation at 45°C, and about 40 mL of THF was added. The resulting mixture was added dropwise to about 500 mL of n-hexane to precipitate (Brs-g-EvP)-B. The resulting polymer was separated by suction filtration and fully dried by vacuum drying to obtain (Brs-g-EvP)-B.

The (Brs-g-EvP)-B was dissolved in deuterated chloroform to prepare a roughly 2 mass% (Brs-g-EvP)-B solution. The average degree of polymerization was determined by the ¹H-NMR method. Fig. 14c shows a ¹H-NMR spectrum of (Brs-g-EvP)-B. The average degree of polymerization of block Brs was 100, the average degree of polymerization of block B was 468, and the total degree of polymerization of EvP component chains was about 1310 (assuming that one EvP branch polymer is formed per bromo group of the Brs-B polymer, the average degree of polymerization of the EvP branched polymer was 13).

The GPC measurement of the (Brs-g-EvP)-B was performed. Fig. 15 shows a GPC chromatogram of the (Brs-g-EvP)-B as a solid line.

Since the peak of the (Brs-g-EvP)-B shifted towards the lower elution time side as compared with the peak of the Brs-B peak, an EvP branched polymer is considered to have been formed in almost all Brs-B. Multiple peaks were also observed. From the lower elution time side, three or more, two, or one EvP is considered to have been formed in this order as a branched polymer.

### (1-3) Third step

A hydrolysis reaction was performed in the same manner as in Example 8 except that (Brs-g-EvP)-B was used as a polymer to prepare (Brs-g-vPA)-B.

The (Brs-g-vPA)-B was dissolved in deuterated THF/deuterated water (volume ratio: 1/1) to prepare a roughly 2 mass% (Brs-g-vPA)-B solution, and ¹H-NMR was measured. Fig. 14d shows a ¹H-NMR spectrum of the (Brs-g-vPA)-B as a solid line. Sinc the signal attributable to the ester of the EvP branch polymer around δ = 4.0 was reduced, it was confirmed from the integration ratio that the deprotection reaction had progressed by 96%.

Sharp peaks around 3.6 ppm and 1.8 ppm are peaks derived from THF. A large peak around 4.6 ppm is a peak derived from water.

### (1-4) Fourth step

0.50 g of (Brs-g-vPA)-B was dispersed in 4.2 g of a solvent mainly containing a mixed solvent of 1-propanol and water. The dispersion was allowed to stand at 60°C for about 12 hours to evaporate the solvent, thus preparing a proton-conducting electrolyte membrane of Example 14.

### (1-4) Assessment

### AC impedance measurement

AC impedance measurement was performed in the same manner as in Example 1, and proton conductivity of the (Brs-g-EvP)-B membrane was measured. Table 1 summarizes the measurement results of proton conductivity of Example 14. The membrane of Example 14 exhibited, for example, a proton conductivity of 0.0095 S/cm at 80°C and 80% RH, 0.00063 S/cm at 80°C and 40% RH, and 0.19 S/cm at 95°C and 98% RH.

### [20] Example 15

### (1) Preparation of polyelectrolyte membrane (proton-conducting membrane) of Example 15

In Example 15, the same procedures were performed as in Example 1 except that the amounts of the 4-tert-butylstyrene monomer and the n-butyl 4-styrene sulfonate monomer were changed appropriately to synthesize a B-nBsS di-block copolymer. The B-nBsS di-block copolymer was hydrolyzed in the same manner as in Example 1 to synthesize a B-sSA di-block copolymer (degree of polymerization of block B: 324, degree of polymerization of block sSA: 2916, number average molecular weight: 590000, B-sSA-4). A membrane composed of a mixture of the obtained B-sSA-4 and a commercially available 1-ethyl-3-methylimidazolium bromide shown below (also referred to below as "EMImBr") (which is also referred to below as "B-sSA-4/EMImBr membrane") was prepared, and this membrane was used as the proton-conducting electrolyte membrane of Example 15.

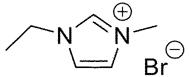

The membrane of a mixture of B-sSA-4 and EMImBr was prepared in the following manner. 0.047 g of B-sSA-4 and 0.046 g of EMImBr were individually dispersed in 0.50 g of a solvent mainly containing a mixed solvent of 1-propanol and water, and dissolved in 1.0 g of the solvent. After these solutions were mixed, the mixture was allowed to stand at 60°C for about 12 hours to evaporate the solvent, thus preparing the proton-conducting electrolyte membrane of Example 15. The weight ratio of B-sSA-4 to EMImBr was 51:49.

AC impedance measurement was performed in the same manner as in Example 1, and proton conductivity of the B-sSA-4/EMImBr membrane was measured. Table 1 summarizes the measurement results of proton conductivity of Example 15 at 80°C.

The membrane in Example 15 exhibited, for example, a proton conductivity of 0.36 S/cm at 80°C and 80% RH and 0.018 S/cm at 80°C and 40% RH.

### [21] Example 16

### (1) Preparation of polyelectrolyte membrane (proton-conducting membrane) of Example 16

In Example 16, the same procedures were performed as in Example 15 except that a commercially available 1-ethylpyridinium bromide shown below (also referred to below as "EPyBr") was used in place of EMImBrAs to prepare a membrane composed of a mixture of B-sSA-4 and EPyBr (also referred to below as "B-sSA-4/EPyBr membrane"). This membrane was used as the proton-conducting electrolyte membrane of Example 16. The weight ratio of B-sSA-4 to EPyBr was 50:50.

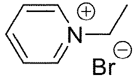

AC impedance measurement was performed in the same manner as in Example 1, and proton conductivity of the B-sSA-4/EPyBr membrane was measured. Table 1 summarizes the measurement results of proton conductivity of Example 16 at 80°C.

The membranes of Example 16 exhibited, for example, a proton conductivity of 0.34 S/cm at 80°C and 80% RH and 0.031 S/cm at 80°C and 40% RH.

### [22] Example 17

### (1) Preparation of polyelectrolyte membrane (proton-conducting membrane) of Example 17

In Example 17, the same procedures were performed as in Example 15 except that a commercially available tetrabutylammonium bromide shown below (also referred to below as "TBAmBr") was used in place of EMImBr) to prepare a membrane composed of a mixture of B-sSA-4 and TBAmBr (also referred to below as "B-sSA-4/TBAmBr membrane"). This was used as the proton-conducting electrolyte membrane of Example 17. The weight ratio of B-sSA-4 and TBAmBr was 37:63.

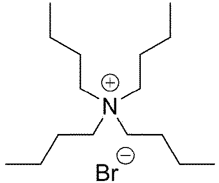

AC impedance measurement was performed in the same manner as in Example 1, and proton conductivity of the B-sSA-4/TBAmBr membrane was measured. Table 1 summarizes the measurement results of proton conductivity of Example 17 at 80°C.

The membrane of Example 17 exhibited, for example, a proton conductivity of 0.027 S/cm at 80°C and 80% RH and 0.00067 S/cm at 80°C and 40% RH.

### [23] Example 18

### (1) Preparation of polyelectrolyte membrane (proton-conducting membrane) of Example 18

In Example 18, the same procedures were performed as in Example 8 except that the amounts of the 4-tert-butylstyrene monomer and the 4-styrene phosphonic acid diethyl monomer were changed appropriately to prepare a B-EsP di-block copolymer. The B-EsP di-block copolymer was hydrolyzed in the same manner as in Example 8 to prepare a B-sPA di-block copolymer (degree of polymerization of block B: 324, degree of polymerization of block sPA: 1466, number average molecular weight: 320000, B-sPA-2). The same procedures were performed as in Example 15 except for using B-sPA-2 to prepare a membrane composed of a mixture of B-sPA-2 and EMImBr (also referred to below as "B-sPA-2/EMImBr membrane"). This membrane was used as the proton-conducting electrolyte membrane of Example 18. The weight ratio of B-sPA-2 and EMImBr was 52:48.

AC impedance measurement was performed in the same manner as in Example 1, and the proton conductivity of the B-sPA-2/EMImBr membrane was measured. Table 1 summarizes the measurement results of the proton conductivity of Example 18 at 80°C.

The membrane of Example 18 exhibited, for example, a proton conductivity of 0.12 S/cm at 80°C and 80% RH and 0.035 S/cm at 80°C and 40% RH.

### [24] Example 19

### (1) Preparation of polyelectrolyte membrane (proton-conducting membrane) of Example 19

In Example 19, the same procedures were performed as in Example 18 except for using EPyBr in place of EMImBr to prepare a membrane composed of a mixture of B-sPA-2 and EPyBr (also referred to below as "B-sPA-2/EPyBr membrane"). This membrane was used as the proton-conducting electrolyte membrane of Example 19. The weight ratio of B-sPA-2 to EPyBr was 54:46.

AC impedance measurement was performed as in Example 1, and proton conductivity of the B-sPA-2/EPyBr membrane was measured. Table 1 summarizes the measurement results of the proton conductivity of Example 19 at 80°C.

The membranes of Example 19 exhibited, for example, a proton conductivity of 0.11 S/cm at 80°C and 80% RH and 0.023 S/cm at 80°C and 40% RH.

### [25] Example 20

### (1) Preparation of polyelectrolyte membrane (proton-conducting membrane) of Example 20

In Example 20, the same procedures were performed as in Example 20 except that TBAmBr was used in place of EMImBr to prepare a membrane composed of a mixture of B-sPA-2 and TBAmBr (also referred to below as "B-sPA-2/TBAmBr membrane"). This membrane was used as the proton-conducting electrolyte membrane of Example 20. The weight ratio of B-sPA-2 to TBAmBr was 40:60.

AC impedance measurement was performed in the same manner as in Example 1, and proton conductivity of the B-sPA-2/TBAmBr membrane was measured. Table 1 summarizes the measurement results of the proton conductivity of Example 20 at 80°C.

The membrane of Example 20 exhibited, for example, a proton conductivity of 0.014 S/cm at 80°C and 80% RH and 0.0010 S/cm at 80°C and 40% RH.

### [26] Example 21

### (1) Preparation of polyelectrolyte membrane (proton-conducting membrane) of Example 21

In Example 21, the CL-sSA synthesized in Example 12 was immersed in an aqueous solution of EMImBr (concentration: about 3 wt%) and allowed to stand at 60°C for about 12 hours to evaporate the solvent. After adding about 1 g of water, the resulting mixture was allowed to stand again at 60°C for about 12 hours to evaporate water. EMImBr was allowed to permeate CL-sSA to prepare the proton-conducting electrolyte membrane of Example 21 (also referred to below as "CL-sSA/EMImBr membrane"). The weight ratio of CL-sSA to EMImBr was 49:51.

AC impedance measurement was performed in the same manner as in Example 1, and the proton conductivity of the CL-sSA/EMImBr membrane was measured. Table 1 summarizes the measurement results of the proton conductivity of Example 21 at 80°C.

The membrane of Example 21 exhibited, for example, a proton conductivity of 0.37 S/cm at 80°C and 80% RH and 0.028 S/cm at 80°C and 40% RH.

### [27] Example 22

### (1) Preparation of polyelectrolyte membrane (proton-conducting membrane) of Example 22

In Example 22, the same procedures were performed as in Example 21 except that EPyBr was used in place of EMImBr to prepare a membrane composed of a mixture of CL-sSA and EPybR (also referred to below as "CL-sSA/EPyBr membrane"). This membrane was used as the proton-conducting electrolyte membrane of Example 22. The weight ratio of CL-sSA to EPyBr was 50:50.

AC impedance measurement was performed in the same manner as in Example 1, and the proton conductivity of the CL-sSA/EPyBr membrane was measured. Table 1 summarizes the measurement results of the proton conductivity of Example 22 at 80°C.

The membrane of Example 22 exhibited, for example, a proton conductivity of 0.40 S/cm at 80°C and 80% RH and 0.043 S/cm at 80°C and 40% RH.

### [28] Example 23

### (1) Preparation of the polyelectrolyte membrane (proton-conducting membrane) of Example 23

In Example 23, the same procedures were performed as in Example 21 except for using the CL-sPA synthesized in Example 13 to prepare a membrane comprising a mixture of CL-sPA and EMImBr (also referred to below as "CL-spA/EMImBr membrane"). This membrane was used as the proton-conducting electrolyte membrane of Example 24. The weight ratio of CL-sPA and EMImBr was 49:51.

AC impedance measurement was performed in the same manner as in Example 1, and the proton conductivity of the CL-sPA/EMImBr membrane was measured. Table 1 summarizes the measurement results of proton conductivity of Example 24 at 80°C.

The membrane of Example 24 exhibited, for example, a proton conductivity of 0.12 S/cm at 80°C and 80% RH and 0.0039 S/cm at 80°C and 40% RH.

### [29] Example 24

### (1) Preparation of polyelectrolyte membrane (proton-conducting membrane) of Example 24

In Example 24, except that EPyBr was used in place of EMImBr, the same procedures were performed as in Example 21 to prepare a membrane comprising a mixture of CL-sPA and EPyBr (also referred to below as "CL-sPA/EPyBr membrane"). This was used as the proton-conducting electrolyte membrane of Example 24. The weight ratio of CL-sPA and EPyBr was 50:50.

AC impedance measurement was performed in the same manner as in Example 1, and the proton conductivity of the CL-sPA/EPyBr membrane was measured. Table 1 summarizes the measurement results of the proton conductivity of Example 24 at 80°C.

The membrane of Example 24 exhibited, for example, a proton conductivity of 0.12 S/cm at 80°C and 80% RH and 0.15 S/cm at 100°C and 80% RH.

### [30] Example 25

### (1) Preparation of polyelectrolyte membrane (proton-conducting membrane) of Example 25

In Example 25, the same procedures were performed as in Example 15 except for using the (Brs-g-vPA)-B synthesized in Example 14 to prepare a membrane comprising a mixture of (Brs-g-vPA)-B and EMImBr (also referred to below as "(Brs-g-vPA)-B/EMImBr membrane"). This membrane was used as the proton-conducting electrolyte membrane of Example 25. The weight ratio of (Brs-g-vPA)-B to EMImBr was 36:64.

AC impedance measurement was performed in the same manner as in Example 1, and the proton conductivity of the (Brs-g-vPA)-B/EMImBr membrane was measured. Table 1 summarizes the measurement results of the proton conductivity of Example 25 at 80°C.

The membrane of Example 25 exhibited, for example, a proton conductivity of 0.26 S/cm at 80°C, 80% RH and 0.034 S/cm at 80°C, 40% RH.

### [31] Example 26

### (1) Preparation of polyelectrolyte membrane (proton-conducting membrane) of Example 26

In Example 26, the same procedures were performed as in Example 27 except that EPyBr was used in place of EMImBr to prepare a membrane composed of a mixture of (Brs-g-vPA)-B and EPyBr (also referred to below as "(Brs-g-vPA)-B/EPyBr membrane"). This membrane was used as the proton-conducting electrolyte membrane of Example 28. The weight ratio of (Brs-g-vPA)-B to EPyBr was 37.4:62.6.

AC impedance measurement was performed in the same manner as in Example 1, and the proton conductivity of the (Brs-g-vPA)-B/EPyBr membrane was measured. Table 1 summarizes the measurement results of the proton conductivity of Example 26 at 80°C.

The membrane of Example 26 exhibited, for example, a proton conductivity of 0.12 S/cm at 80°C and 80% RH and 0.016 S/cm at 80°C and 40% RH.

### [32] Example 27

### (1) Preparation of polyelectrolyte membrane (proton-conducting membrane) of Example 27

In Example 27, except that TBAmBr was used in place of EMImBr, the same procedures were performed as in Example 15 to prepare a membrane comprising a mixture of (Brs-g-vPA)-B and TBAmBr (also referred to below as "(Brs-g-vPA)-B/TBAmBr membrane"). This membrane was used as the proton-conducting electrolyte membrane of Example 27. The weight ratio of (Brs-g-vPA)-B to TBAmBr was 26:74.

AC impedance measurement was performed in the same manner as in Example 1, and the proton conductivity of (Brs-g-vPA)-B/TBAmBr membranes was measured. The measurement results of the proton conductivity of Example 27 at 80°C are summarized in Table 1.

The membrane of Example 27 exhibited, for example, a proton conductivity of 0.028 S/cm at 80°C and 80% RH and 0.0023 S/cm at 80°C and 40% RH.

**Table 1: Proton conductivity of Examples 1-3 and 8-27 and Comparative Example 1 under humidified conditions**

| | Type of proton-conducting membrane | Weight fraction of proton-conducting phase in the membrane (wt%) | Conductivity (S/cm) | | | | | | | | | | | | |
|---|---|---|---|---|---|---|---|---|---|---|---|---|---|---|---|
| | | | 80°C | | | | | | 95°C | | | | | 100°C | |
| | | | 30% RH | 40% RH | 50% RH | 60% RH | 70% RH | 80% RH | 50% RH | 60% RH | 70% RH | 80% RH | 98% RH | 40% RH | 80% RH |
| Example 1 | B-sSA-1 | 79.8 | - | - | 0.057 | 0.11 | 0.23 | 0.46 | 0.071 | 0.14 | 0.30 | 0.53 | - | - | - |
| Comp. Ex. 1 | NR212 | - | - | - | 0.033 | 0.039 | 0.050 | 0.061 | 0.029 | 0.039 | 0.047 | 0.049 | - | - | - |
| Example 2 | B-sSA-2 | 73.2 | - | - | 0.083 | 0.15 | 0.26 | 0.45 | 0.067 | 0.13 | 0.22 | 0.41 | - | - | - |
| Example 3 | B-3/B-sSA-1 (weight ratio: 2/8) | 63.8 | _ | - | 0.029 | 0.060 | 0.11 | 0.19 | 0.024 | 0.045 | 0.098 | 0.19 | - | - | - |
| Example 8 | B-sPA-1 | 83.9 | - | - | - | - | - | 0.000 66 | - | - | - | 0.00089 | 0.0080 | - | - |
| Example 9 | B-sSA-3 | 91.2 | 0.067 | 0.13 | - | 0.46 | - | 1.4 | - | - | - | - | - | - | - |
| Example 10 | B-(sSA-co-sPA)-1 | 80.3 | 0.0038 | 0.0092 | - | 0.038 | - | 0.14 | - | - | - | - | - | - | - |
| Example 11 | B-(sSA-co-sPA)-2 | 71.0 | - | 0.00084 | - | 0.011 | - | 0.080 | - | - | - | - | - | - | - |
| Example 12 | CL-sSA | 99.1 | - | - | - | 0.11 | | 0.33 | - | - | - | - | - | - | - |
| Example 13 | CL-sPA | 97.9 | - | - | - | 0.0045 | - | 0.012 | - | - | - | - | - | - | 0.012 |
| Example 14 | (Bns-g-vPA)-B | 62.4 | 0.00063 | 0.0013 | - | 0.0014 | - | 0.009 5 | - | - | - | - | 0.19 | - | - |
| Example 15 | B-sSA-4/EMImBr | 95 | 0.0082 | 0.018 | - | 0.13 | - | 0.36 | - | - | - | - | - | - | 0.14 |
| Example 16 | B-sSA-4/EPyBr | 96 | 0.014 | 0.031 | - | 0.13 | - | 0.34 | - | - | - | - | - | 0.017 | 0.17 |
| Example 17 | B-sSA-4/TBAmBr | 97 | 0.00026 | 0.00067 | - | 0.0039 | - | 0.027 | - | - | - | - | - | - | 0.022 |
| Example 18 | B-sPA-2/EMImBr | 92 | - | 0.035 | - | 0.087 | - | 0.12 | - | - | - | - | - | - | 0.15 |
| Example 19 | B-sPA-2/EPyBr | 91 | - | 0.023 | - | 0.079 | - | 0.11 | - | - | - | - | - | - | 0.14 |
| Example 20 | B-sPA-2/TBAmBr | 94 | - | 0.0010 | - | 0.0041 | - | 0.014 | - | - | - | - | - | - | 0.026 |
| Example 21 | CL-sSA/EMImBr | 99 | 0.012 | 0.028 | - | 0.11 | - | 0.37 | - | - | - | - | - | 0.043 | 0.45 |
| Example 22 | CL-sSA/EPyBr | 99 | 0.0059 | 0.043 | - | 0.15 | - | 0.40 | - | - | - | - | - | 0.054 | 0.43 |
| Example 23 | CL-sPA/EMImBr | 99 | 0.0014 | 0.0039 | - | 0.019 | - | 0.12 | - | - | - | - | - | 0.0047 | 0.13 |
| Example 24 | CL-sPA/EPvBr | 99 | - | - | - | 0.049 | - | 0.12 | - | - | - | - | - | 0.0033 | 0.15 |
| Example 25 | (Brs-g-vPA)-B /EMImBr | 86 | 0.021 | 0.034 | - | 0.087 | - | 0.26 | - | - | - | - | - | 0.020 | 0.27 |
| Example 26 | (Bns-g-vPA)-B /EPyBr | 86 | 0.0096 | 0.016 | - | 0.030 | - | 0.12 | - | - | - | - | - | 0.015 | 0.11 |
| Example 27 | (Bns-g-vPA)-B /TBAmBr | 90 | 0.0011 | 0.0023 | - | 0.0087 | - | 0.028 | - | - | - | - | - | 0.0046 | 0.036 |

**Table 2: Proton conductivity of Examples 4 to 7 and Comparative Example 1 at 125°C under non-humidified conditions**

| | Type of proton-conducting membrane | Weight ratio of each component: | Conductivity at 125°C under non-humidified conditions |
|---|---|---|---|
| | | | (S/cm) |
| Comp. Ex. 1 | NR212 | - | 0.00014 |
| Example 4 | B-3/B-sSA-1/H₂SO₄ | 18/42/40 | 0.056 |
| Comp. Ex. 2 | B-3/B-2VP/H₂SO₄ | 14/34/52 | 0.022 |
| Example 5 | B-3/B-sSA-1/H₃PO₄ | 6/24/70 | 0.10 |
| Example 6 | B-3/B-sSA-1/H₂SO₄ | 14/34/52 | 0.079 |
| Example 7 | B-3/B-sSA-1/H₂SO₄ | 12/28/60 | 0.094 |
| Comp. Ex. 4 | B-3/B-2VP/H₂SO₄ | 18/42/40 | 0.00093 |
| Comp. Ex. 5 | B-3/B-2VP/H₂SO₄ | 12/28/60 | 0.040 |

### Example 28

In Example 28, diethyl 4-(4-vinylphenyl)butylphosphonate was synthesized as a phosphonic acid ester monomer having an alkyl spacer according to Scheme 1 below (First Step). Subsequently, this monomer was polymerized according to Scheme 2 below (Second Step). The alkyl protecting group in the obtained diethyl poly(4-(4-vinylphenyl)butylphosphonate) was removed for deprotection to synthesize poly(4-(4-vinylphenyl)butylphosphonic acid), which is a phosphonic acid polymer having an alkyl spacer (also known as poly(4-(4-phosphonobutyl)styrene)) (Third Step).

This poly(4-(4-vinylphenyl)butylphosphonic acid) was formed into a membrane to prepare the proton-conducting electrolyte membrane of Example 28 (Fourth Step).

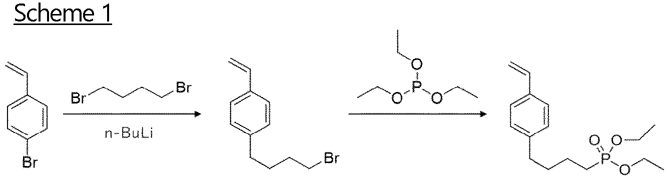

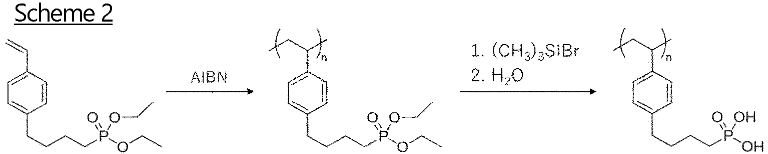

### First step

### Step 1-1

In a recovery flask with a stopcock, 7.18 g (0.0392 mol) of 4-bromostyrene was dissolved in 100 mL of dehydrated tetrahydrofuran (THF) and cooled in a cool bath at -80°C. While the flask was kept in the cool bath, 24.7 mL (0.0392 mol) of a solution of n-butyl lithium in n-hexane (concentration: 1.59 mol/L) was added and stirred for 1 hour. After adding 46 mL (85 g, 0.39 mol) of 1,4-dibromobutane, the recovery flask was removed from the cool bath and stirring was performed for 20 hours at room temperature to synthesize 1-(4-bromobutyl)-4-vinylbenzene.

After adding 50 mL of pure water, the volatile solvents (THF and n-hexane) were evaporated by rotary evaporation. After liquid separation using dichloromethane was performed 5 times and the dichloromethane phase was washed with saturated brine 2 times, the dichloromethane was removed by rotary evaporation. 1.04 g of 4-tert-butylcatechol (TBC) as a polymerization inhibitor was added and the pressure was reduced with a vacuum pump in an oil bath at 120°C for 10 hours to remove unreacted 1,4-dibromobutane and byproducts.

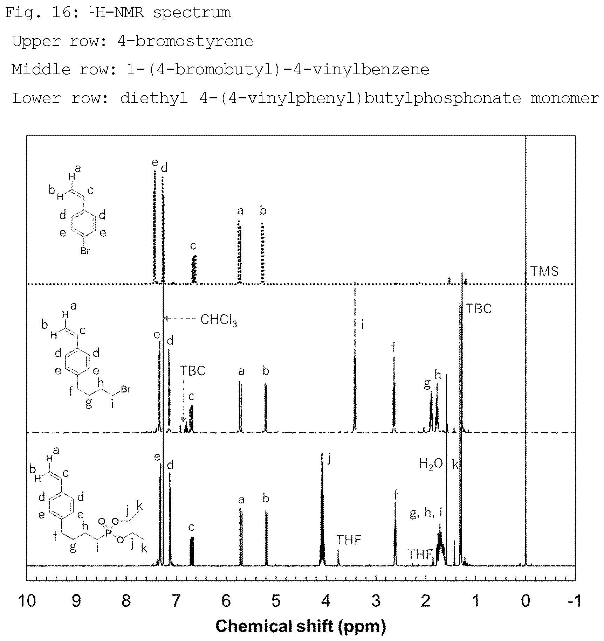

The liquid obtained after reducing the pressure, was dissolved in deuterated chloroform to prepare a roughly 1 mass% solution, and ¹H-NMR was measured. Fig. 16 shows a ¹H-NMR spectrum of the solution as a dashed line. Further, Fig. 16 shows a ¹H-NMR spectrum of 4-bromostyrene as a dotted line.

In the ¹H-NMR spectrum of the precursor 4-bromostyrene, protons (a, b and c) attached to the vinyl group are observed around 5.2 ppm, 5.7 ppm, and 6.7 ppm, and protons (d and e) attached to the benzene ring are observed around 7.3 ppm and 7.4 ppm.

In the ¹H-NMR spectrum after the reaction, the protons (a, b, c) attached to the vinyl group hardly changed in chemical shift, whereas the peaks derived from the protons (d, e) attached to the benzene ring shifted to around 7.1 ppm and 7.3 ppm.

Since the peak of methylene proton (f) adjacent to the benzene ring was 2.6 ppm, the peak of its adjacent methylene proton (g) was observed around 1.9 ppm, the peak of the methylene proton (h) further adjacent to the methylene proton (g) was observed around 1.8 ppm, and the peak of the bromo-attached methylene proton (i) was observed around 3.4 ppm, and the integration ratio of these peaks was approximately 1:1:1:1, 1-(4-bromobutyl)-4-vinylbenzene is considered to have been obtained. The peak at 7.27 ppm is a peak derived from chloroform. The peaks around 1.9 ppm and 6.8 to 6.9 ppm are peaks derived from TBC.

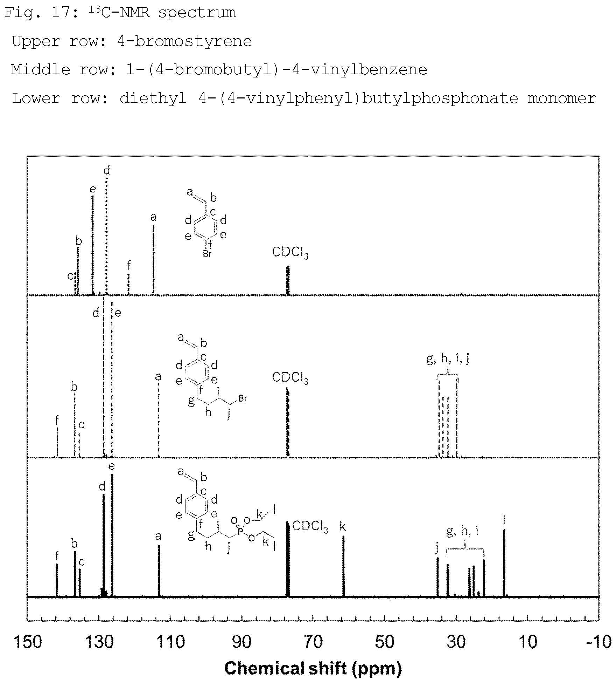

The liquid obtained after reducing the pressure was dissolved in deuterated chloroform to prepare a roughly 3 mass% solution, and ¹³C-NMR measurement was also performed. Fig. 17 show a ¹³C-NMR spectrum of the solution as dashed lines. Further, Fig. 17 shows a ¹³C-NMR spectrum of 4-bromostyrene as a dotted line.

In the ¹³C-NMR spectrum of the precursor 4-bromostyrene, carbons (a, b and c) of the vinyl group were observed around 115 ppm, 136 ppm, and 137 ppm, respectively. The carbons (d, e, and f) attached to the benzene ring were observed around 128 ppm, 132 ppm, and 122 ppm, respectively.

In the ¹³C-NMR spectrum after the reaction, the protons (a, b and c) attached to the vinyl group chemically shifted to around 113 ppm, 137 ppm, and 135 ppm, respectively, whereas the peaks derived from the protons (d, e, and f) attached to the benzene ring shifted to around 129 ppm and around 126 ppm. This change in chemical shift is considered to be due to the loss of the bromo group attached to the benzene ring.

Further, since peaks derived from carbons of the methylene group (g, h, i, j) were newly observed at 30 to 35 ppm, 1-(4-bromobutyl)-4-vinylbenzene was considered to have been obtained. The peak around 77 ppm is a peak derived from chloroform.

### Step 1-2

5.31 g (0.0222 mol) of 1-(4-bromobutyl)-4-vinylbenzene was dissolved in 5.02 g of phenylacetonitrile, and 0.74 g (0.0044 mol) of TBC was added. 7.40 g (0.0444 mol) of triethyl phosphite was added, and the resulting mixture was stirred in an oil bath at 120°C for 24 hours. The pressure was then reduced with a vacuum pump in an oil bath at 120°C for 10 hours to remove the solvent phenylacetonitrile and unreacted triethyl phosphite.

The resulting liquid was passed through a silica gel column to separate and purify the liquid. As the development solvent, a mixed solvent of n-hexane and 2-propanol was used. The obtained monomer was dissolved in about 10 mL of THF, and the solution was passed through an alumina column to remove TBC. THF was removed by rotary evaporation to obtain a diethyl 4-(4-(vinylphenyl)butylphosphonate monomer.

The liquid obtained after purification was dissolved in deuterated chloroform to prepare a roughly 1 mass% solution, and ¹H-NMR was measured. Fig. 16 shows a ¹H-NMR spectrum of the solution as a solid line.

The protons (a to f) attached to the vinyl group, the benzene ring, and the benzyl position hardly changed in chemical shift. On the other hand, the peak derived from proton i of 1-(4-bromobutyl)-4-vinylbenzene disappeared.

Further, a peak derived from a proton (j) of the methylene group adjacent to the oxygen atom of the phosphoric acid ester appeared at around 4.1 ppm, a peak derived from a proton (k) of the methyl group adjacent to it appeared at around 1.3 ppm, a peak of a proton attached to the methylene group adjacent to the benzyl position, a peak of the methylene proton (h) further adjacent to it, and a peak of the methylene proton (i) adjacent to the phosphorus atom were observed at 1.6 to 1.8 ppm, and the integral ratio of peaks j, k, and g to i was approximately 2:3:3. These results confirmed that a diethyl 4-(4-(vinylphenyl)butylphosphonate monomer had been obtained. The peak at 7.27 ppm is a peak derived from chloroform. The peaks around 1.9 ppm and around 6.8 to 6.9 ppm are peaks derived from TBC.

The liquid obtained after purification was dissolved in deuterated chloroform to prepare a roughly 3 mass% solution, and ¹³C-NMR measurement was also performed. Fig. 17 shows a ¹³C-NMR spectrum of the solution as a solid line.

The carbons (a to f) of the vinyl group and the benzene ring hardly changed in chemical shift. In contrast, the peaks g to j derived from carbons of the methylene group shifted in the range of 22 to 35 ppm.

Further, since a new peak derived from the carbon (k) of the methylene group adjacent to the oxygen atom of the phosphoric acid ester appeared around 62 ppm and a new peak derived from the proton (l) of the methyl group adjacent to the methylene group appeared around 17 ppm, a diethyl 4-(4(-vinylphenyl)butylphosphonate monomer was confirmed to have been obtained. The peak around 77 ppm is a peak derived from chloroform.

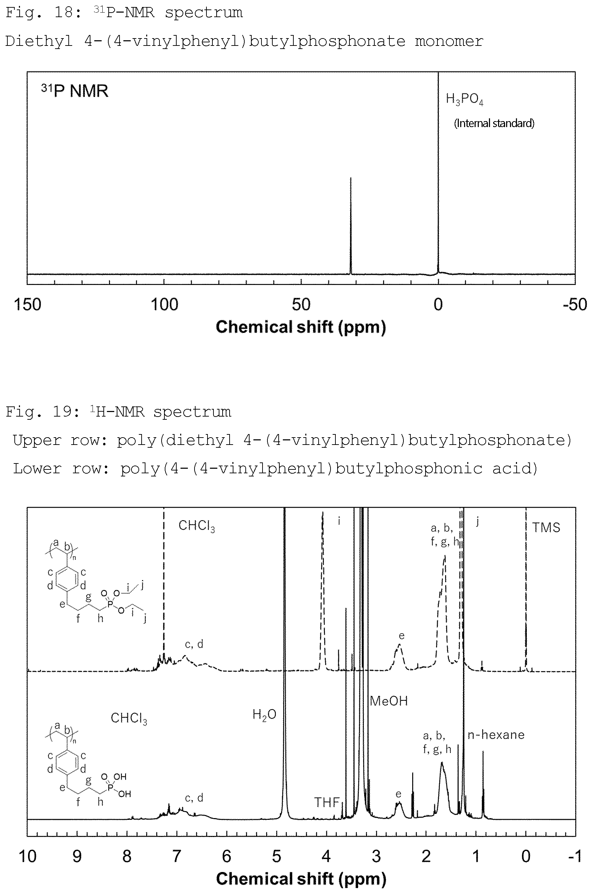

The liquid obtained after purification was dissolved in deuterated dimethyl sulfoxide to prepare a roughly 6 mass% solution. As an internal standard, a 85% phosphoric acid solution was added to the solution, and ³¹P-NMR was measured. Fig. 18 shows a ³¹P-NMR spectrum of the solution.

Since only a peak derived from the phosphorus atom of the phosphonic acid diester around 33 ppm was observed, the result suggests that no phosphorous compounds other than the target phosphonic acid diester were present. The above NMR measurement results confirmed that a diethyl 4-(4-vinylphenyl)butylphosphonate monomer was obtained.

### Second step

0.503 g (1.68 mmol) of the diethyl 4-(4-vinylphenyl)butylphosphonate monomer obtained in the first step, 2.0 mg (0.012 mmol) of azobisisobutyronitrile (AIBN), and 0.5 g of phenylacetonitrile were individually weighed out and mixed in a round-bottom flask with a stopcock to prepare a solution.

The solution was bubbled with nitrogen gas for 30 minutes and polymerization was allowed to proceed with stirring at 500 rpm at atmospheric pressure at 120°C using an oil bath. After 5 hours, the flask was immersed in liquid nitrogen to completely stop the polymerization reaction.

The above reaction solution was dissolved in about 1 mL of chloroform and the solution was added dropwise to about 20 mL of n-hexane to precipitate an oily polymer (crude poly(diethyl 4-(4-vinylphenyl)butylphosphonate)). After the obtained polymer was separated by decantation and fully dried by vacuum drying, the polymer was dissolved again in chloroform. The solution was added dropwise to n-hexane to precipitate a polymer and unreacted monomers and low-molecular-weight oligomers were removed to obtain purified poly(diethyl 4-(4-vinylphenyl)butylphosphonate).

¹H-NMR was measured using deuterated chloroform. Fig. 19 shows a ¹H-NMR spectrum of poly(diethyl 4-(4-vinylphenyl)butylphosphonate) as a dashed line.

Since the peak derived from the proton of the vinyl group disappeared and broad signals derived from protons c to j were observed at positions similar to those in the chemical shifts of the monomer, a polymer was considered to have been obtained.

Poly(diethyl 4-(4-vinylphenyl)butylphosphonate) was dissolved in THF to prepare a roughly 0.1 mass% solution. The molecular weight distribution (Mw/Mn) was determined by gel permeation chromatography (GPC). The Mw/Mn and Mw were determined by the molecular weight calibration method using standard polystyrene and were found to be 2.5 and 45k, respectively.

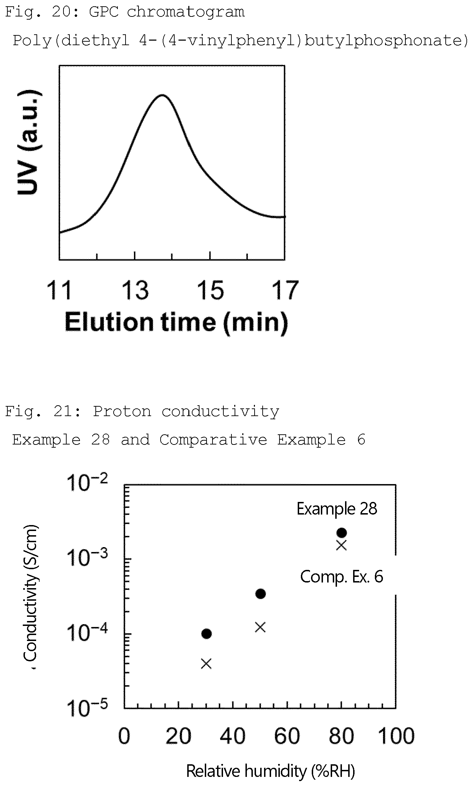

Fig. 20 shows a GPC chromatogram of poly(diethyl 4-(4-vinylphenyl)butylphosphonate). For molecular weight calibration, standard polystyrene was used. Using a THF-based solvent as the eluent, the measurement was performed at a flow rate of 1 mL/min and a temperature of 40°C with two GMHHR-M TSKgel columns (produced by Tosoh Corporation) connected together.

### Third step

Literature (Macromolecules, 2018, 51, 1120-1128) describes that after poly(diethyl 4-styrenephosphonate) was reacted with bromotrimethylsilane, dialysis was performed using a methanol solvent to deprotect the alkyl group of poly(diethyl 4-styrenephosphonate), thus synthesizing poly(4-styrenephosphonic acid) not having an alkyl spacer.

With reference to this reaction, the poly(diethyl 4-(4-vinylphenyl)butylphosphonate) obtained in the second step was reacted with bromotrimethylsilane, and dialysis was then performed using water in place of methanol to perform a deprotection reaction.

Specifically, 0.30 g (1.0 mmol in terms of monomer unit) of poly(diethyl 4-(4-vinylphenyl)butylphosphonate) was dissolved in 3.0 mL chloroform, and 2.3 g (0.015 mol) of bromotrimethylsilane was added. The mixture was placed in an oil bath at 40°C and stirred for 15 hours. This solution was concentrated by rotary evaporation and then mixed with about 5 mL of pure water. The mixture was transferred to a cellulose tube for dialysis and immersed in pure water for about 3 hours to perform dialysis. This dialysis was repeated 3 times in total. The solution after dialysis was dried at 100°C to obtain poly(4-(4-vinylphenyl)butylphosphonic acid).

Poly(4-(4-vinylphenyl)butylphosphonic acid) was dissolved in deuterated chloroform/deuterated methanol (volume ratio: 6/4) to prepare a roughly 2 mass% solution, and ¹H-NMR was measured. Fig. 19 shows a ¹H-NMR spectrum of poly(4-(4-vinylphenyl)butylphosphonic acid) as a solid line.

The peak derived from the proton of the methylene group adjacent to the oxygen atom of the phosphonic acid diester around 4.1 ppm almost disappeared. The result confirmed that deprotection had progressed by 96%.

The sharp peak around 3.3 ppm is a peak derived from methanol, and the peak around 4.8 ppm is a peak derived from residual water in the polymer. Further, the peaks around 1.8 ppm and 3.7 ppm are peaks derived from THF; the peaks around 0.9 ppm and 1.3 ppm are peaks derived from n-hexane; and the peak around 2.3 ppm is considered to be a peak derived from a byproduct of the deprotection reaction or impurities.

### Fourth step

0.050 g of poly(4-(4-vinylphenyl)butylphosphonic acid) was dissolved in 1.5 g of a solvent mainly containing a mixed solvent of 1-propanol and water, and the solution was transferred to a polypropylene container and allowed to stand at 70°C for about 6 hours to evaporate the solvent, thus preparing a poly(4-(4-vinylphenyl)butylphosphonic acid) membrane.

### Assessment

### AC impedance measurement

Using a 0.1 mm thick platinum mesh as electrodes, a sample of the proton-conducting electrolyte membrane of Example 28 was subjected to AC impedance measurement.

Specifically, the proton-conducting electrolyte membrane of Example 28 was cut into a strip (0.11 mm thick, 2.5 mm wide, and 10 mm long) to prepare a sample. The sample was interposed between a pair of electrodes disposed to face each other with a distance between the electrodes of 0.70 cm and a width of 0.203 cm. The sample interposed between the electrodes was placed in a small environmental tester (SH-242, produced by Espec) and allowed to stand at a temperature of 80°C and a relative humidity of 80% RH (partial pressure of water vapor p_{H2O} = 379 hPa) for 3 hours or more.

AC impedance measurement was performed under humidified conditions at 80% RH using a VSP-300 potentiometer/galvanostat (produced by BioLogic Science Instruments) with a voltage of 50 mV and a frequency varying from 7 × 10⁶ Hz to 10° Hz. The resistance reading at the minimum of the Nyquist plot was 1.3 × 10⁵ Ω.

The proton conductivity of this proton-conducting electrolyte membrane sample was calculated according to the following formula (1) and found to be 2.3 × 10⁻³ S/cm (Table 3). Proton conductivity = Distance between electrodes/(Thickness of membrane x Width of electrode x Resistance at the minimum of the Nyguist plot)

Subsequently, the proton-conducting electrolyte membrane sample was allowed to stand under measurement conditions at a temperature of 80°C and a relative humidity of 50% RH (p_{H2O} = 237 hPa) for about 3 hours, and AC impedance measurement was performed. The resistance at the minimum of the Nyquist plot was 8.7 × 10⁵ Ω, and the proton conductivity was 3.5 × 10⁻⁴ S/cm (Table 3) .

Subsequently, the proton-conducting electrolyte membrane sample was allowed to stand under measurement conditions at a temperature of 80°C and a relative humidity of 30% RH (p_{H2O} = 142 hPa) for about 2 hours, and AC impedance measurement was performed. The resistance at the minimum of the Nyquist plot was 3.0 × 10⁶ Ω, and the proton conductivity was 1.0 × 10⁻⁴ S/cm (Table 3).

Fig. 21 shows the measurement results of the proton conductivity of Example 28 at 80°C as black circles (●). Table 3 also summarizes the results.

### Comparative Example 6

In Comparative Example 6, poly(4-styrenephosphonic acid) not having an alkyl spacer (also referred to below as "sPA") was synthesized. AC impedance measurement was performed in the same manner as in Example 28 and the proton conductivity was measured.

Literature (Org. Lett. 2011, 13(8), 2110-2113) describes synthesizing a diethyl 4-styrene phosphonate monomer by reacting p-styrylboronic acid with diethyl phosphite in the presence of 1,10-phenanthroline and copper(I) oxide as a catalyst. In the same manner as this reaction, a diethyl 4-styrenephosphonate monomer was synthesized. For purification, the monomer was passed through basic alumina immediately before use.

2.03 g (0.00845 mol) of the purified diethyl 4-styrenephosphonate monomer, 1.2 mg (0.0033 mmol) of an RAFT agent, and 0.6 mg (0.0033 mmol) of AIBN were individually weighed out and mixed in a round-bottom flask with a stopcock to prepare a solution. The solution was bubbled with nitrogen gas for 30 minutes and polymerization was allowed to proceed with stirring at 500 rpm at atmospheric pressure at 85°C using an oil bath. After 30 minutes, the flask was immersed in liquid nitrogen to completely stop the polymerization reaction.

As the RAFT agent, 2-(dodecylthiocarbonothioylthio)-2-methylpropanoic acid was used.

About 10 mL of THF was added to the reaction solution to prepare a roughly 8 mass% polymer solution. This polymer solution was added dropwise to about 150 mL of n-hexane to precipitate a polymer in the form of a powder (crude poly(diethyl 4-styrenephosphonate). The obtained polymer was separated by suction filtration and fully dried by vacuum drying, and then dissolved again in THF. The solution was added dropwise to n-hexane to precipitate the polymer. The operation of precipitating the polymer was performed 3 times in total to remove unreacted monomers and low-molecular-weight oligomers, thus obtaining purified poly(diethyl 4-styrenephosphonate).

The purified poly(diethyl 4-styrenephosphonate) was dissolved in THF to prepare a roughly 0.1 mass% poly(diethyl 4-styrenephosphonate) solution. The Mw/Mn and Mw of the poly(diethyl 4-styrene phosphonate) were determined by GPC in the same manner as in Example 28. The Mw/Mn was 1.45 and the Mw was 110k.

A deprotection reaction of poly(diethyl 4-styrenephosphonate) was performed in the same manner as in the third step of Example 28 to obtain poly(4-styrenephosphonic acid). A poly(4-styrenephosphonic acid) membrane was prepared in the same manner as in the fourth step of Example 28. The deprotection rate achieved by removal of the alkyl-protecting group was determined by the ¹H-NMR method and found to be about 99%, or 99% or more.

The proton conductivity of the poly(4-styrenephosphonic acid) membrane was measured in the same manner as in Example 28. Fig. 21 shows the measurement results of the proton conductivity of Comparative Example 6 at 80°C as cross marks (x). Table 3 also summarizes the results.

The membrane of Comparative Example 6 showed a proton conductivity of 7.5 x 10⁻³ S/cm at 95°C and 98% RH; 3.2 × 10⁻³ S/cm at 95°C and 80% RH; 1.5 × 10⁻³ S/cm at 80°C and 80% RH; 1.2 × 10⁻⁴ S/cm at 80°C and 50% RH; and 4.0 × 10⁻⁵ S/cm at 80°C and 30% RH.

As compared with the poly(4-styrenephosphonic acid) membrane not having an alkyl spacer of Comparative Example 6 (EW = 184, pKa (indicator of acidity) of the low-molecular-weight phosphonic acid similar in structure to the monomer unit = about 1.8 to 2.0 (ACS Appl. Mater. Interfaces 2019, 11 (37), 33931-33940)), the poly(4-(4-vinylphenyl)butylphosphonic acid) membrane having an alkyl spacer of Example 28 (equivalent mass EW = 240, the equivalent mas indicating ion exchange capacity; pKa of the low-molecular-weight phosphonic acid similar in structure to the monomer unit = about 2.4 (ACS. Appl. Mater. Interfaces 2019, 11(37), 33931-33940)) showed a higher proton conductivity in spite of having a larger EW (a lower molar concentration of acid groups) and lower acidity (larger pKa). The difference in conductivity is found to be particularly significant when fewer molecules are present in the membrane under low humidified conditions.

This is probably because in the poly(4-styrenephosphonic acid) of Comparative Example 6, the absence of an alkyl spacer made it difficult for phosphonic acid groups to come into close proximity with each other, and conducting paths comprising water molecules and phosphonic acid groups tend to form discontinuously, whereas in the poly(4-(4-vinylphenyl)butylphosphonic acid) of Example 28, the alkyl spacer facilitates phosphonic acid groups to come into close proximity with each other, and the conducting paths are more easily formed continuously, which results in a larger EW, thus exhibiting higher conductivity even at a low acidity.

The above membranes were immersed in water at about 20°C, 60°C, and 70°C for 1 hour. The poly(4-styrenephosphonic acid) was eluted from the electrolyte membrane of Comparative Example 6 in liquid water and finally dissolved completely to form a homogenous solution (transparent).

### Example 29

In Example 29, a composite polymer membrane (proton-conducting electrolyte membrane) composed of the poly(4-(4-vinylphenyl)butylphosphonic acid) obtained in Example 28 and polyethyleneimine, which is a basic polymer, was prepared.

0.049 g of poly(4-(4-vinylphenyl)butylphosphonic acid) was dissolved in 1.5 g of a mixed solvent mainly containing 1-propanol and water. Separately from this, 0.0006 g of polyethyleneimine (molecular weight: 10,000, produced by Junsei Chemical Co., Ltd.) was dissolved in 0.15 g of a mixed solvent mainly containing 1-propanol and water.

The solution containing poly(4-(4-vinylphenyl)butylphosphonic acid) was added to the solution containing polyethyleneimine and mixed. The mixture was transferred to a polypropylene container. The mixture was allowed to stand at 70°C for about 6 hours to evaporate the solvent, thus preparing the proton-conducting electrolyte membrane of Example 29.

The proton conductivity of this membrane was measured in the same manner as in Example 28. The conductivity after standing at 95°C and 98% RH for about 3 hours was 9.4 × 10⁻³ S/cm, and the conductivity after standing at 80°C and 80% RH for about 3 hours was 3.8 × 10⁻³ S/cm (Table 3) .

When the above membranes before the conductivity measurement were immersed in water at about 20°C for 1 hour, the water remained transparent and no dissolution of the membrane was observed. Even when the membrane was immersed in water at 70°C for 1 hour, the water remained transparent and no dissolution of the membrane was observed.

The composite polymer membrane after immersion in the water was removed from the water and the conductivity of the membrane was measured. The conductivity of this membrane was almost the same as that of the corresponding membrane not immersed in water (the conductivity after standing at 95°C and 98% RH for about 3 hours was 9.6 × 10⁻³ S/cm, and the conductivity after standing at 80°C and 80% RH for about 3 hours was 3.6 × 10⁻³ S/cm). This result suggests that the polymer in the membrane was hardly eluted into the liquid water (Table 3).

This is probably because the membrane of Comparative Example 6, which is an acidic homopolymer, was easily soluble in liquid water, whereas in the composite polymer membrane of Example 29, formation of an acid-base complex at many points between multiple acidic groups (phosphonic acid groups) in poly(4-(4-vinylphenyl)butylphosphonic acid) and basic groups (amino groups) in polyethyleneimine made it difficult for the polymer in the membrane to be eluted or dissolved into the liquid water.

### Comparative Example 7

In Comparative Example 7, a proton-conducting electrolyte membrane composed of polybenzimidazole (referred to below as "PBI") and phosphoric acid was prepared.

0.501 g of commercially available PBI (Hozole C) and 10.0 g of dimethylacetamide were mixed and stirred at 130°C for 4 hours. The resulting solution was filtered to remove insoluble matter to obtain a PBI solution. The obtained solution was transferred to a polytetrafluoroethylene container and cast at 60°C for 3 days to obtain a PBI membrane.

0.0467 g of a solution of phosphoric acid (85%) was added to 0.358 g of methanol, and 0.0099 g of the above PBI membrane was immersed therein and cast at 50°C for 1 day, and methanol was evaporated. The membrane was then vacuum dried at 60°C for 2 days. The weight of the obtained membrane was 0.0367 g. The phosphoric acid content of the membrane was about 73 wt%.

The proton conductivity of the membrane after standing at 80°C and 80% RH for about 3 hours was measured in the same manner as in Example 28 and found to be 2.4 × 10⁻¹ S/cm.

The membrane before conductivity measurement was immersed in water at 70°C for 1 hour and then removed from the water and the conductivity was measured. As compared to the membrane before immersion in water, the conductivity was reduced to 1/520 (the conductivity after standing at 80°C and 80% RH for about 3 hours was 4.6 × 10⁻⁴ S/cm). This result suggests that the phosphoric acid was eluted into the liquid water.

The results suggest that in the membrane of Comparative Example 7, phosphoric acid could form an acid-base complex with the basic imidazole group of the polybenzimidazole only at one point and that the complex was thus easily untangled and the phosphoric acid was eluted and dissolved into the liquid water in which the membrane was immersed.

### Comparative Example 8

In Comparative Example 8, a proton-conducting electrolyte membrane composed of a polystyrene-b-poly(4-vinylpyridine)-b-polystyrene tri-block copolymer (also referred to below as "S-P-S") and sulfuric acid was prepared.

Literature (RSC Adv. 2021, 11(31), 19012-19020) describes synthesizing S-P-S by two-step RAFT polymerization. With reference to this, S-P-S with a polystyrene volume fraction of 0.20 and a total molecular weight of 170000 was synthesized. In the above literature, a S-P-S membrane containing 10 to 80 wt% of sulfuric acid was prepared using methanol. With reference to this, an S-P-S membrane containing 70 wt% of sulfuric acid was prepared.

The proton conductivity of the above membrane was measured in the same manner as in Example 28. The conductivity after standing at 80°C and 80% RH for about 3 hours was 9.1 × 10⁻¹ S/cm.

The membrane before conductivity measurement was immersed in water at 70°C for 1 hour and then removed from the water. The conductivity was measured. As compared to the membrane before immersion in water, the conductivity was reduced to 1/13 (the conductivity after standing at 80°C and 80% RH for about 3 hours was 7.0 × 10⁻² S/cm). This result suggests that the phosphoric acid was eluted into liquid water.

The results suggest the following. In the membrane of Comparative Example 8, phosphoric acid could form an acid-base complex with the basic group (pyridyl group) in the poly(4-vinylpyridine) of S-P-S only at one point; therefore, the complex was easily untangled, and the phosphoric acid was eluted and dissolved in liquid water in which the membrane was immersed.

### Example 30

A composite membrane (proton-conducting electrolyte membrane) composed of the poly(4-(4-vinylphenyl)butylphosphonic acid obtained in Example 28 and polyarylamine, which is a basic polymer, was prepared.

### Example 31

In Example 31, except that in the first step of Example 28, 1,6-dibromohexane was used in place of 1,4-dibromobutane, similar procedures were performed as in Example 28 to prepare a phosphonic acid polymer having an alkyl spacer (poly(6-(4-vinylphenyl)hexylphosphonic acid) (also known as poly(4-(6-phosphonohexyl) styrene)).

### Example 32

In Example 32, using diethyl 4-(4-vinylphenyl)butylphosphonate, which is the phosphonic acid ester monomer with an alkyl spacer synthesized in Example 28, poly(4-tert-butylstyrene)-b-poly(diethyl 4-(4-vinylphenyl)butylphosphonate) (also referred to below as "B-EsbP di-block copolymer") was synthesized as a block copolymer according to Scheme 3 below. Further, the alkyl-protecting group of the poly(diethyl (4-(4-vinylphenyl)butylphosphonate) block was removed for deprotection to synthesize poly(4-tert-butylstyrene)-b-poly(4-(4-vinylphenyl)butylphosphonic acid) (also referred to below as "B-sbPA di-block copolymer"). Note that poly(4-tert-butylstyrene) has a glass transition temperature (Tg, DSC measurement) of about 150°C.

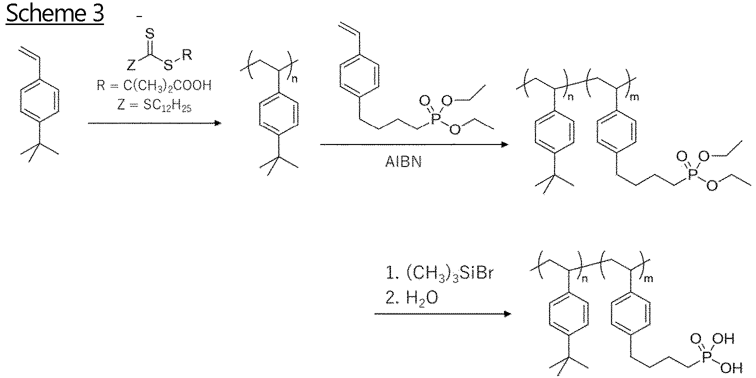

An unpurified 4-tert-butylstyrene monomer was passed through a column packed with basic alumina, and the resulting 4-tert-butylstyrene monomer was further purified by using an alkyl metal compound. 8.84 g (0.0552 mol) of the purified 4-tert-butylstyrene monomer, 269 mg (0.738 mmol) of an RAFT agent, 269 mg (0.738 mmol) of azobisisobutyronitrile (AIBN), and 8.70 g (0.0648 mol) diethylbenzene (isomer mixture) were individually weighed out, and mixed in a round-bottom flask with a stopcock to prepare a solution. The solution was bubbled with nitrogen gas for 30 minutes and polymerization was allowed to proceed with stirring at 500 rpm at atmospheric pressure at 130°C using an oil bath. After 2.5 hours, the flask was immersed in liquid nitrogen to completely stop the polymerization reaction.

As the RAFT agent, 2-(dodecylthiocarbonothioylthio)-2-methylpropanoic acid was used.

About 20 mL of THF was added to the above reaction solution to prepare a roughly 8 mass% polymer solution. This polymer solution was added dropwise to about 300 mL of methanol to precipitate a polymer in the form of a powder (crude poly(4-tert-butylstyrene). The resulting polymer was separated by suction filtration and fully dried by vacuum drying, and then dissolved again in THF. The solution was added dropwise in methanol to precipitate a polymer. The operation of precipitating a polymer was performed 3 times in total, and unreacted monomers and low-molecular-weight oligomers were removed to thereby obtain a purified poly(4-tert-butylstyrene). This purified poly(4-tert-butylstyrene) is also referred to below as "B."

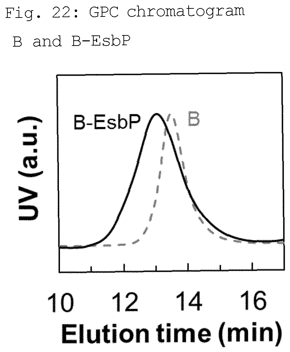

B was dissolved in THF to prepare a roughly 0.1 mass% solution, and GPC measurement was performed in the same manner as in Example 28. Fig. 22 show a GPC chromatogram of B as a dashed line.

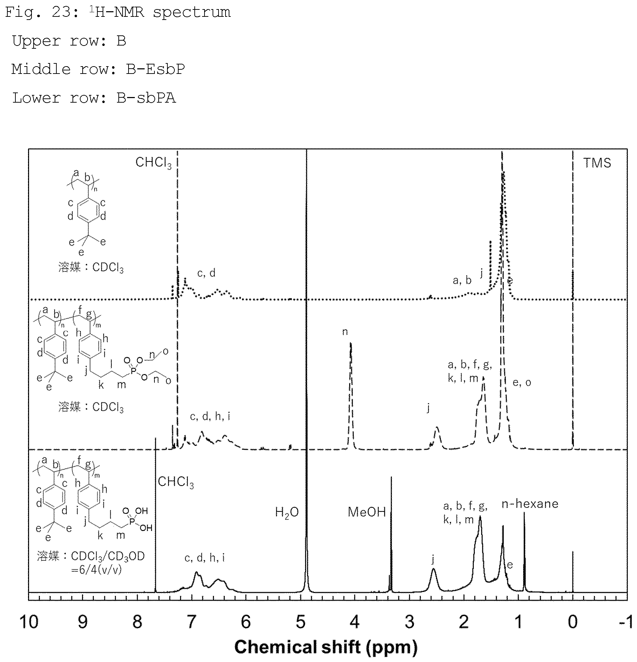

¹H-NMR measurement of B was performed using deuterated chloroform. Fig. 23 shows a ¹H-NMR spectrum of B as a dotted line. The average degree of polymerization of B was estimated by ¹H-NMR measurement. The average degree of polymerization was 255 and the average molecular weight was about 41000.

The B had an RAFT agent residue introduced to one end of the molecular chain. Thus, using B as a macro RAFT agent (called "macro RAFT agent" because it is a large-molecular-weight RAFT agent), polymerization with a diethyl 4-(4-vinylphenyl)butylphosphonate monomer was performed.

0.303 g (0.00102 mol) of the diethyl 4-(4-vinylphenyl)butylphosphonate monomer, 0.0200 g (48.8 pmol) of the macro RAFT agent, 0.1 mg (0.0006 mmol) of AIBN, and 0.146 g of diethylbenzene were individually weighed out and mixed in a round-bottom flask with a stopcock to prepare a solution. The solution was bubbled with nitrogen gas for 10 minutes and polymerization was allowed to proceed with stirring at 500 rpm at atmospheric pressure at 85°C using an oil bath. After 1 hour, the flask was immersed in liquid nitrogen to completely stop the polymerization reaction.

About 0.5 mL of THF was added to the above reaction solution to prepare a roughly 8 mass% polymer solution. This polymer solution was added dropwise to about 50 mL of n-hexane to precipitate a crude B-EsbP di-block copolymer. The resulting polymer was separated by suction filtration and fully dried by vacuum drying, and then dissolved again in THF. The solution was added dropwise to hexane to precipitate a polymer. The operation of precipitating a polymer was performed 2 times in total to remove unreacted monomers, low-molecular-weight oligomers, etc., thus obtaining a purified B-EsbP di-block copolymer.

B-EsbP was dissolved in deuterated chloroform to prepare a 2 mass% solution. The average degree of polymerization was determined by ¹H-NMR measurement. Fig. 23 shows a ¹H-NMR spectrum of B-EsbP as a dashed line. The average degree of polymerization of component B chains was 255 and the average degree of polymerization of component EsbP chains was 456, and the total number average molecular weight was about 180000.

B-EsbP was dissolved in THF to prepare a roughly 0.1 mass% solution, and GPC measurement was performed in the same manner as in Example 28. Fig. 22 shows a GPC chromatogram of B-EsbP as a solid line. Since the peak of B-EsbP shifted towards the lower elution time side, a block copolymer was confirmed to have been synthesized.

A deprotection reaction of B-EsbP was performed in the same manner as in the third step of Example 28 to obtain a B-sbPA di-block copolymer.

B-sbPA was dissolved in deuterated chloroform/deuterated methanol = 6/4 (volume ratio) to prepare a roughly 2 mass% solution, and ¹H-NMR was measured. Fig. 23 shows a ¹H-NMR spectrum of B-sbPA as a solid line. Since a peak around 4.1 ppm derived from the proton of the methylene group adjacent to the oxygen atom of the phosphonic acid di-ester disappeared, the deprotection was confirmed to have been almost complete.

The sharp peaks at 3.3 ppm and 7.7 ppm are peaks derived from methanol and chloroform respectively. The peak at 4.9 ppm is a peak derived from the residual water in the polymer. The peaks at 0.9 and 1.3 ppm are considered to be peaks derived from n-hexane.

### Example 33

In Example 33, except that a diethyl 4-styrene phosphonate monomer was used in place of the diethyl 4-(4-vinylphenyl)butylphosphonate monomer, the same procedures were performed as in Example 32 to synthesize poly(4-tert-butylstyrene)-b-poly(diethyl 4-styrenephosphonate) (also referred to below as "B-EsP di-block copolymer"). The alkyl-protecting group of the poly(diethyl 4-styrenephosphonate) block was removed for deprotection to synthesize poly(4-tert-butylstyrene)-b-poly(4-styrenephosphonic acid) (also referred to below as "B-sPA-1 di-block copolymer"). Further, a composite polymer membrane (proton-conducting electrolyte membrane) composed of the obtained B-sPA-1 di-block copolymer and polyethyleneimine, which is a basic polymer, (also referred to below as "EI") was prepared.

The average degree of polymerization of B-EsP was determined by the ¹H-NMR method. The average degree of polymerization of block B component chains was 255. The average degree of polymerization of block sPA component chains was 1260. The total number average molecular weight was about 343000. GPC measurement was performed in the same manner as in Example 32. The Mw/Mn was 2.3. The deprotection rate of B-sPA-1 achieved by removal of the alkyl-protecting group was determined by the ¹H-NMR method and found to be about 99% or 99% or more.

0.100 g of B-sPA-1 was dispersed in 4.2 g of a solvent mainly containing a mixed solvent of 1-propanol and water. Separately from this, 0.0021 g of EI was dissolved in 0.71 g of a mixed solvent mainly containing 1-propanol and water. The dispersion containing B-sPA and the solution containing polyethyleneimine were mixed and transferred to a polypropylene container. The solution was allowed to stand at 60°C for about 12 hours to evaporate the solvent, thus preparing the proton-conducting electrolyte membrane of Example 33. The molar ratio of acidic groups to basic groups was 90/10.

The proton conductivity of the above membrane was measured in the same manner as in Example 28. The conductivity after standing at 95°C and 98% RH for about 3 hours was 2.3 × 10⁻² S/cm; the conductivity after standing at 95°C and 80% RH for about 3 hours was 4.6 × 10⁻³ S/cm; and the conductivity after standing at 80°C and 80% RH for about 3 hours was 2.3 × 10⁻³ S/cm.

Table 4 also summarizes the measurement results of the proton conductivity of Example 33.

The membrane before conductivity measurement was immersed in water at about 60°C for 3 hours. The composite polymer membrane was removed from the water and the conductivity after immersion in water was measured. The conductivity after standing at 95°C and 98% RH for about 3 hours was 2.2 × 10⁻² S/cm; the conductivity after standing at 95°C and 80% RH was 4.6 × 10⁻³ S/cm; and the conductivity after standing at 80°C and 80% RH for about 3 hours was 2.4 × 10⁻³ S/cm. The difference in conductivity from the corresponding membranes not immersed in water was -4.5%, 0%, and +4.3%. Since the conductivity was almost unchanged, the polymer in the membrane is considered to have hardly eluted into liquid water.

### Comparative Example 9

In Comparative Example 9, the membrane of B-sPA-1 synthesized in Example 33 was prepared, and the proton conductivity of the membrane was measured. The conductivity was measured under humidified conditions in the same manner as in Example 33. The conductivity at a temperature of 95°C and a relative humidity of 98% RH was 8.0 × 10⁻³ S/cm. The conductivity at a temperature of 95°C and a relative humidity of 80% RH was 8.9 × 10⁻⁴ S/cm. The conductivity at a temperature of 80°C and a relative humidity of 80% RH was 6.6 × 10⁻⁴ S/cm. The composite polymer membrane of Example 33 showed higher conductivity in spite of having fewer free acidic groups. This is probably because the formation of an acid-base complex in the composite polymer membrane promoted the detachment of protons from free acidic groups, thus increasing the conductivity, and this conductivity-increasing effect was greater than a conductivity-lowering effect provided by a decrease in the number of free acidic groups due to the acid-base complex formation.

When the membrane of Comparative Example 9 was immersed in water at about 60°C for 3 hours, the membrane was dissolved in liquid water.

This is probably because the membrane of Comparative Example 9, which is an acidic homopolymer, was easily soluble in liquid water, whereas in the composite polymer membrane of Example 33, formation of an acid-base complex at multiple points between multiple acidic groups (phosphonic acid groups) in the block sSA and multiple basic groups (amino groups) in the EI made it difficult for the polymer in the membrane to be eluted or dissolved into liquid water.

### Example 34

In Example 34, a composite polymer membrane (proton-conducting electrolyte membrane) composed of sPA and EI synthesized in Comparative Example 6 was prepared.

The composite polymer membrane composed of sPA and EI was prepared in the same manner as in Example 33. The molar ratio of acidic groups to basic groups was 90/10.

The conductivity was measured under humidified conditions in the same manner as in Example 28. The conductivity at a temperature of 95°C and a relative humidity of 98% RH was 8.1 × 10⁻² S/cm. As compared to the acidic homopolymer membrane in Comparative Example 6, the composite membrane of Example 34 exhibited higher conductivity in spite of having fewer free acidic groups. This is probably because in composite polymer membrane, the formation of acid-base complex promoted the detachment of protons from free acidic groups, thus increasing the conductivity, and this conductivity-increasing effect was greater than the conductivity-lowering effect provided by a decrease in the number of free acidic groups due to the acid-base complex formation.

The membrane of Example 34 was immersed in water at about 60°C for 3 hours and then removed from the water, and the conductivity was measured. The conductivity at a temperature of 95°C and a relative humidity of 98% RH was 8.3 × 10⁻² S/cm. The difference in conductivity of this membrane from the corresponding membrane not immersed in water was +2.9%. Since the conductivity was almost unchanged, the polymer in the membrane is considered to have been hardly eluted into liquid water (Table 4) .

This is probably because the membrane of Comparative Example 6, which is an acidic homopolymer, was easily soluble in liquid water, whereas in the composite polymer membrane of Example 34, the formation of an acid-base complex at multiple points between multiple acidic groups (phosphonic acid groups) in sPA and multiple basic groups (amino groups) in EI made it difficult for the polymer in the membrane to be eluted or dissolved into liquid water.

### Example 35

In Example 35, a composite polymer membrane (proton-conducting electrolyte membrane) composed of the sPA synthesized in Comparative Example 6 and polyarylamine (molecular weight 65k, referred to below as "aAm") was prepared.

A composite polymer membrane composed of sPA and aAm was prepared in the same manner as in Example 33. The molar ratio of acidic groups to basic groups was 90/10 here.

The conductivity was measured under humidified conditions in the same manner as in Example 28. The conductivity after standing at a temperature of 120°C and a relative humidity of 53% RH for 0.5 hours was 6.3 × 10⁻³ S/cm (Table 4). The conductivity after standing at a temperature of 95°C and a relative humidity of 98% RH was 1.4 × 10⁻¹ S/cm. As compared with the acidic homopolymer membrane of Comparative Example 6, the composite polymer membrane of Example 35 exhibited higher conductivity in spite of having fewer free acidic groups. This is probably because in composite polymer membrane, the formation of an acid-base complex promoted the detachment of protons from free acidic groups, thus increasing the conductivity, and this conductivity-increasing effect was greater than the conductivity-lowering effect provided by a decrease in the number of free acidic groups due to the acid-base complex formation.

The membrane of Example 35 was immersed in water at about 60°C for 3 hours. After the membrane was removed from the water, the conductivity was measured. The conductivity after standing at a temperature of 95°C and a relative humidity of 98% RH was 1.3 × 10⁻¹ S/cm. The difference in conductivity of this membrane from the corresponding membrane not immersed in water was -1.9%. Since the conductivity was almost unchanged, the polymer in the membrane is considered to have hardly eluted into liquid water.

This is probably because the membrane of Comparative Example 6, which is an acidic homopolymer, was easily soluble in liquid water, whereas in the composite polymer membrane of Example 35, the formation of an acid-base complex at multiple points between multiple acidic groups (phosphonic acid groups) in sPA and multiple basic groups (amino groups) in aAm made it difficult for the polymer in the membrane to be eluted or dissolved into liquid water.

### Example 36

In Example 36, a composite polymer membrane (proton-conducting electrolyte membrane) composed of sPA synthesized in Comparative Example 6 and poly(4-tert-butylstyrene)-b-poly(2-vinylpyridine) (degree of polymerization 291: 1950, total molecular weight: 251k, also referred to below as "B-2VP di-block copolymer") was prepared.

The B-2VP di-block copolymer was synthesized in the same manner as in Example 32 except that a 2-vinylpyridine monomer was used in place of the diethyl styrenephosphonate monomer.

A composite polymer membrane composed of sPA and B-2VP was prepared in the same manner as in Example 33. The molar ratio of acidic groups to basic groups was 90/10.

The conductivity was measured under humidified conditions in the same manner as in Example 28. The conductivity after standing at a temperature of 95°C and a relative humidity of 80% RH was 3.5 × 10⁻³ S/cm. The conductivity after standing at a temperature of 80°C and a relative humidity of 80% RH was 2.3 × 10⁻³ S/cm (Table 4) .

The membrane of Example 36 was immersed in water at 60°C for 3 hours. After the membrane was removed from the water, the conductivity was measured. The conductivity at a temperature of 95°C and a relative humidity of 80% RH was 3.0 × 10⁻³ S/cm. The conductivity at a temperature of 80°C and a relative humidity of 80% RH was 2.1 × 10⁻³ S/cm. The difference in conductivity of these membranes from the corresponding membranes not immersed in water was -14% and -11%. Since the conductivity did not change so much, the polymer in the membrane is considered to have been hardly eluted into liquid water.

This is probably because the membrane of Comparative Example 6, which is an acidic homopolymer, was easily soluble in liquid water, whereas in the composite polymer membrane of Example 36, the formation of an acid-base complex at multiple points between multiple acidic groups (phosphonic acid groups) in the sPA and multiple basic groups (pyridyl groups) in the block 2VP made it difficult for the polymer in the membrane to be eluted or dissolved into liquid water.

### Example 37

In Example 37, a composite polymer membrane composed of sPA and B-2VP was prepared in the same manner as in Example 36 except the molar ratio of acidic groups to basic groups was changed to 85/15.

The conductivity was measured under humidified conditions in the same manner as in Example 28. The conductivity at a temperature of 90°C and a relative humidity of 90% RH was 5.2 × 10⁻³ S/cm (Table 4) .

The membrane of Example 37 was immersed in water at 60°C for 3 hours. After the membrane was removed from the water, the conductivity was measured. The conductivity at a temperature of 90°C and a relative humidity of 90% RH was 5.1 × 10⁻² S/cm. The difference in conductivity of this membrane from the corresponding membrane not immersed in water was -1.9%. Since the conductivity was almost unchanged, the polymer in the membrane is considered to have been hardly eluted into liquid water.

This is probably because the membrane of Comparative Example 6, which is an acidic homopolymer, was easily soluble in liquid water, whereas in the composite polymer membrane of Example 37, the formation of an acid-base complex at multiple points between multiple acidic groups (phosphonic acid groups) in the sPA and multiple basic groups (pyridyl groups) in the block 2VP made it difficult for the polymer in the membrane to be eluted or dissolved into liquid water.

### Example 38

In Example 38, a composite polymer membrane (proton-conducting electrolyte membrane) composed of poly(4-tert-butylstyrene)-b-poly(4-styrene sulfonic acid) (degree of polymerization 255: 1780, total molecular weight: 361k; also referred to below as "B-sSA-5") and aAm was prepared. B-sSA was a polymer relatively easily soluble in water.

B-sSA-5 was synthesized in the same manner as in the synthesis of B-sbPA in Example 32, except that a butyl styrenephosphonate monomer was used in place of the diethyl styrenephosphonate monomer and the deprotection reaction was performed using sodium hydroxide in place of bromotrimethylsilane. The deprotection rate achieved by removal of the alkyl-protecting group was determined by the ¹H-NMR method and found to be about 99%, or 99% or more.

A composite polymer membrane composed of B-sSA-5 and aAm was prepared in the same manner as in the third step of Example 28. The molar ratio of acidic groups to basic groups was 80/20.

The conductivity was measured under humidified conditions in the same manner as in Example 28. The conductivity after standing at a temperature of 120°C and a relative humidity of 53% RH for 1 hour was 2.0 × 10⁻² S/cm, and the conductivity after standing at a temperature of 90°C and a relative humidity of 90% RH was 5.5 × 10⁻² S/cm (Table 4).

The membrane of Example 38 that was not used for conductivity measurement was immersed in water at about 60°C for 3 hours. After the membrane was removed from the water, the conductivity was measured at a temperature of 90°C and a relative humidity of 90% RH. The conductivity was 5.2 × 10⁻² S/cm. The difference in conductivity of this membrane from the corresponding membrane not immersed in water was -5.5%. Since the conductivity was almost unchanged, the polymer in the membrane is considered to have been hardly eluted into liquid water.

This is probably because B-sSA-5, which is an acidic homopolymer, is easily soluble in liquid water, whereas in the composite polymer membrane of Example 38, the formation of an acid-base complex at multiple points between multiple acidic groups (sulfonic acid groups) in the block sSA and multiple basic groups (amino groups) in the aAm made it difficult for the polymer in the membrane to be eluted or dissolved into liquid water.

### Example 39

In Example 39, a composite polymer membrane (proton-conducting electrolyte membrane) composed of B-sSA-5 synthesized in Example 37 and B-2VP was prepared.

A composite polymer membrane composed of B-sSA-5 and B-2VP was prepared in the same manner as in Example 33. The molar ratio of acidic groups to basic groups was 70/30.

The conductivity was measured under humidified conditions in the same manner as in Example 28. The conductivity at a temperature of 90°C and a relative humidity of 90% RH was 1.3 × 10⁻¹ S/cm (Table 4) .

The membrane of Example 39 was immersed in water at about 60°C for 3 hours. After the membrane was removed from water, the conductivity was measured. The conductivity at a temperature of 90°C and a relative humidity of 90% RH was 1.4 × 10⁻¹ S/cm. The difference in conductivity of this membrane from the corresponding membrane not immersed in water was +7.7%. Since the conductivity was almost unchanged, the polymer in the membrane is considered to have been hardly dissolved into the liquid water.

The results suggest that B-sSA-5, which is an acidic polymer, is easily soluble in liquid water, whereas in the composite polymer membrane of Example 39, the formation of an acid-base complex at multiple points between multiple acidic groups (sulfonic acid groups) in the block sSA and multiple basic groups (pyridyl groups) in the block 2VP made it difficult for the polymer in the membrane to be eluted or dissolved into liquid water.

### Example 40

In Example 40, poly(diethyl vinylphosphonate) (hereinafter also referred to as "EvP") was synthesized and the alkyl-protecting group of the poly (diethyl vinylphosphonate) was removed for deprotection to synthesize polyvinylsulfonic acid (also referred to below as "vPA"). Further, a composite polymer membrane (proton-conducting electrolyte membrane) composed of the obtained vPA and EI was prepared. vPA was a polymer easily soluble in water.

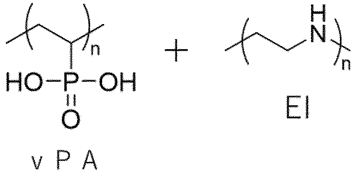

With reference to literature (Macromolecules, 2009, 42, 5146), EvP was synthesized by anionic polymerization. The Mw/Mn and Mw of EvP were determined by the molecular weight calibration method using standard polystyrene and were found to be 3.1 and 37k, respectively. The deprotection reaction of EvP was performed in the same manner as in the third step of Example 28. A composite polymer membrane composed of vPA and B-2VP was prepared in the same manner as in Example 33. The molar ratio of acidic groups to basic groups was 70/30.

The conductivity was measured under humidified conditions in the same manner as in Example 28. The conductivity after standing at a temperature of 90°C and a relative humidity of 90% RH was 5.1 × 10⁻³ S/cm (Table 4).

### Example 41

In Example 41, commercially available poly(4-vinylpyridine) (produced by Aldrich, product number: 472352, average degree of polymerization: 1522, weight average molecular weight: 160k; also referred to below as "4VP") was reacted with bromoethane to synthesize ionized 4VP (also referred to below as "i-4VP"). A composite polymer membrane (proton-conducting electrolyte membrane) composed of the obtained i-4VP and the (Brs-g-vPA)-B synthesized in Example 14 was prepared. This was used as the membrane of Example 41.

I-4VP was synthesized according to Scheme 4 below. Specific synthetic procedures are shown below. 0.504 g (4.8 mmol in terms of monomer unit) of 4VP was dissolved in 5.09 g of dimethyl sulfoxide (DMSO), and 2.59 g (24 mmol) of bromoethane was added. The resulting mixture was stirred at 40°C and 500 rpm for 48 hours to allow a reaction to proceed. About 10 g of DMSO was added, and the resulting solution was added dropwise to about 500 mL of a poor solvent composed of a mixed solvent of acetone and n-hexane (volume ratio: 1:1) to precipitate and purify i-4VP. The purified product was dried in vacuum at 40°C for 1 day to remove the solvent, unreacted bromoethane, and other substances.

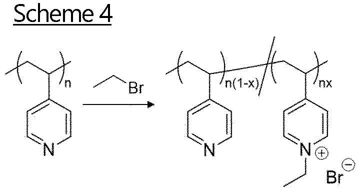

i-4VP was dissolved in a deuterated DMSOA solution to prepare a roughly 1 mass% solution, and ¹H-NMR was measured. The ionization rate of i-4VP was estimated to be 93 mol%.

A composite polymer membrane composed of (Brs-g-vPA)-B and i-4VP was prepared in the same manner as in the third step of Example 28. The molar ratio of acidic groups/(basic groups and cationic groups) was 90/10. The weight ratio of (Brs-g-vPA)-B to i-4VP was 88/12.

The conductivity was measured under humidified conditions in the same manner as in Example 28. The conductivity of the membrane, for example, at a temperature of 80°C and a relative humidity of 80% RH was 6.4 × 10⁻³ S/cm (Table 5).

The membrane of Example 41 that was not used for conductivity measurement was immersed in water at about 60°C for 3 hours. After the membrane was removed from the water, the conductivity was measured at a temperature of 80°C and a relative humidity of 80% RH and was found to be 5.1 × 10⁻³ S/cm. The difference in conductivity from the corresponding membrane not immersed in water was -20%. Since the change in conductivity was relatively small, most of the polymer in the membrane is considered to have not been eluted into liquid water.

This is probably because (Brs-g-vPA)-B, which is an acidic polymer, was easily soluble in liquid water, whereas in the composite polymer membrane of Example 41, ionic interactions at multiple points between multiple anionic groups (phosphonate groups with protons dissociated from phosphonic acid groups) derived from acidic groups in the branched-chain vPA polymer and multiple cationic groups (pyridinium groups) in i-4VP made it difficult for the polymer in the membrane to be eluted or dissolved into liquid water.

### Example 42

In Example 42, B-sSA-6 (degree of polymerization of block B: 255, degree of polymerization of block sSA: 3495, average molecular weight: 680000) synthesized in the same manner as in Example 38 was used as an acid polymer. In place of i-4VP, a B-2VP di-block copolymer (degree of polymerization of block B: 109, degree of polymerization of block 2VP: 345, average molecular weight: 54000) synthesized in the same manner as the synthesis of B-2VP in Example 36 was ionized in the same manner as in Example 41 to obtain a B-ionized 2VP di-block copolymer (ionization of block 2VP: 15 mol%; also referred to below as "B-(i-2VP)"). The B-sSA-6 and the B-(i-2VP) were mixed in the same manner as in the third step of Example 28. The obtained membrane sample was further allowed to stand at 80°C and 80% RH for 1 hour to prepare a composite polymer membrane (a proton-conducting electrolyte membrane) of Example 42. The molar ratio of acidic groups/(basic groups and cationic groups) was 80/20. The weight ratio of B-sSA-2 to B-(i-2VP) was 82/18.

The conductivity was measured under humidified conditions in the same manner as in Example 1. The conductivity of the membrane, for example, at a temperature of 80°C and a relative humidity of 80% RH was 2.8 × 10⁻² S/cm (Table 5).

The membrane of Example 42 that was not used for conductivity measurement was immersed in water at about 60°C for 1 hour. After removal from the water, the conductivity was measured at a temperature of 80°C and a relative humidity of 80% RH. The conductivity was 2.6 × 10⁻² S/cm. The difference in conductivity of this membrane from the corresponding membrane not immersed in water by -7%. Since the conductivity was almost unchanged, the polymer in the membrane is considered to have been hardly eluted into liquid water.

The results suggest that B-sSA-6, which is an acidic polymer, was easily soluble in liquid water, whereas in the composite polymer membrane of Example 42, the formation of an acid-base complex at multiple points between multiple acidic groups (sulfonic acid groups) in the block sSA and multiple basic groups (pyridyl groups) in the block 2VP, and ionic interactions at multiple points between multiple anionic groups (sulfonate groups with protons dissociated from sulfonic acid groups) derived from acidic groups in the block sSA and multiple cationic groups (pyridinium groups) in the B-(i-2VP) made it difficult for the polymer in the membrane to be eluted or dissolved into liquid water.

**Table 3: Conductivity of proton-conducting membrane)**

| | Type of proton-conducting membrane | Immersion into water | Conductivity (S/cm) | | | |
|---|---|---|---|---|---|---|
| | | | 80°C | | | 95°C |
| | | | 30% RH | 50% RH | 80% RH | 98% RH |
| Example 28 | Poly(4-(4-vinylphenyl)butylphosphonic acid) membrane | No | 1.0×10⁻⁴ | 3.5×10⁻⁴ | 2.3×10⁻³ | - |
| Comp. Ex. 6 | Poly(4-styrenephosphonic acid) membrane | No | 4.0×10⁻⁵ | 1.2×10⁻⁴ | 1.5×10⁻³ | - |
| Example 29 | Composite polymer membrane com posed of poly(4-(4-vinylphenyl)butylphosphonic acid) and polyethyleneimine | No | - | - | 3.8×10⁻³ | 9.4×10⁻³ |
| | | Yes | - | - | 3.6×10⁻³ | 9.6×10⁻³ |
| Comp. Ex. 7 | Membrane composed of PBI and phosphoric acid | No | - | - | 2.4×10⁻¹ | - |
| | | Yes | - | - | 4.6×10⁻⁴ | - |
| Comp. Ex. 8 | Membrane composed of S-P-S and sulfuric acid | No | - | - | 9.1×10⁻¹ | - |
| | | Yes | - | - | 7.0×10⁻² | - |

**Table 4: Conductivity of proton-conducting membrane**

| | Proton-conducting membrane | | | | Immersion into water | Conductivity (S/cm) | | | | |
|---|---|---|---|---|---|---|---|---|---|---|
| | Acidic polymer | Basic polymer | Acidic groups/basic groups (molar ratio) | Acidic polymer/basic polymer (weight ratio) | | 120°C | 95°C | | 90°C | 80°C |
| | | | | | | 53% RH | 98% RH | 80% RH | 90% RH | 80% RH |
| Comp. Ex. 6 | sPA | - | - | - | No | - | 7.5×10⁻³ | 3.2×10⁻³ | - | 1.5×10⁻³ |
| | | | | | Yes | - | - | - | - | - |
| Example 33 | B-sPA-1 | El | 90/10 | 98/2 | No | - | 2.3×10⁻² | 4.6×10⁻³ | - | 2.4×10⁻³ |
| | | | | | Yes | - | 2.2×10⁻² | 4.6×10⁻³ | - | 2.3×10⁻³ |
| Comp. Ex. 9 | B-sPA-1 | - | - | - | No | - | 8.0×10⁻³ | 8.9×10⁻⁴ | - | 6.6×10⁻⁴ |
| | | | | | Yes | - | - | - | - | - |
| Example 34 | sPA | El | 90/10 | 97/3 | No | - | 8.1×10⁻² | - | - | - |
| | | | | | Yes | - | 8.3×10⁻² | - | - | - |
| Example 35 | sPA | aAm | 90/10 | 97/3 | No | 6.3×10⁻³ | 1.4×10⁻¹ | | - | |
| | | | | | Yes | - | 1.3×10⁻¹ | | - | |
| Example 36 | sPA | B-2VP | 90/10 | 93/7 | No | - | - | 3.5×10⁻³ | - | 2.3×10⁻³ |
| | | | | | Yes | - | - | 3.0×10⁻³ | - | 2.1×10⁻³ |
| Example 37 | sPA | B-2VP | 85/15 | 89/11 | No | - | - | - | 5.2×10⁻³ | - |
| | | | | | Yes | - | - | - | 5.1×10⁻³ | - |
| Example 38 | B-sSA-5 | aAm | 80/20 | 94/6 | No | 2.0×10⁻² | - | - | 5.5×10⁻² | - |
| | | | | | Yes | - | - | - | 5.2×10⁻² | - |
| Example 39 | B-sSA-5 | B-2VP | 70/30 | 79/21 | No | - | - | - | 1.3×10⁻¹ | 8.6×10⁻² |
| | | | | | Yes | - | - | - | 1.4×10⁻¹ | 8.7×10⁻² |
| Example 40 | vPA | B-2VP | 70/30 | 66/34 | No | - | - | - | 5.1×10⁻³ | - |

**Table 5: Conductivity of proton-conducting membrane**

| | Proton-conducting membrane | | | | Immersion into water | Conductivity(S/cm) |
|---|---|---|---|---|---|---|
| | Acidic polymer | Cationic polymer | Acidic group/ (basic group and cationic group) (molar ratio) | Acidic polymer/polymer having a cationic group (weight ratio) | | 80°C |
| | | | | | | 80% RH |
| Example 41 | (Brs-g-vPA)-B | i-4VP | 90/10 | 88/12 | No | 6.4×10⁻³ |
| | | | | | Yes | 5.1×10⁻³ |
| Example 42 | B-sSA-6 | B-(i-2VP) | 80/20 | 82/18 | No | 2.8×10⁻² |
| | | | | | Yes | 2.6×10⁻² |

### Industrial Applicability

The composite polymer membrane (electrolyte membrane) of the present invention is a polymer-based composite polymer membrane (an anhydrous electrolyte membrane) comprising a monomer with phosphonic acid and/or a phosphonic acid ester via a spacer structure (preferably, an alkyl spacer), and a composite polymer membrane (an electrolyte membrane) comprising a polymer comprising an acidic functional group (excluding a polymer comprising a monomer having a phosphonic acid group via a spacer) and a polymer having a basic functional group. The composite polymer membrane of the present invention is a membrane from which elution of polyelectrolytes and low-molecular-weight electrolytes is inhibited and that exhibits a good conductivity of 1.0 × 10⁻³ S/cm or higher.

The composite polymer membrane (electrolyte membrane) of the present invention is particularly suitable for use as a proton-conducting electrolyte membrane in fuel cells.

## Claims

1. A polyelectrolyte membrane comprising
a polymer having an acidic functional group,
wherein
the polymer is
(i) a block copolymer having at least an a-b type unit in which a block a and a block b are covalently linked,
(ii) a chemically crosslinked polymer having an acidic functional group on a side chain, and/or
(iii) a polymer containing a monomer unit having a phosphonic acid group via a spacer structure and containing no highly hydrolyzable functional group between the main chain structure and the phosphonic acid group; and
the block a in (i) contains a hydrophobic polymer or water-repellent polymer, and
the block b in (i) contains a polymer having an acidic functional group on a side chain or the polymer in (iii), or
the side chain of the block b in (i) contains a graft chain containing a monomer unit having an acidic functional group.

2. The polyelectrolyte membrane according to claim 1, wherein the acidic functional group is composed of at least one member selected from the group consisting of a sulfonic acid group and a phosphonic acid group.

3. The polyelectrolyte membrane according to claim 1 or 2, further comprising an ionic low-molecular-weight organic salt.

4. The polyelectrolyte membrane according to any one of claims 1 to 3,
wherein
the polymer having an acidic functional group on a side chain, the polymer in (iii), or the graft chain that constitutes a side chain and that contains a monomer unit having an acidic functional group in the block b in (i),
the polymer in (ii), and
the polymer in (iii)
are each a hydrocarbon-based vinyl polymer and contain the acidic functional group in an amount of at least 0.70 in the monomer unit.

5. The polyelectrolyte membrane according to any one of claims 1 to 4,
wherein
the polymer having an acidic functional group on a side chain, the polymer in (iii), or the graft chain that constitutes a side chain and that contains a monomer unit having an acidic functional group in the block b in (i),
the polymer in (ii), and
the polymer in (iii)
are each a polymer obtained by polymerizing a monomer having the acidic functional group or the phosphonic acid group protected by a protecting group and then removing the protecting group, and
the polymer contains the acidic functional group in an amount of at least 0.70 in the monomer unit.

6. The polyelectrolyte membrane according to any one of claims 1 to 5,
wherein
the hydrophobic polymer or water-repellent polymer constituting the block a in (i) is a hydrophobic or water-repellent, hydrocarbon-based or fluorocarbonated, vinyl polymer, and has a glass transition temperature (Tg) of 100°C or higher.

7. The polyelectrolyte membrane according to any one of claims 1 to 6, comprising a hydrophobic polymer or water-repellent polymer in addition to the polymer containing the block copolymer having at least an a-b type unit in which a block a and a block b are covalently linked in (i).

8. The polyelectrolyte membrane according to any one of claims 1 to 7, wherein when the polyelectrolyte membrane comprises (i) the block copolymer having at least an a-b type unit in which a block a and a block b are covalently linked and/or (iii) the polymer containing a monomer unit having a phosphonic acid group via a spacer structure and containing no highly hydrolyzable functional group between the main chain structure and the phosphonic acid group, the polyelectrolyte membrane further comprises a proton donor.

9. The polyelectrolyte membrane according to claim 8, wherein the proton donor contains at least one member selected from the group consisting of sulfuric acid and phosphoric acid.

10. A method for producing a polyelectrolyte membrane, comprising
(A) the step of preparing a hydrophobic polymer to produce a block a,
(B) the step of polymerizing the block a with a monomer having an acidic functional group protected by a protecting group or a monomer having a phosphonic acid group protected by a protecting group via a spacer structure to form a block b, and producing a block copolymer having an a-b type unit in which the block a and the block b composed of a unit of the monomer by polymerization are covalently linked; and
(C) the step of removing the protecting group of the block b to produce a polymer containing the acidic functional group or the phosphonic acid group in an amount of at least 0.70 in the monomer unit constituting the block b and containing the acidic functional group or the phosphonic acid group on a side chain.

11. The method according to claim 10, further comprising
(D) the step of adding a hydrophobic polymer or water-repellent polymer, each having a molecular weight of 100,000 or more.

12. The method according to claim 10 or 11, further comprising (E) the step of adding a proton donor.

13. A composite polymer membrane comprising
(1) a polymer having an acidic functional group, and
(2) a polymer having a basic functional group, wherein (1) the polymer having an acidic functional group is
(i) a block copolymer having at least an a-b type unit in which a block a and a block b are covalently linked,
(ii) a chemically crosslinked polymer having an acidic functional group on a side chain, and/or
(iii) a polymer containing a monomer unit having a phosphonic acid group via a spacer structure and containing no highly hydrolyzable functional group between the main chain structure and the phosphonic acid group,
the block a in (i) contains a hydrophobic polymer or water-repellent polymer,
the block b in (i) contains a polymer having an acidic functional group on a side chain or the polymer in (iii), or
the side chain of the block b in (i) contains a graft chain containing a monomer unit having an acidic functional group, and
the composite polymer membrane produces a conductivity of 1.0 × 10⁻³ S/cm or higher.

14. The composite polymer membrane according to claim 13, wherein the acidic functional group is composed of at least one member selected from the group consisting of a sulfonic acid group and a phosphonic acid group.

15. The composite polymer membrane according to claim 13 or 14, wherein (1) the polymer having an acidic functional group is a polymer containing a monomer unit having an acidic functional group, the monomer unit being composed of at least one member selected from the group consisting of 4-styrenesulfonic acid, vinylsulfonic acid, 4-styrenephosphonic acid, and vinylphosphonic acid.

16. The composite polymer membrane according to any one of claims 13 to 15,
wherein
(2) the polymer having a basic functional group is
a polymer having five or more basic functional groups composed of at least one member selected from the group consisting of an amino group, an imino group, a pyridyl group, an imidazolyl group, a pyrazolyl group, a pyrrolyl group, and a triazolyl group, or
a block copolymer having at least a c-d type unit in which a block c and a block d are covalently linked,
the block c contains a hydrophobic polymer or a water-repellent polymer, and
the block d contains a polymer having five or more basic functional groups composed of at least one member selected from the group consisting of an amino group, an imino group, a pyridyl group, an imidazolyl group, a pyrazolyl group, a pyrrolyl group, and a triazolyl group.

17. The composite polymer membrane according to any one of claims 13 to 16,
wherein
(2) the polymer having a basic functional group is
a polymer containing five or more monomer units having a basic functional group, the monomer units being composed of at least one member selected from the group consisting of ethyleneimine, allylamine, vinylamine, vinylpyridine, 2-vinylpyridine, vinylimidazole, vinylpyrazole, and vinylpyrrole, or
a block copolymer having at least a c-d type unit in which a block c and a block d are covalently linked,
the block c contains a hydrophobic polymer or a water-repellent polymer, and
the block d contains a polymer having five or more monomer units, the monomer units being composed of at least one member selected from the group consisting of ethyleneimine, allylamine, vinylamine, vinylpyridine, 2-vinylpyridine, vinylimidazole, vinylpyrazole, vinylpyrrole, and vinyltriazole.

18. The composite polymer membrane according to any one of claims 13 to 17,
wherein
(2) the polymer having a basic functional group is a polymer having a cationic functional group based on the basic functional group, and
a portion of the basic functional group is quaternized by an organic halogen compound to produce a cation, thus forming a cationic functional group based on the basic functional group.

19. The composite polymer membrane according to any one of claims 13 to 18, wherein the cationic functional group based on the basic functional group accounts for at least 10 mol% of the basic functional group.

20. The composite polymer membrane according to claim 18 or 19, wherein the organic halogen compound has an alkyl halide moiety.

21. The composite polymer membrane according to any one of claims 18 to 20, comprising
a polymer having an anionic group based on an acidic functional group, and
the polymer having a cationic functional group based on the basic functional group,
the polymer having an anionic group based on an acidic functional group being obtained by forming a composite of (1) the polymer having an acidic functional group and the polymer having a cationic functional group based on a basic functional group to ionize (1) the polymer having an acidic functional group to release a proton from the acidic functional group, thereby forming an anionic functional group, and allowing a low-molecular-weight acid composed of a counter anion of the cationic functional group of the polymer having the cationic functional group originating from the basic functional group and the proton to exit from the membrane,
wherein
the composite polymer membrane produces a conductivity of 1.0 × 10⁻³ S/cm or higher.

22. The composite polymer membrane according to any one of claims 13 to 21, wherein when immersed in water at 60°C for 1 hour, the composite polymer membrane does not show a difference in conductivity by 25% or higher as compared with the membrane that is not immersed.

23. An ionomer for a polymer electrolyte fuel cell, comprising the polymer of any one of claims 1 to 9, or a composite polymer constituting the composite polymer membrane of any one of claims 13 to 22.

24. A monomer comprising a phosphonic acid group and/or a phosphonic acid ester via a spacer structure, the monomer comprising no highly hydrolyzable functional group between a portion that forms the main chain structure of a polymer after polymerization and the phosphonic acid group and/or the phosphonic acid ester that is part of a side chain of the polymer.

25. The monomer according to claim 24, wherein the spacer structure is an alkyl spacer.

26. The monomer according to claim 24 or 25, wherein the spacer structure is an alkyl spacer with the number of methylene group repetitions being 2 to 12.
